# EUROPEAN PATENT APPLICATION

(11) **EP 4 474 964 A1**
(43) Date of publication of application: **11.12.2024**
(21) Application number: 23769703.2
(22) Date of filing: 13.03.2023
(51) Int. Cl.: G06F 3/0484, G06F 9/451

(54) **INTERFACE DISPLAY METHOD AND RELATED DEVICE**

(30) Priority: 14.03.2022 CN 202210248494; 27.05.2022 CN 202210586578
(71) Applicant: Huawei Technologies Co., Ltd., Shenzhen, Guangdong 518129 (CN)
(72) Inventor: NI, Yintang, Shenzhen, Guangdong 518129 (CN)
(74) Representative: Pfenning, Meinig & Partner mbB
(86) International application number: PCT/CN2023/081017
(87) International publication number: WO 2023/174200

(57) **Abstract**

This application discloses an interface display method and a related apparatus. In the method, a first page of a first application is displayed, where content of the first page includes one or more components, and the one or more components include a first component; an input first operation is received, where the first operation includes at least one input operation; a second page of the first application or a third page of a second application is displayed in response to the first operation; an input second operation is received; a fourth page is displayed in response to the second operation, where at least one component label is displayed on the fourth page, and the at least one component label includes a first component label; and when a third operation performed on the first component label is received, in response to the third operation, the first page of the first application is opened, and the first component is displayed on the first page. In this way, related information of a specific component in an application can be quickly viewed, to effectively improve user experience.

## Description

This application claims priority to Chinese Patent Application No. 202210248494.X, filed with the China National Intellectual Property Administration on March 14, 2022 and entitled "METHOD FOR QUICKLY LOCATING COMPONENT AND ELECTRONIC DEVICE", which is incorporated herein by reference in its entirety. This application claims priority to Chinese Patent Application No. 202210586578.4, filed with the China National Intellectual Property Administration on May 27, 2022 and entitled "INTERFACE DISPLAY METHOD AND RELATED APPARATUS", which is incorporated herein by reference in its entirety.

### TECHNICAL FIELD

This application relates to the field of electronic technologies, and in particular, to an interface display method and a related apparatus.

### BACKGROUND

When exiting an application (for example, an application 1) after using the application, a user may switch the application to a background for running, and switch a display interface of a mobile phone to a home screen of an interface of another application. In an existing mainstream operating system (for example, Windows, Android, or iOS), application identifiers of applications (for example, the application 1) running in the background may be displayed on a recent tasks screen of the mobile phone. An application identifier of the application 1 may include an interface snapshot of an exit interface of the application 1 (namely, a user interface displayed by the application 1 when the user exits the application 1). When the application identifier of the application 1 on the recent tasks screen is tapped, the mobile phone may quickly switch to the exit interface of the application 1.

However, the exit interface of the application 1 is not necessarily a location that the user expects the application 1 to display. The user may want to view a specific component in the application 1. After entering the application 1, the user needs to perform a plurality of taps, to enter the specific component. For example, there is a vote component on a group chat page of the application 1, and the exit interface of the application 1 is a chat page with a contact A. The user may switch a page via a background task to enter the chat page with the contact A, and perform a plurality of operations to enter a display location of the vote component. Such an operation is complex, affecting user experience.

### SUMMARY

This application provides an interface display method and a related apparatus, to quickly view related information of a specific component in an application. The related information includes a display location and display content of the component. This effectively improves user experience.

According to a first aspect, this application provides an interface display method, applied to an electronic device including a touch display. The method includes: displaying a first page of a first application, where content of the first page includes one or more components, and the one or more components include a first component; receiving an input first operation, where the first operation includes at least one input operation; displaying a second page of the first application or a third page of a second application in response to the first operation; receiving an input second operation; displaying a fourth page in response to the second operation, where at least one component label is displayed on the fourth page, and the at least one component label includes a first component label; and when receiving a third operation performed on the first component label, in response to the third operation, starting the first application, displaying the first page, and displaying the first component on the first page.

Through implementation of embodiments of this application, the component label associated with the component can be displayed on the fourth page. Through the third operation on the component label, a display location of the component (for example, the first component associated with the first component label) associated with the component label in an application can be quickly located. This effectively improves user experience.

In an implementation, the displaying a first page of a first application, where content of the first page includes one or more components, and the one or more components include a first component includes: displaying a first part of the first page of the first application, where the first page further includes a second part; and when detecting an input sliding gesture, displaying the second part of the first page, where the second part includes the first component. Through implementation of embodiments of this application, in a scenario, the display can display only a part (for example, the second part) of the first page. A user can view, through the sliding gesture, a currently undisplayed part (for example, the first part) of the first page. The second part includes the first component, and the first part does not include the first component. Even if the first application is switched to a background for running when the display displays the first part, through the third operation on the first component label associated with the first component, it can be found, through locating, that a display location of the first component in the first application is on the second part of the first page, and the second part including the first component can be displayed. This effectively improves user experience.

In an implementation, the method further includes: the first component is an insert-type component; and when receiving a fourth operation performed on the first component label, in response to the fourth operation, starting the first application, and displaying a first content page of the first component, where the third operation is different from the fourth operation. Through implementation of embodiments of this application, in a scenario, the user can open the first content page of the first component in the first application by operating (for example, tapping) the first component displayed on the first page of the first application. In the foregoing scenario, through the fourth operation on the component label associated with the first component, the first application can be quickly invoked to display the first content page of the first component.

In an implementation, the method further includes: the first component is an insert-type component; and when receiving a fourth operation performed on the first component label, in response to the fourth operation, starting a third application, and displaying a second content page of the first component, where the third operation is different from the fourth operation. Through implementation of embodiments of this application, in a scenario, the user can open the second content page related to the first component in the third application by operating (for example, tapping) the first component displayed on the first page of the first application. In the foregoing scenario, through the fourth operation on the component label associated with the first component, the third application can be quickly invoked to display the second content page.

In an implementation, the first component displayed on the first page provides a first function related to display content of the first component. The first content page or the second content page provides the first function and a second function that are related to the display content of the first component. The first component cannot provide the second function. Through implementation of embodiments of this application, the first component can provide only some functions related to the display content of the first component. If the user needs to experience more functions related to the display content of the first component, the user can invoke the first content page or the second content page through the fourth operation. The first content page or the second content page can be understood as a details page of the display content of the first component, and can provide richer functions.

In an implementation, before the displaying a fourth page in response to the second operation, the method further includes: displaying a fifth page, where the fifth page includes an application identifier corresponding to the first application; and the fifth page further includes at least one extend control; receiving a fifth operation performed on the extend control; and displaying the fourth page in response to the fifth operation, where the application identifier may be an application identifier of an application that invokes a component. Through implementation of embodiments of this application, the application identifier of the application that invokes the component and extend controls corresponding to application identifiers are displayed and no component label is displayed on the fifth page invoked by the user through the second operation. The user can control an extend control corresponding to any one of the application identifiers, to display a component label of a component invoked by an application indicated by the application identifier. In this way, page complexity and visual fatigue of a user that are caused by simultaneously displaying component labels of components corresponding to all the application identifiers are avoided.

In an implementation, the fourth page further includes a first control and a second control. The method further includes: displaying a sixth page when receiving a touch input performed on the first control, where the sixth page includes at least one user identifier and the first component label; and when receiving the third operation performed on the first component label on the sixth page, in response to the third operation, displaying the first page, and displaying the first component on the first page, where the user identifier may be a user identifier of a user who uses a component; or displaying a seventh page when receiving a touch input performed on the second control, where the seventh page includes at least one device identifier and the first component label; and when receiving the third operation performed on the first component label on the seventh page, in response to the third operation, displaying the first page, and displaying the first component on the first page, where the device identifier may be a user identifier of a device that invokes a component. Through implementation of embodiments of this application, on the fourth page, a terminal device can display the component label of the component to a user in a plurality of display manners. The user can further switch the display manner of the component label based on a requirement of the user. For example, an application identifier of each application that invokes the component and a component label of a component invoked by an application indicated by any application identifier are displayed on the fourth page. For example, a user identifier of each user who uses the component and a component label of a component that is used by a user indicated by any user identifier are displayed on the fourth page. For example, a device identifier of each device that invokes the component and a component label of a component invoked by a device indicated by any device identifier are displayed on the fourth page. In this way, different component label display requirements and component label search requirements of the user can be met. This improves convenience of use of the component, and effectively improves user experience.

In an implementation, the fourth page is a recent tasks screen. Display content of the fourth page includes an interface snapshot of the first application. Through implementation of embodiments of this application, the component label can be displayed based on an existing recent tasks screen familiar to the user. This conforms to a use habit of the user.

In an implementation, the first component includes: a component invoked by the first application, a component invoked by the first application during latest running of the first application, a component invoked by the first application within first preset duration, or a preset quantity of components with highest usage in components invoked by the first application within second preset duration. Through implementation of embodiments of this application, a component note of a component recently used by the user and/or a component with high usage are/is displayed on the fourth page. This better meets a use requirement of the user, and improves user experience.

In an implementation, the at least one component label includes at least two component labels. An arrangement order of the two component labels is determined based on latest use time points and/or use frequencies of components indicated by the component labels. Through implementation of embodiments of this application, the arrangement order of the component labels is based on the latest use time points and/or the use frequencies of the components. This better meets a use requirement of a user.

In an implementation, the third operation is a tap operation performed on the first component label. The fourth operation is a slide operation of touching and holding the first component label and then dragging the first component label to a third control. In an implementation, an application identifier of the third application and/or third prompt information are/is displayed on the third control. The third prompt information is used to prompt to drag the first component label to the third control to trigger the third application to display related content of the first component.

In an implementation, the third control is displayed after a touch and hold operation performed on the first component label is detected.

In an implementation, the fourth page includes a fourth control and a fifth control. The third operation includes a slide operation from the first component label to the fourth control. The fourth operation includes a slide operation from the first component label to the fifth control.

In an implementation, the third operation includes a slide operation of touching and holding the first component label and then dragging the first component label to the fourth control. The fourth operation includes a slide operation of touching and holding the first component label and then dragging the first component label to the fifth control.

In an implementation, the fourth control and the fifth control are displayed after a touch and hold operation performed on the first component label is detected.

In an implementation, the application identifier of the first application and/or first prompt information are/is displayed on the fourth control. An application identifier of the third application and/or second prompt information are/is displayed on the fifth control. The first prompt information is used to prompt to perform component locating in an application that invokes the first component. The second prompt information is used to prompt to open the component by using an application that provides the first component. It may be understood that the third application that provides the first component opens the first component, and may display the second content page.

In an implementation, the third operation or the fourth operation is one of the following operations: a tap operation performed on the first component label, a touch and hold operation performed on the first component label, a rightward slide operation performed on the first component label, a leftward slide operation performed on the first component label, an upward slide operation performed on the first component label, and a downward slide operation performed on the first component label, where the third operation is different from the fourth operation.

In an implementation, the method further includes: when receiving a sixth operation performed on the first component label, in response to the sixth operation, displaying one or more of the following on the fourth page: a user identifier of at least one contact in the first application, an application identifier of a fourth application, and a page identifier of a specified page of the fourth application, where the user identifier of the at least one contact includes a user identifier of a first contact, and the user identifier of the first contact is used to share the first component with the first contact in the first application; the application identifier of the fourth application is used to share the first component with a contact in the fourth application; and the page identifier of the specified page of the fourth application is used to share the first component with the specified page of the fourth application. Through implementation of embodiments of this application, the component can be shared with a specified contact in the application that invokes the component, a specified contact of another application, or a specified page of another application through the sixth operation performed on the component label of the component. This effectively improves user experience.

In an implementation, the method further includes: when receiving a seventh operation performed on the first component label, where the seventh operation is used to preview the first component on the first page, in response to the seventh operation, displaying a component snapshot of the first component on the fourth page in an original size or a scaled-up size of the first component. Through implementation of embodiments of this application, the display content of the component can be previewed in advance through the seventh operation performed on the component label of the component, without locating the display location of the component. In some scenarios, the user can further determine, based on the previewed display content, whether to locate the component. This effectively improves user experience.

In an implementation, the method further includes: when receiving an eighth operation performed on the first component label, in response to the eighth operation, stopping displaying the first component label, and advancing a component label after the first component label by one location for display. Through implementation of embodiments of this application, the user can delete the component note from the fourth page through the eighth operation performed on the component label of the component, to view more other component notes. This effectively improves user experience.

In an implementation, a component indicated by the component label displayed on the fourth page is a component in a component management trustlist. The component management trustlist is set by one or more of the terminal device, the first application, and the user. Through implementation of embodiments of this application, a component on which component management (for example, component locating) may be performed via the fourth page can be set by using the component management trustlist. The user can set the component in the component management trustlist based on a personal requirement, to implement personalized component management.

In an implementation, the first component is the first page. Through implementation of embodiments of this application, the first component can be a component inserted or embedded in the first page, or may be the first page.

In an implementation, the first component label includes a component identifier of the first component. The first component label further includes zero, one, or more of the following: a page identifier of a page on which the first component is located, an application identifier of an application that provides the first component, and a working area identifier of a working area in which the first component is located. The component identifier includes one or more of the following: a component icon, a component name, and a component snapshot. The page identifier includes a page icon and/or a page name. The application identifier in the component label includes an application icon and/or an application name. The working area identifier includes a working area icon and/or a working area name. Through implementation of embodiments of this application, the user can learn, by using a component label, a component associated with the component label. When the component label includes a page identifier, by using the page identifier in the component label, the user can learn a page on which the component is located, and can further distinguish a same component inserted in different pages. When the component label includes a working area identifier, by using the working area identifier in the component label, the user can learn a working area in which the component is located, and can further distinguish a same component inserted in different working areas. When the component label includes an application identifier, the user can learn, by using the application identifier in the component label, an application that provides the component.

In an implementation, the first component label includes: a component icon or a component snapshot of the first component, and a page name of the first page; a component icon or a component snapshot of the first component, and a working area name of a working area in which the first page is located; a component icon or a component snapshot of the first component, and a component name of the first component; a page icon of the first page and a component name of the first component; or an application icon of an application that provides the first component and a component name of the first component.

In an implementation, the fourth page includes at least one application identifier. The at least one application identifier includes a first application identifier. At least one component label associated with a component invoked by an application indicated by the first application identifier is displayed in a component label display area corresponding to the first application identifier on the fourth page. Through implementation of embodiments of this application, component notes on the fourth page can be displayed by category based on the application that invokes the component. This enriches the display manners of the component label, and improves user experience.

In an implementation, the fourth page includes at least one application identifier. The at least one application identifier includes a second application identifier. At least one component label associated with a component provided by an application indicated by the second application identifier is displayed in a component label display area corresponding to the second application identifier on the fourth page. Through implementation of embodiments of this application, component notes on the fourth page can be displayed by category based on the application that provides the component. This enriches the display manners of the component label, and improves user experience.

In an implementation, the fourth page includes at least one device identifier. The at least one device identifier includes a first device identifier. At least one component label associated with a component invoked by a device indicated by the first device identifier is displayed in a component label display area corresponding to the first device identifier on the fourth page. Through implementation of embodiments of this application, component notes on the fourth page can be displayed by category based on the device that invokes the component. This enriches the display manners of the component label, and improves user experience.

In an implementation, the fourth page includes at least one user identifier. The at least one user identifier includes a first user identifier. At least one component label associated with a component used by a user indicated by the first user identifier is displayed in a component label display area corresponding to the first user identifier on the fourth page. Through implementation of embodiments of this application, component notes on the fourth page can be displayed by category based on the user that uses the component. This enriches the display manners of the component label, and improves user experience.

In an implementation, the fourth page includes at least one page identifier. The at least one page identifier includes a first page identifier. At least one component label associated with a component invoked on a page indicated by the first page identifier is displayed in a component label display area corresponding to the first page identifier on the fourth page. Through implementation of embodiments of this application, component notes on the fourth page can be displayed by category based on a page on which the component is located. This enriches the display manners of the component label, and improves user experience.

In an implementation, the fourth page includes at least one widget (widget) identifier. The at least one widget identifier includes a first widget identifier. At least one component label associated with a component added to a widget indicated by the first widget identifier is displayed in a component label display area corresponding to the first widget identifier on the fourth page. Through implementation of embodiments of this application, component notes on the fourth page can be displayed by category based on the widget to which the component is added. This enriches the display manners of the component label, and improves user experience.

Through implementation of embodiments of this application, the component labels on the fourth page can be displayed in a plurality of manners, for example, displayed by category based on a classification manner (or display dimension) like the application that invokes the component, the application that provides the component, the device that invokes the component, the user that uses the component, the page on which the component is located, or the widget to which the component is added. Through such display by category, the component labels are displayed more clearly. This helps the user quickly locate a component label that the user wants to operate, enriches the display manners of the component labels, and improves user experience.

In an implementation, the fourth page includes an application identifier of an application that invokes a component. The fourth page further includes a sixth control and/or a seventh control. The method further includes: displaying an eighth page when receiving a touch input performed on the sixth control, where the eighth page includes an application identifier of at least one application that provides the component and the first component label; and when receiving the third operation performed on the first component label on the eighth page, in response to the third operation, displaying the first page, and displaying the first component on the first page; or displaying a ninth page when receiving a touch input performed on the seventh control, where the ninth page includes a widget identifier of at least one widget to which the component is added and the first component label; and when receiving the third operation performed on the first component label on the ninth page, in response to the third operation, displaying the first page, and displaying the first component on the first page. Through implementation of embodiments of this application, the user can further switch the display manner of the component label based on the requirement of the user. In this way, the different component label display requirements and component label search requirements of the user can be met. This improves convenience of use of the component, and effectively improves user experience.

In an implementation, the fourth page includes at least two application identifiers corresponding to applications that invoke components. The at least two application identifiers include a first application identifier and a third application identifier. On the fourth page, when a component label associated with a component invoked by an application indicated by the first application identifier is displayed in a component label display area corresponding to the first application identifier, a component label associated with a component invoked by an application indicated by the third application identifier is displayed in a component label display area corresponding to the third application identifier. Through implementation of embodiments of this application, all component labels of components corresponding to the application identifiers can be displayed on the fourth page, to avoid adding a user operation.

In an implementation, the at least one component label further includes a second component label. The second component label is associated with the first component invoked on a tenth page of the first application. The first component label is different from the second component label. The first component label includes a page identifier of the first page. The second component label includes a page identifier of the tenth page. Through implementation of embodiments of this application, page identifiers included in component labels can help the user distinguish a same component inserted in different pages.

According to a second aspect, this application provides a terminal device. The terminal device may include a plurality of functional modules or units, configured to correspondingly perform the interface display method provided in the first aspect, for example, a display unit and a receiving unit.

The display unit is configured to display a first page of a first application, where content of the first page includes one or more components, and the one or more components include a first component.

The receiving unit is configured to receive an input first operation, where the first operation includes at least one input operation.

The display unit is further configured to display a second page of the first application or a third page of a second application in response to the first operation.

The receiving unit is further configured to receive an input second operation.

The display unit is further configured to display a fourth page in response to the second operation, where at least one component label is displayed on the fourth page, and the at least one component label includes a first component label.

The display unit is further configured to: when a third operation performed on the first component label is received, in response to the third operation, start the first application, display the first page, and display the first component on the first page.

In an implementation, the display unit is specifically configured to display a first part of the first page of the first application, where the first page further includes a second part. When an input sliding gesture is detected, the display unit is further configured to display the second part of the first page, where the second part includes the first component.

In an implementation, the first component is an insert-type component. When the receiving unit receives a fourth operation performed on the first component label, the display unit is further configured to: in response to the fourth operation, start the first application, and display a first content page of the first component, where the third operation is different from the fourth operation.

In an implementation, the method further includes: The first component is an insert-type component. When the receiving unit receives a fourth operation performed on the first component label, the display unit is further configured to: in response to the fourth operation, start a third application, and display a second content page of the first component, where the third operation is different from the fourth operation.

In an implementation, before displaying the fourth page in response to the second operation, the display unit is further configured to display a fifth page, where the fifth page includes an application identifier corresponding to the first application, and the fifth page further includes at least one extend control. The receiving unit is further configured to receive a fifth operation performed on the extend control. The display unit is further configured to display the fourth page in response to the fifth operation, where the application identifier may be an application identifier of an application that invokes a component.

In an implementation, the fourth page further includes a first control and a second control. When the receiving unit receives a touch input performed on the first control, the display unit is further configured to display a sixth page, where the sixth page includes at least one user identifier and the first component label. When the receiving unit receives the third operation performed on the first component label on the sixth page, the display unit is further configured to: in response to the third operation, display the first page, and display the first component on the first page, where the user identifier may be a user identifier of a user who uses the component. When the receiving unit receives a touch input performed on the second control, the display unit is further configured to display a seventh page, where the seventh page includes at least one device identifier and the first component label. When the receiving unit receives the third operation performed on the first component label on the seventh page, the display unit is further configured to: in response to the third operation, display the first page, and display the first component on the first page, where the device identifier may be a user identifier of a device that invokes a component.

In an implementation, the fourth page is a recent tasks screen. Display content of the fourth page includes an interface snapshot of the first application.

In an implementation, the first component includes a component invoked by the first application, a component invoked by the first application during latest running of the first application, a component invoked by the first application within first preset duration, or a preset quantity of components with highest usage in components invoked by the first application within second preset duration.

In an implementation, the at least one component label includes at least two component labels. An arrangement order of the two component labels is determined based on latest use time points and/or use frequencies of components indicated by the component labels.

In an implementation, the third operation is a tap operation performed on the first component label. The fourth operation is a slide operation of touching and holding the first component label and then dragging the first component label to a third control. In an implementation, an application identifier of the third application and/or third prompt information are/is displayed on the third control. The third prompt information is used to prompt to drag the first component label to the third control to trigger the third application to display related content of the first component.

In an implementation, the third control is displayed after a touch and hold operation performed on the first component label is detected.

In an implementation, the fourth page includes a fourth control and a fifth control. The third operation includes a slide operation from the first component label to the fourth control. The fourth operation includes a slide operation from the first component label to the fifth control.

In an implementation, the third operation includes a slide operation of touching and holding the first component label and then dragging the first component label to the fourth control. The fourth operation includes a slide operation of touching and holding the first component label and then dragging the first component label to the fifth control.

In an implementation, the fourth control and the fifth control are displayed after a touch and hold operation performed on the first component label is detected.

In an implementation, the application identifier of the first application and/or first prompt information are/is displayed on the fourth control. An application identifier of the third application and/or second prompt information are/is displayed on the fifth control. The first prompt information is used to prompt to perform component locating in an application that invokes the first component. The second prompt information is used to prompt to open the component by using an application that provides the first component.

In an implementation, the third operation or the fourth operation is one of the following operations: a tap operation performed on the first component label, a touch and hold operation performed on the first component label, a rightward slide operation performed on the first component label, a leftward slide operation performed on the first component label, an upward slide operation performed on the first component label, and a downward slide operation performed on the first component label, where the third operation is different from the fourth operation.

In an implementation, when the receiving unit receives a sixth operation performed on the first component label, the display unit is further configured to: in response to the sixth operation, display one or more of the following on the fourth page: a user identifier of at least one contact in the first application, an application identifier of a fourth application, and a page identifier of a specified page of the fourth application, where the user identifier of the at least one contact includes a user identifier of a first contact, and the user identifier of the first contact is used to share the first component with the first contact in the first application; the application identifier of the fourth application is used to share the first component with a contact in the fourth application; and the page identifier of the specified page of the fourth application is used to share the first component with the specified page of the fourth application.

In an implementation, when the receiving unit receives a seventh operation performed on the first component label, where the seventh operation is used to preview the first component on the first page, the display unit is further configured to: in response to the seventh operation, display a component snapshot of the first component on the fourth page in an original size or a scaled-up size of the first component.

In an implementation, when the receiving unit receives an eighth operation performed on the first component label, the display unit is further configured to: in response to the eighth operation, stop displaying the first component label, and advance a component label after the first component label by one location for display.

In an implementation, a component indicated by the component label displayed on the fourth page is a component in a component management trustlist. The component management trustlist is set by one or more of the terminal device, the first application, and the user.

According to a third aspect, this application provides a terminal device, including one or more processors and one or more memories. The one or more memories are coupled to the one or more processors. The one or more memories are configured to store computer program code. The computer program code includes computer instructions. When the one or more processors execute the computer instructions, the terminal device is enabled to perform the interface display method according to any possible implementation of any one of the foregoing aspects.

According to a fourth aspect, an embodiment of this application provides a computer storage medium, including computer instructions. When the computer instructions are run on a terminal device, the terminal device is enabled to perform the interface display method according to any possible implementation of any one of the foregoing aspects.

According to a fifth aspect, an embodiment of this application provides a computer program product. When the computer program product runs on a computer, the computer is enabled to perform the interface display method according to any possible implementation of any one of the foregoing aspects.

### BRIEF DESCRIPTION OF DRAWINGS

FIG. 1 is a diagram of a structure of a terminal device according to an embodiment of this application;
FIG. 2A shows a home screen according to an embodiment of this application;
FIG. 2B and FIG. 2C show recent tasks screens according to an embodiment of this application;
FIG. 3A to FIG. 3D show example interfaces of using a moments page according to an embodiment of this application;
FIG. 4A to FIG. 4G show example interfaces of using a vote component according to an embodiment of this application;
FIG. 5A to FIG. 5F show example interfaces of using a music player component according to an embodiment of this application;
FIG. 6A to FIG. 6E show example interfaces of using a collaborative office application according to an embodiment of this application;
FIG. 7A to FIG. 7J show recent tasks screens according to an embodiment of this application;
FIG. 8(a) to FIG. 9(d) are diagrams of component labels according to an embodiment of this application;
FIG. 10A to FIG. 10I show example interfaces of component locating according to an embodiment of this application;
FIG. 11A to FIG. 11H show example interfaces of component locating according to an embodiment of this application;
FIG. 12A to FIG. 12K are example interfaces of a function of a component label according to an embodiment of this application;
FIG. 13A to FIG. 13D show example interfaces of setting a component management trustlist according to an embodiment of this application;
FIG. 14A and FIG. 14B show a display manner of a component label according to an embodiment of this application;
FIG. 15A to FIG. 15D show another display manner of a component label according to an embodiment of this application;
FIG. 16A and FIG. 16B show another display manner of a component label according to an embodiment of this application;
FIG. 17A to FIG. 17C show another display manner of a component label according to an embodiment of this application;
FIG. 18 shows another display manner of a component label according to an embodiment of this application;
FIG. 19A and FIG. 19B show another display manner of a component label according to an embodiment of this application;
FIG. 20A to FIG. 20E are example interfaces of switching a display manner of a component label according to an embodiment of this application; and
FIG. 21 is a schematic flowchart of an interface display method according to an embodiment of this application.

### DESCRIPTION OF EMBODIMENTS

The following clearly describes the technical solutions in embodiments of this application in detail with reference to the accompanying drawings. In descriptions of embodiments of this application, "/" indicates "or" unless otherwise specified. For example, A/B may indicate A or B. The term "and/or" in this specification describes merely an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following descriptions, the terms "first" and "second" are merely intended for a purpose of description, and shall not be interpreted as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

The following describes a structure of a terminal device 100 in embodiments of this application.

The terminal device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in embodiments of this application. The terminal device may use iOS, Android, Microsoft, or another operating system. This is not specifically limited herein.

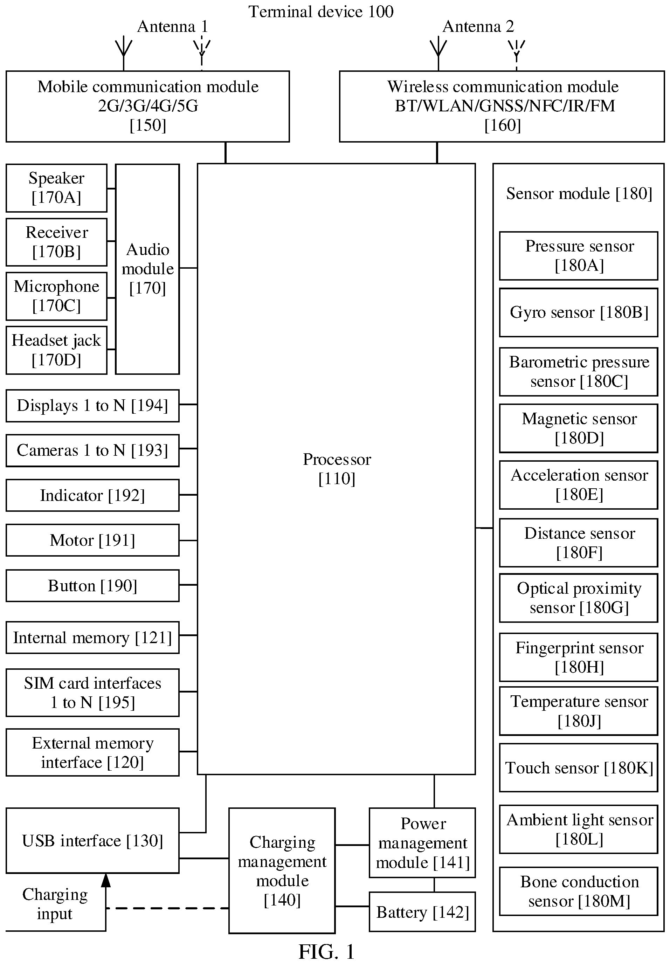

As shown in FIG. 1, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of this application, the terminal device 100 may include more or fewer components than those shown in the figure, or combine some of the components, or split some of the components, or have different layouts of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. When charging the battery 142, the charging management module 140 may further supply power to the terminal device via the power management module 141.

The power management module 141 is configured to connect the battery 142 and the charging management module 140 to the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented via the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the terminal device 100 and that includes wireless communication such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transferred to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the terminal device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function via the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement a photographing function via the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal device 100 may include one or N cameras 193, where N is a positive integer greater than 1.

The digital signal processor is configured to process a digital signal, and may further process another digital signal in addition to the digital image signal. For example, when the terminal device 100 selects a frequency, the digital signal processor is configured to perform Fourier transform on frequency energy.

The video codec is configured to compress or decompress a digital video. The terminal device 100 may support one or more video codecs. In this way, the terminal device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal device 100, for example, image recognition, facial recognition, speech recognition, and text understanding, may be implemented via the NPU.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM, which is generally referred to as a DDR5 SDRAM), and the like. The non-volatile memory may include a magnetic disk storage component and a flash memory (flash memory).

The flash memory may be classified into an NOR flash, an NAND flash, a 3D NAND flash, and the like based on an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like based on a storage specification.

The random access memory may be directly read and written by the processor 110, may be configured to store an executable program (for example, a machine instruction) in an operating system or another running program, and may be further configured to store data of a user, data of an application, and the like.

The non-volatile memory may also store the executable program, the data of the user, the data of the application, and the like, which may be loaded into the random access memory in advance for directly reading and writing by the processor 110.

The external memory interface 120 may be configured to connect to an external non-volatile memory, to extend a storage capability of the terminal device 100. The external non-volatile memory communicates with the processor 110 through the external memory interface 120, to implement a data storage function. For example, files such as music and a video are stored in the external non-volatile memory.

The terminal device 100 may implement an audio function, for example, music playing or recording, via the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor.

The gyro sensor 180B may be configured to determine a motion posture of the terminal device 100. In some embodiments, angular velocities of the terminal device 100 around three axes (namely, x, y, and z axes) may be determined via the gyro sensor 180B.

The barometric pressure sensor 180C is configured to measure barometric pressure.

The magnetic sensor 180D includes a Hall sensor.

The acceleration sensor 180E may detect magnitude of accelerations of the terminal device 100 in various directions (usually on three axes). When the terminal device 100 is stationary, magnitude and a direction of gravity may be detected. The acceleration sensor may be further configured to identify a posture of the terminal device.

The distance sensor 180F is configured to measure a distance. The terminal device 100 may measure the distance in an infrared manner or a laser manner.

The optical proximity sensor 180G may include, for example, a light-emitting diode (LED) and a photodetector, for example, a photodiode.

The ambient light sensor 180L is configured to sense ambient light brightness. The terminal device 100 may adaptively adjust brightness of the display 194 based on the sensed ambient light brightness.

The fingerprint sensor 180H is configured to collect a fingerprint.

The temperature sensor 180J is configured to detect a temperature. In some embodiments, the terminal device 100 executes a temperature processing policy based on the temperature detected by the temperature sensor 180J.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the terminal device 100 at a location different from that of the display 194.

The bone conduction sensor 180M may obtain a vibration signal.

The button 190 includes a power button, a volume button, and the like. The button 190 may be a mechanical button, or may be a touch button. The terminal device 100 may receive a button input, and generate a button signal input related to a user setting and function control of the terminal device 100.

The term "user interface (user interface, UI)" in the following embodiments of this application is an interface for interaction and information exchange between an application or an operating system and a user. The user interface is source code written in a specific computer language, for example, Java or an extensible markup language (extensible markup language, XML). The interface source code is parsed and rendered on a terminal device, and is finally presented as content that can be recognized by the user. The user interface is usually in a representation form of a graphical user interface (graphical user interface, GUI), and is a user interface that is displayed in a graphical manner and that is related to a computer operation. The user interface may be a visual interface element, for example, a text, an icon, a button, a menu, a tab, a text box, a dialog box, a status bar, a navigation bar, or a widget (widget) displayed on a display of the terminal device. In implementations of this application, the "user interface" may also be referred to as a "page" or an "interface" for short.

The following describes an example graphical user interface implemented on the terminal device 100 according to an embodiment of this application.

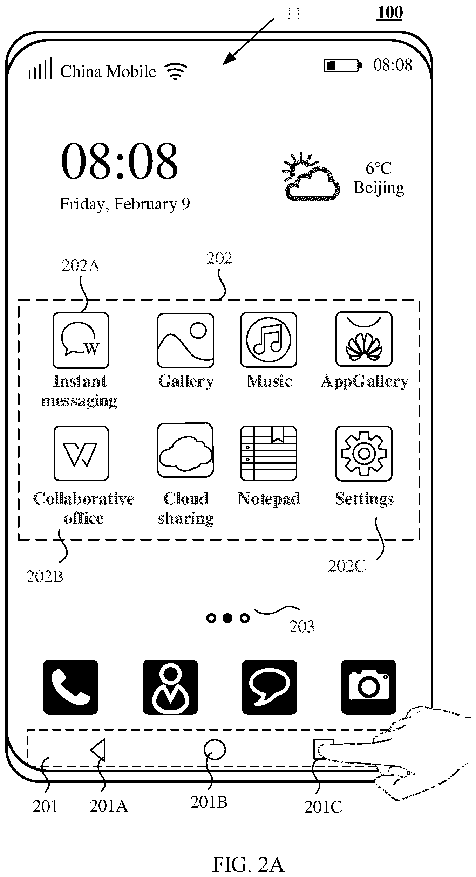

FIG. 2A shows an example of a home screen 11 used to display applications installed on the terminal device 100. The home screen 11 may include a status bar, a calendar indicator, a weather indicator, a tray having icons of frequently used applications, a navigation bar 201, and a display area 202 of other application icons.

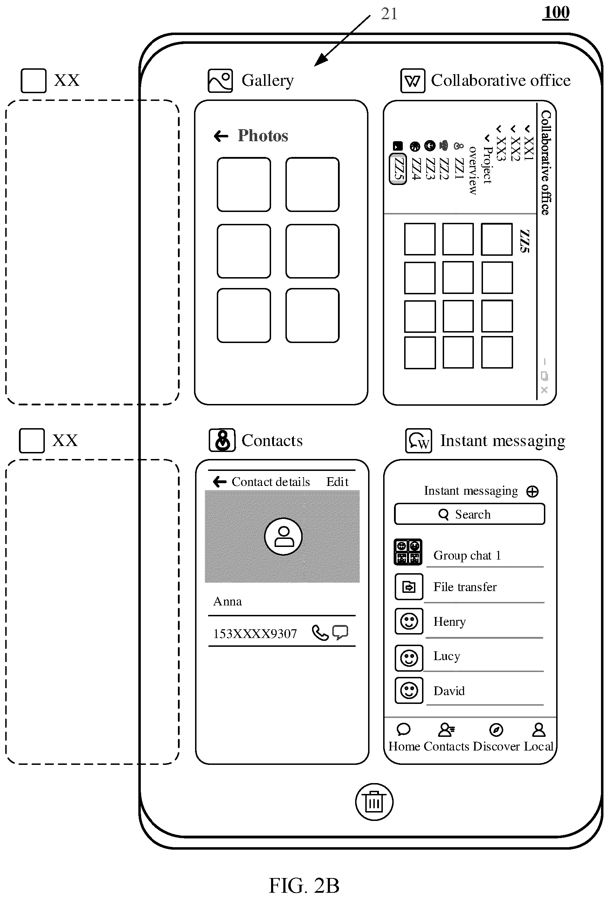

The navigation bar 201 may include system navigation buttons such as a back button 201A, a home screen button 201B, and a multi-task button 201C. When detecting that a user taps the back button 201A, the terminal device 100 may display a previous page of a current page. When detecting that the user taps the home screen button 201B, the terminal device 100 may display the home screen. When detecting that the user taps the multi-task button 201C, the terminal device 100 may display, on a recent tasks screen, application identifiers of applications that are recently viewed by the user and that still run in a background, as shown in FIG. 2B. When an application identifier of an application on the recent tasks screen is tapped, the terminal device 100 may quickly switch to an exit interface of the application, namely, a user interface displayed by the application when the user exits the application. Names of the navigation buttons may alternatively be other names. This is not limited in this application.

The navigation buttons are not limited to virtual buttons. In an embodiment of this application, the home screen 11 may alternatively not include the navigation bar 201, and each navigation button in the navigation bar 201 may be implemented as a physical button or a navigation gesture. In some embodiments, the terminal device 100 implements a function of each navigation button in the navigation bar 201 through a specified navigation gesture of the user. For example, a navigation gesture corresponding to the back button 201A includes a gesture of sliding inward from the left edge of the display 194 of the terminal device 100. A navigation gesture corresponding to the home screen button 201B includes a gesture of sliding upward from the left half part of the bottom edge of the display 194 of the terminal device 100. A navigation gesture corresponding to the multi-task button 201C includes a gesture of sliding upward from the right half part of the bottom edge of the display 194 of the terminal device 100.

An icon 202A of an instant messaging application, an icon 202B of a collaborative office application album, an icon of Gallery, an icon of Music, an icon of AppGallery, an icon of Cloud sharing, an icon of Notepad, and an icon 202C of Settings may be displayed in the display area 202 of the other application icons. The home screen 11 may further include a page indicator 203. The other application icons may be distributed on a plurality of pages. The page indicator 203 may indicate a page on which an application currently viewed by the user is located. The user may slide leftward or rightward in the area of the other application icons, to view an application icon on another page.

The following describes the recent tasks screen in embodiments of this application by using examples.

In an embodiment of this application, when the user starts a new application, the terminal device 100 may switch an application that runs in a foreground to the background for running, add a running application window of the application to a multi-task queue, and store, as an interface snapshot of the application window on the recent tasks screen, a snapshot of a user interface last displayed in the application window. Optionally, the snapshot of the user interface may be a screenshot of the user interface. After invoking the recent tasks screen of the terminal device 100 through a specified input operation, the user may preview, quickly switch, and disable background running of each application in the multi-task queue by using an application identifier (for example, an interface snapshot) of the application on the recent tasks screen, and quickly clear a running memory of the terminal device 100.

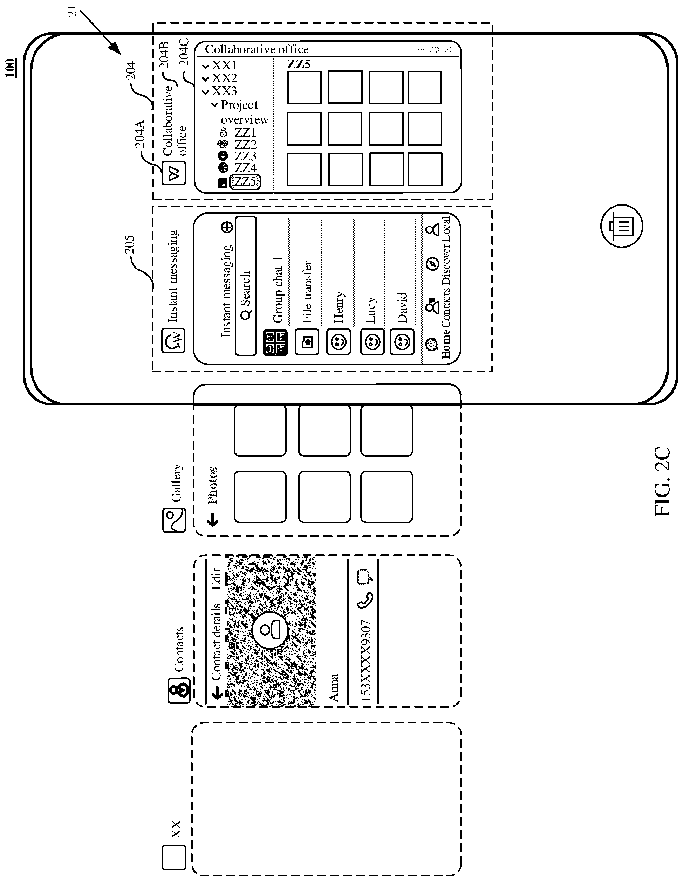

FIG. 2B and FIG. 2C show display forms of two recent tasks screens according to an embodiment of this application.

For example, after the user successively uses applications such as a contacts application, the Gallery application, the instant messaging application, and the collaborative office application, applications such as the contacts application, the album application, and a payment application are successively added to the multi-task queue. As shown in FIG. 2A, the terminal device 100 may receive an input operation (for example, a touch operation) performed on the multi-task button 201C. In response to the input operation, the terminal device 100 may display, based on the multi-task queue, a recent tasks screen 21 shown in FIG. 2B or FIG. 2C. The recent tasks screen 21 is used to display application identifiers (for example, an application identifier 204 of the collaborative office application and an application identifier 205 of the instant messaging application) of the applications in the multi-task queue. The application identifier may include an application icon, an application name, and an interface snapshot. Refer to FIG. 2C. The application identifier 204 of the collaborative office application is used as an example. The application identifier 204 includes an application icon 204A, an application name 204B, and an interface snapshot 204C. When the terminal device 100 cannot display the application identifiers of all the applications in the multi-task queue due to a limitation on a size of the screen, the user may view application identifiers of more applications through a leftward/rightward slide operation performed on the recent tasks screen 21.

On the recent tasks screen shown in FIG. 2B, the application identifiers of the applications are displayed in a form of two rows and a plurality of columns. The application identifiers of the applications are arranged from top to bottom and from right to left. An application identifier of an application that is last switched to the background in the multi-task queue is arranged in a first row of the leftmost column. On the recent tasks screen shown in FIG. 2C, the application identifiers of the applications are displayed in a form of one row and a plurality of columns. The application identifiers of the applications are arranged from right to left. An application identifier of an application that is last switched to the background in the multi-task queue is arranged in the leftmost column.

It can be learned from FIG. 2B and FIG. 2C that a display size of the interface snapshot in the application identifier 204, namely, a snapshot of a user interface corresponding to an application window displayed when the collaborative office application is last exited, is different from a display size of an actual user interface. In some embodiments, when the terminal device 100 displays the recent tasks screen, the terminal device 100 displays the screenshot in the application identifier 204 after scaling down the screenshot in a preset proportion. In some other embodiments, display content on the user interface is re-arranged. A snapshot of a re-arranged user interface is used as the interface snapshot in the application identifier 204. In some other embodiments, a snapshot of partial content on the user interface is selected as the interface snapshot in the application identifier 204.

It should be noted that, without being limited to the recent tasks screens shown in FIG. 2B and FIG. 2C, an interface display method provided in embodiments of this application is also applicable to a recent tasks screen in another display form. This is not specifically limited herein. In subsequent embodiments, the recent tasks screen shown in FIG. 2C is used as an example for description.

The following describes a component in embodiments of this application.

The component (component) may also be referred to as a functional entity, and is usually used to implement one or more specific functions. Some components provide some standard application interfaces, allow a user to set and adjust a parameter and an attribute, and optionally, in some cases, can be assembled by a third party. A loop component is a component that can be synchronized (that is, kept up to date) between different applications.

From a perspective of a representation form of the component, the component in embodiments of this application may include a type-A component and a type-B component. The type-A component is a component, for example, a list component, a table component, a document component, a form component (for example, a vote form), or a dialog box component of a specified contact or group chat, that can be inserted in a specific page, or a card suspended on a page. The type-B component means that a specific page is considered as a page component. For example, a user interface corresponding to an application window of an application is considered as a page component. A page inserted in a workspace of a collaborative office application is considered as a page component, and a page of an applet is considered as a page component. A component type and a function implemented by the component are not specifically limited in embodiments of this application. In subsequent embodiments, various components are described by using examples. Details are not described herein.

It should be noted that the application window may be an activity window in an Android system, an application window in an iOS system, or an application window in another operating system. This is not specifically limited herein. One application includes a plurality of application windows, and one application window may correspond to one user interface (namely, one page). For example, an activity in the Android system is an interface for interaction between a user and an application. Each activity component is associated with one Window object, and is used to describe a specific application window (the application window may be referred to as an activity window for short). It can be learned that the activity is a highly abstract user interface component, and represents a user interface and corresponding service logic centered on the user interface in Android. An event triggered by the user may be listened to and processed via a control on the user interface. It may be understood that, in an Android application, one activity may be represented as one user interface, and one Android application may have a plurality of activities.

In an embodiment of this application, a specified page of an application 1 may be used as a page component for component management (for example, component locating). The specified page may be set by the terminal device 100 by default, or may be set by the application 1 by default, or may be set by the user. This is not specifically limited herein.

In an embodiment of this application, from a perspective of a source of the component, the component may include a type-C component and a type-D component. The user may invoke at least one component (for example, a type-C component or a type-D component) in the application 1. The application 1 includes an invocation portal of each of the at least one component. The type-C component may be a component provided by this application (namely, the application 1). The type-D component (for example, a component 1) may be a component provided by another application (for example, an application 2). The component 1 may include a shortcut portal for the application 1 to invoke the application 2 or a specific application window of the application 2. Via the component 1 displayed in the application 1, the application 2 may be invoked, and a user interface corresponding to a specific application window associated with display content of the component 1 is displayed in the application 2. Alternatively, via the component 1 displayed in the application 1, a user interface corresponding to a specific application window of the application 2 may be displayed in the application 1, and display content on the user interface is associated with display content of the component 1. In this way, the application 2 does not need to be started, to avoid jumping between the applications.

In an embodiment of this application, an application (namely, the application 1 or the application 2) that provides a component may include a Word application, an Excel application, a PPT (Powerpoint) application, a database, an instant messaging application, a video application, a music application, a web application, a quick application, and the like, and may further include office software that supports multi-person collaboration, such as Microsoft Loop, OneNote, Outlook, and Teams. This is not specifically limited in embodiments of this application.

It may be understood that the type-C component may also be a type-A component or a type-B component, and the type-D component may also be a type-A component or a type-B component.

With reference to accompanying drawings, the following describes the component types in this application by using examples.

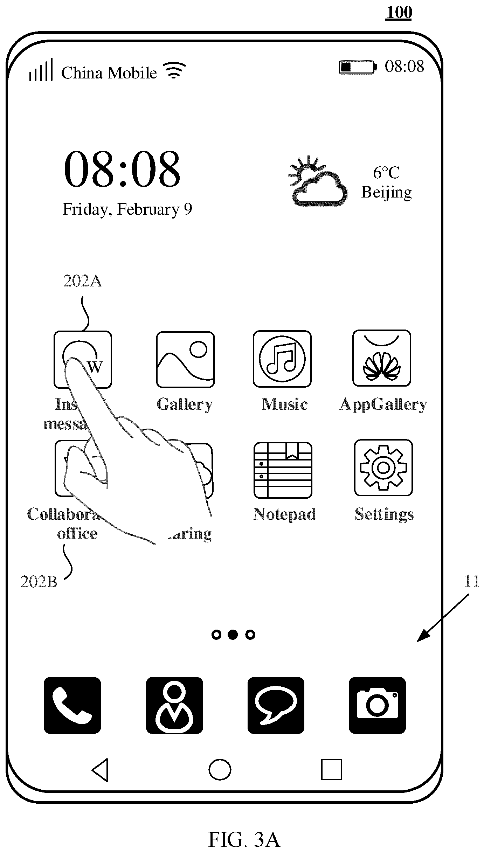

For example, for the instant messaging application, in an embodiment of this application, a moments page may be used as a type-B component (namely, a page component) and a type-C component for component management. FIG. 3A to FIG. 3D are diagrams of user interfaces of displaying, by the user in the instant messaging application, the moments page component provided by this application.

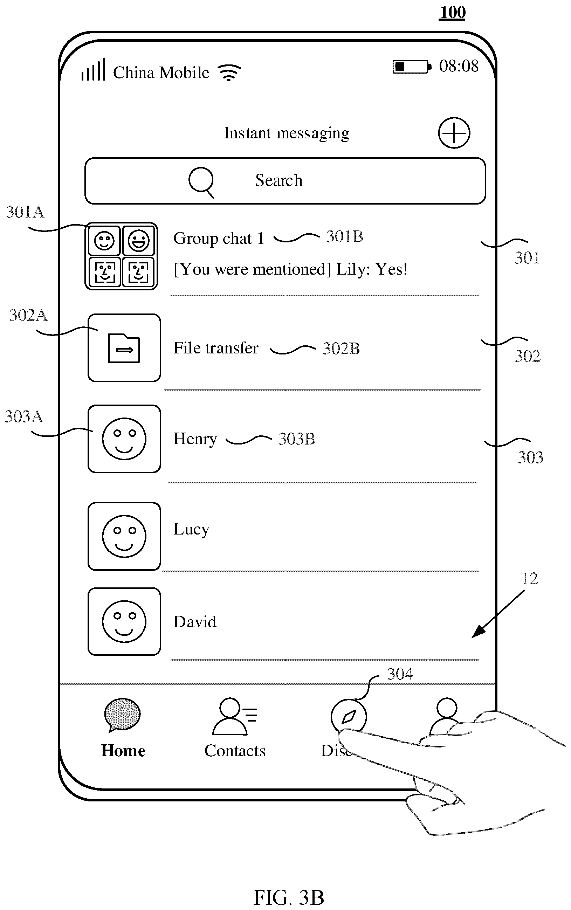

As shown in FIG. 3A and FIG. 3B, an icon 202A of the instant messaging application may receive an input operation (for example, a touch operation) of the user. In response to the input operation, the terminal device 100 displays a home page 12 of the instant messaging application. The home page 12 includes one or more chat entries, for example, a chat entry 301 of a specified group chat (for example, a group chat 1), a chat entry 302 of file transfer, and a chat entry 303 of a specified contact (for example, Henry). The chat entry 301 includes an avatar 301A of the group chat 1 and a group name 301B of the group chat 1. The chat entry 302 includes an icon 302A of the file transfer and a name 302B of the file transfer. The chat entry 303 includes an avatar 303A of the contact and a nickname 303B of the contact. The home page 12 further includes page options, for example, a home option, a contacts page option, a discover page option 304, and a local page option.

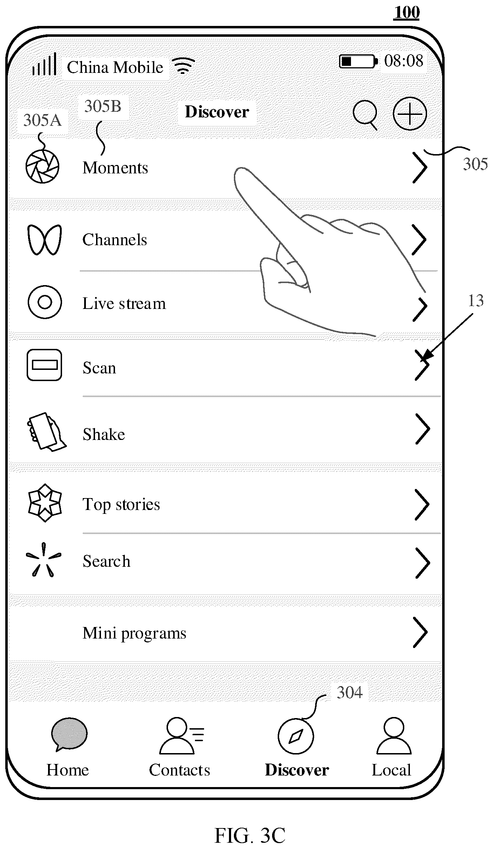

As shown in FIG. 3B and FIG. 3C, the discover page option 304 may receive an input operation (for example, a touch operation) of the user. In response to the input operation, the terminal device 100 displays a discover page 13. The discover page 13 includes a moments entry 305. The moments entry 305 includes a moments icon 305A and a moments name 305B.

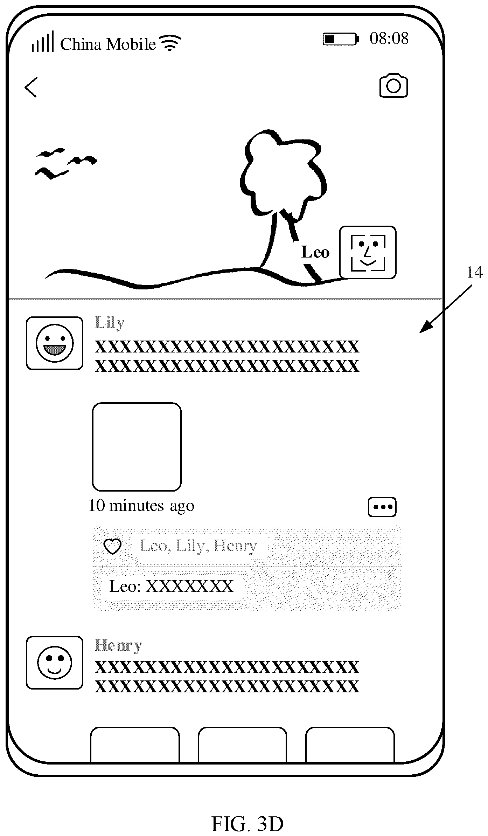

As shown in FIG. 3C and FIG. 3D, the moments entry 305 may receive an input operation (for example, a touch operation) of the user. In response to the input operation (for example, the touch operation), the terminal device 100 displays a moments page 14. The moments entry 305 may be considered as an invocation portal of the moments page 14.

It may be understood that the home page 12, the discover page 13, and the moments page 14 are pages corresponding to different application windows (for example, activity windows).

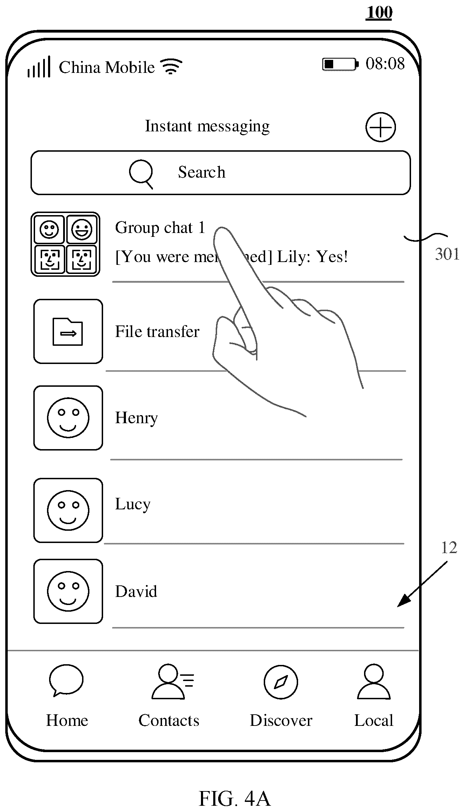

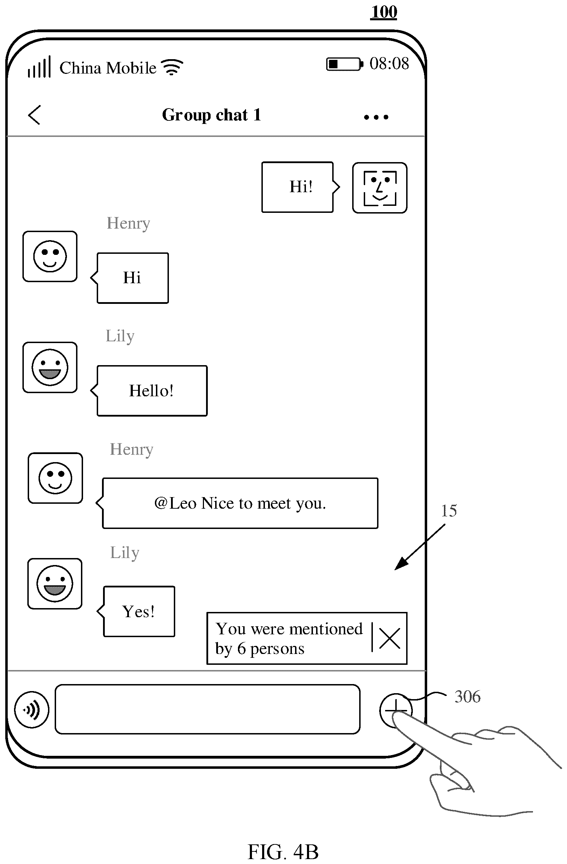

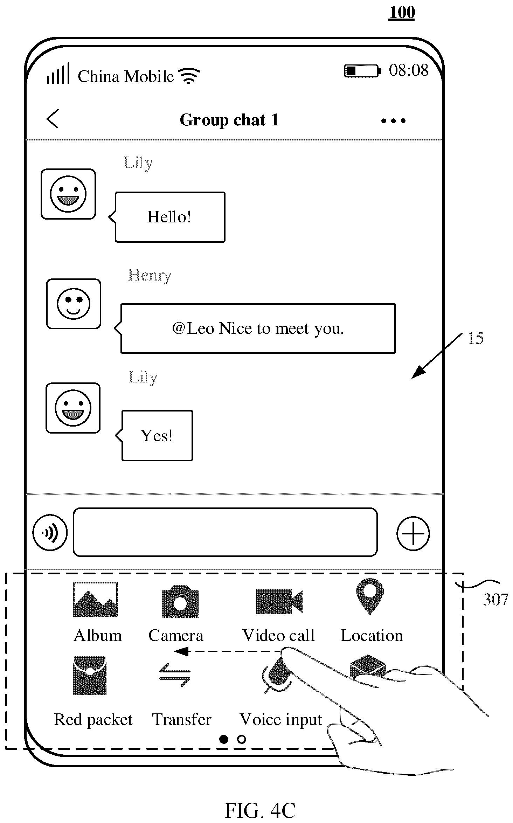

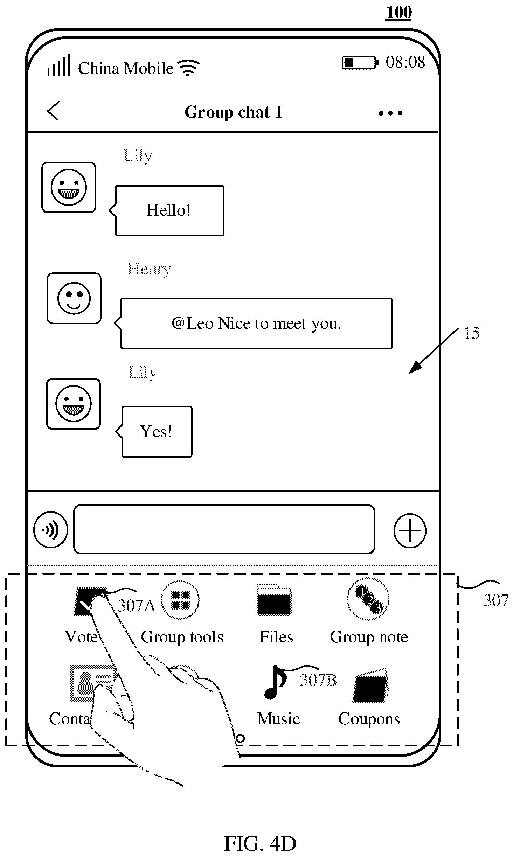

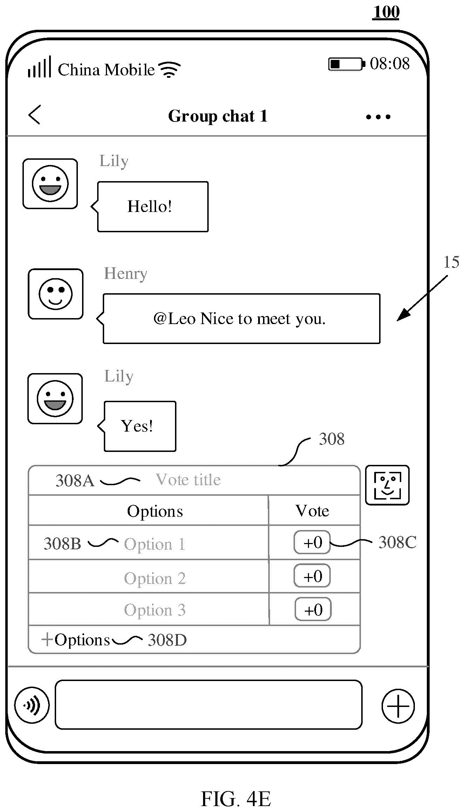

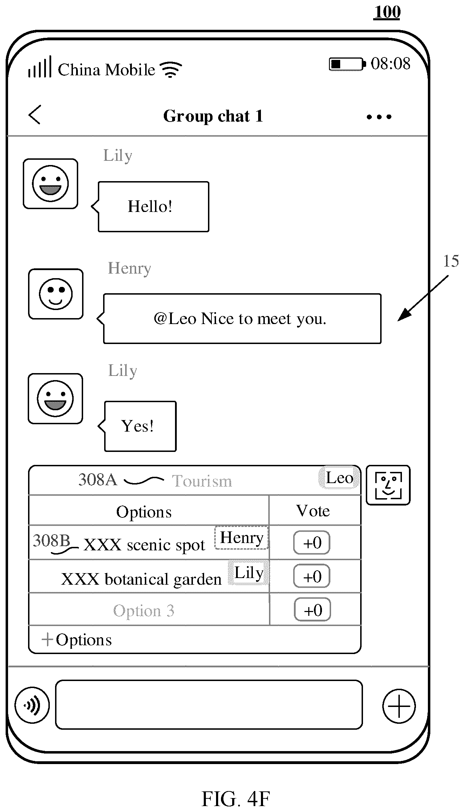

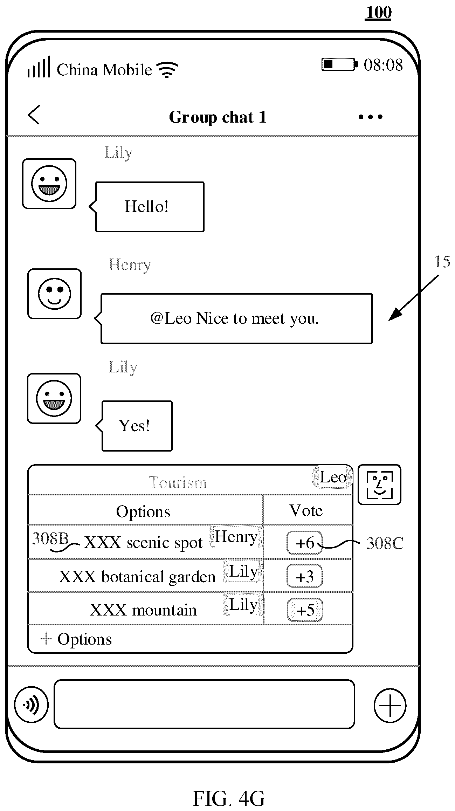

For example, the instant messaging application may invoke a component provided by this application. A vote component is used as an example. FIG. 4Ato FIG. 4G are diagrams of user interfaces of invoking, by the user in the instant messaging application, the vote component provided by this application.

As shown in FIG. 4A and FIG. 4B, the chat entry 301 may receive an input operation (for example, a touch operation) of the user. In response to the input operation, the terminal device 100 displays a chat page 15 of the group chat 1. A real-time chat record of the group chat 1 is displayed on the chat page 15. When the terminal device 100 cannot display all chat records of the group chat 1 due to the limitation on the size of the screen of the terminal device 100, the user may view more chat records of the group chat 1 through an upward/downward slide operation.

As shown in FIG. 4B and FIG. 4C, the chat page 15 further includes an insert control 306. The insert control 306 may receive an input operation (for example, a touch operation) of the user. In response to the input operation, the terminal device 100 displays an insert option display area 307. The insert option display area 307 includes icons of a plurality of insert options (for example, an album option, a camera option, a video call option, and a location option) on the chat page. As shown in FIG. 4C and FIG. 4D, the insert option display area 307 may receive a slide operation of the user. In response to the input operation, the terminal device 100 may display icons of more insert options, for example, a vote icon 307A of a vote option, a music icon 307B of a music option, an icon of a group note option, and an icon of a live stream option.

As shown in FIG. 4D and FIG. 4E, the vote icon 307A may receive an input operation (for example, a touch operation) of the user. In response to the input operation, the terminal device 100 may display, in the chat record on the chat page 15, a vote component 308 inserted by the user. For example, as shown in FIG. 4E, the vote component 308 includes a vote title 308A, at least two vote options (for example, a vote option 308B), a vote control (for example, a vote control 308C corresponding to the vote option 308B) corresponding to each vote option, and an add control 308D. The add control 308D is used to add a vote option and a vote control corresponding to the vote option.

In an implementation, all group members in the group chat 1 may edit the vote title and the vote option. The terminal device 100 may display a nickname of a group member who is performing editing/or recently performs editing. For example, refer to FIG. 4F. A group member "Henry" is editing the vote option 308B, and a group member who recently edits the vote title 308A is "Leo". Refer to FIG. 4G. The vote option 308B is used as an example. A quantity of votes obtained for the vote option may be displayed on the vote control 308C corresponding to the vote option 308B.

It should be noted that the vote component shown in FIG. 4E to FIG. 4G is an example vote component provided in embodiments of this application, and should not constitute a limitation on embodiments of this application. Optionally, without being limited to the instant messaging application, the vote component may alternatively be provided by another application.

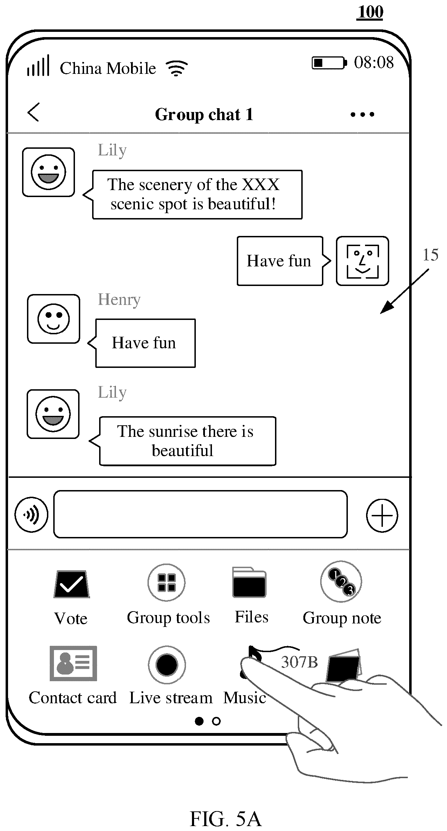

For example, the instant messaging application may invoke a component provided by another application (for example, the music application). A music player component is used as an example. FIG. 5A to FIG. 5F are diagrams of user interfaces of invoking, by the user in the instant messaging application, the music player component provided by the music application.

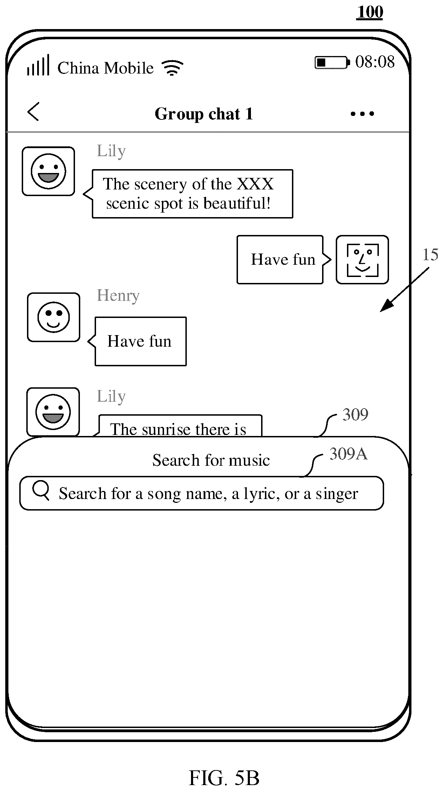

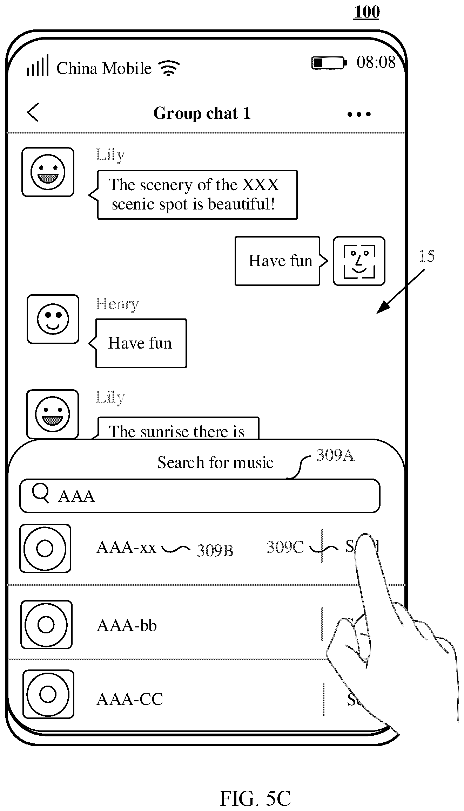

As shown in FIG. 5A and FIG. 5B, a music option 307B may receive an input operation (for example, a touch operation) of the user. In response to the input operation, the terminal device 100 displays a music search area 309. The music search area 309 includes a search input box 309A. As shown in FIG. 5C, the user may input a song keyword in the search input box 309A. The song keyword may include a song name, a lyric, and/or a singer, for example, a song name "AAA". The terminal device 100 may obtain at least one song search result (for example, a song 309B) related to the song keyword, and display, in the music search area 309, the song 309B and a send control 309C corresponding to the song.

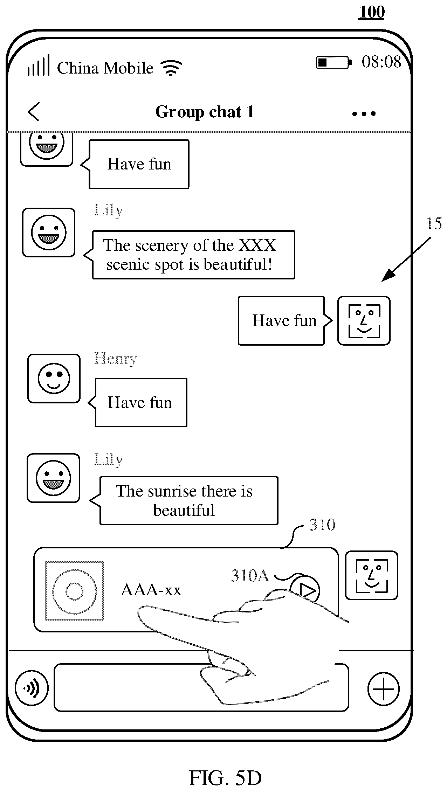

As shown in FIG. 5C and FIG. 5D, the send control 309C may receive an input operation (for example, a touch operation) of the user. In response to the input operation, the terminal device 100 may display, in the chat record on the chat page 15, a music player component 310 that is inserted by the user and that corresponds to the song 309B. The music player component 310 includes a play control 310A. The terminal device 100 may play the song 309B in response to an input operation on the play control 310A.

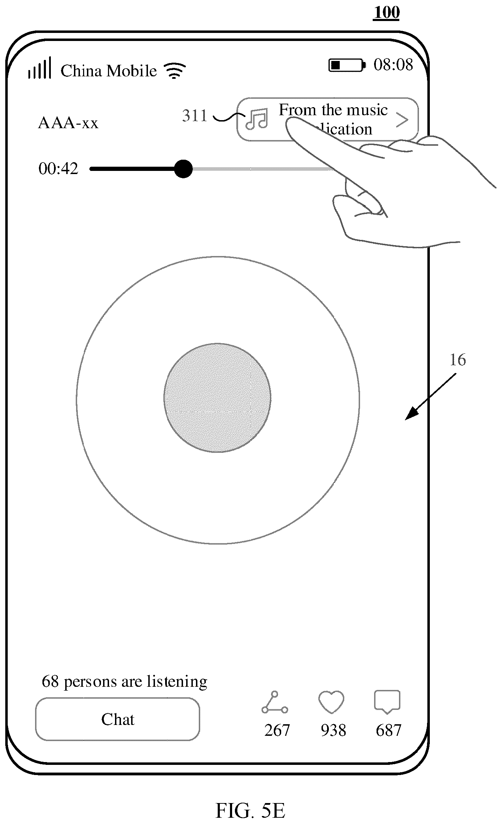

As shown in FIG. 5D and FIG. 5E, the music player component 310 may receive an input operation (for example, a touch operation) of the user. In response to the input operation, the terminal device 100 may display a simple play interface 16 of the song 309B in the instant messaging application. The simple play interface 16 includes a source control 311. Display content of the source control 311 may be "From the music application". It may be understood that the simple play interface 16 may be a user interface provided by the music application. When detecting that the user taps the music player component 310, the terminal device 100 does not need to jump to the music application, and may directly display, in the instant messaging application, the user interface provided by the music application. The simple play interface 16 may alternatively be a user interface provided by the instant messaging application. The instant messaging application may display the simple play interface 16 based on related data that is provided by an application server of the music application and that is of a song "AAA". It should be understood that, after the user taps a component, the terminal device 100 may display, in this application, a first content page corresponding to the component. For example, after the user taps the music player component 310, the terminal device 100 displays a first content page, namely, the example simple play interface 16, of the music player component 310.

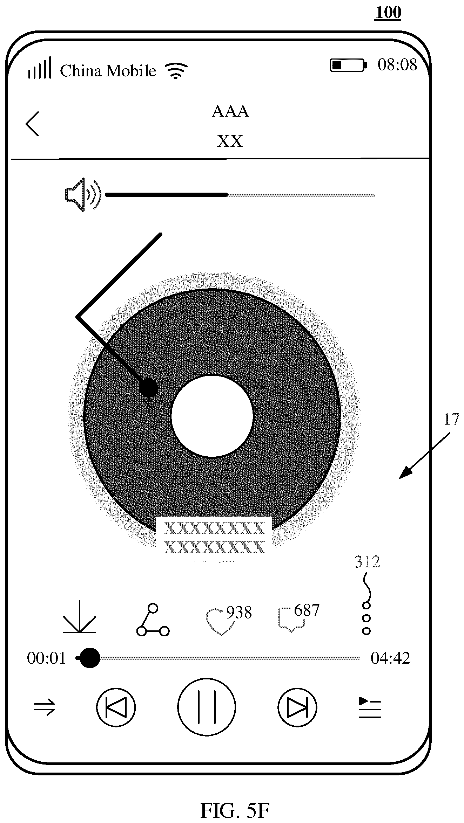

As shown in FIG. 5E and FIG. 5F, the source control 311 may receive an input operation (for example, a touch operation) of the user. In response to the input operation, the terminal device 100 may start the music application, and display an original play interface 17 of the song 309B in the music application. It may be understood that the source control 311 may be considered as a shortcut portal for the instant messaging application to invoke the original play interface 17 of the music application. The original play interface 17 includes a more control 312. The more control 312 is used to invoke more functional controls, for example, a control used to add the song 309B to a playlist, a control used to view an album of the song 309B, and a control used to view a musical score of the song 309B. It should be understood that, after receiving an input instruction on the first content page (for example, the simple play interface 16), the terminal device 100 may invoke another application to display a second content page (for example, the original play interface 17) corresponding to the component.

It may be understood that the user can control only playing and pausing of the song 309B via the music player component 310 displayed in the instant messaging application. In comparison with the music player component 310, the user can further control playing progress, sharing, liking, and commenting of the song 309B through the simple play interface 16 displayed in the instant messaging application. In comparison with the simple play interface 16, through the original play interface 17 displayed in the music application, the user may obtain more information about the song 309B, and may experience more functions, for example, downloading, viewing the album, and viewing the music score, related to the song 309B.

In an implementation, it is detected that the source control 311 receives the input operation of the user. Information (for example, the song name AAA and a singer name xx) about the song 309B is sent to the music application by using the instant messaging application. The music application generates and displays the original play interface 17 of the song 309B based on the information about the song 309B.

It should be noted that, without being limited to the music application, the music player component 310 may alternatively be provided by this application (namely, the instant messaging application). This is not specifically limited herein.

In an embodiment of this application, the instant messaging application may further use a group note component provided by this application, a location component provided by a map application, a live stream component provided by a live stream application, and the like. This is not specifically limited herein either.

For example, the collaborative office application may invoke a component provided by another application.

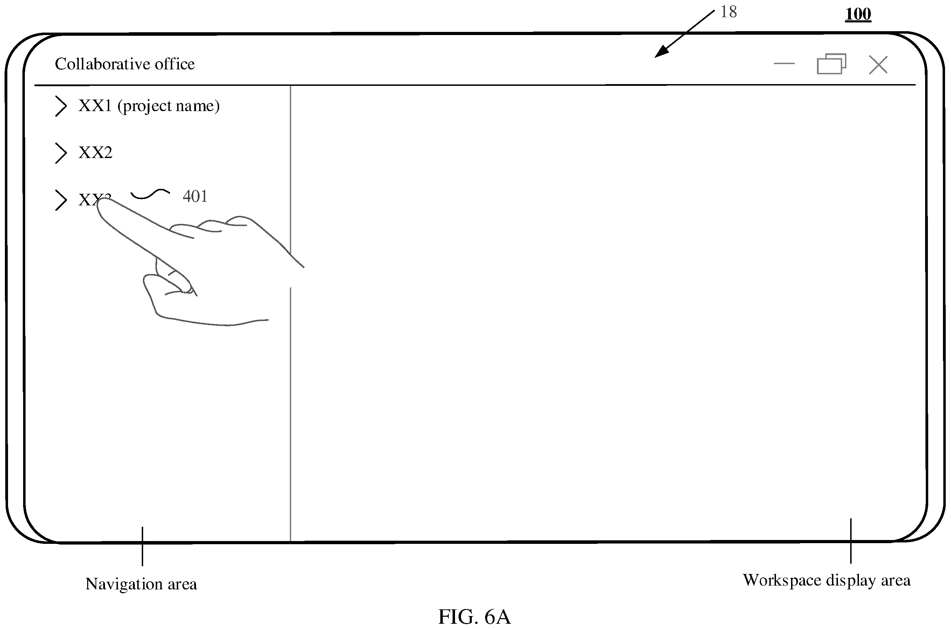

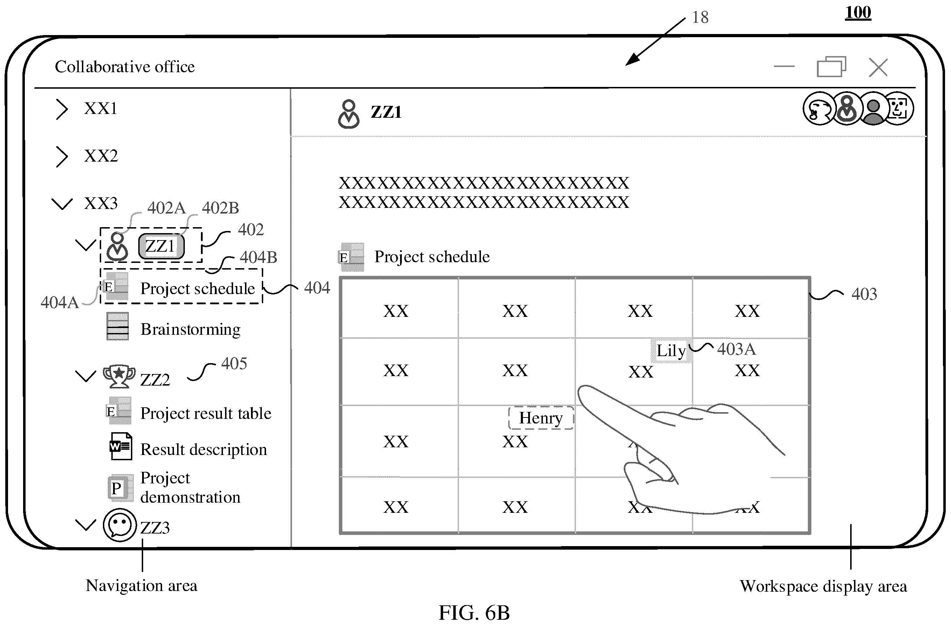

The Excel component is used as an example. FIG. 6A and FIG. 6B are diagrams of user interfaces of invoking, by the user in the collaborative office application, the Excel component provided by the Excel application.

It should be noted that the collaborative office application in embodiments of this application may include three elements in some specific implementations: a workspace (workspace), a page (page), and a component (component). The workspace is a project (project)-oriented workspace that supports multi-person collaboration. The page may be understood as a page (a specific working interface) in the workspace, and the component and an element (for example, a link, a text, an image, or an applet (for example, a vote applet)) may be inserted (or embedded) in the page. One workspace may include a plurality of pages. The collaborative office application integrates functions of a plurality of applications into one application in a form of components. The user does not need to start an application that provides a specified function, and the specified function may be used in the collaborative office application in a form of a component. Different users may collaborate with each other on a same page in real time.

The icon 202B of the collaborative office application shown in FIG. 2A may receive an input operation (for example, a touch operation) of the user. In response to the input operation, the terminal device 100 may display a user interface 18 of the collaborative office application shown in FIG. 6A. As shown in FIG. 6A, the user interface 18 of the collaborative office application includes a navigation area and a workspace display area. The navigation area includes project names (for example, a project name 401, namely, "XX3") of one or more projects.

As shown in FIG. 6A and FIG. 6B, in response to an input operation 1 (for example, a touch operation) on the project name 401, the terminal device 100 may expand and display, in the navigation area, page navigation of a project corresponding to the project name 401, namely, page identifiers of pages (for example, a ZZ1 page, a ZZ1 page, and a ZZ3 page) inserted in the project and component identifiers of components inserted in the pages. The ZZ1 page is used as an example. The terminal device 100 displays a page identifier 402 of the page in the navigation area. The page identifier 402 may include a page icon 402A and/or a page name 402B (for example, ZZ1) of the page. The terminal device 100 further displays, in the navigation area, a component identifier 404 of an Excel component 403 inserted in the page. The component identifier 404 may include a component icon 404A and/or a component name 404B of the component. The component name may be a name, namely, "Project schedule", of an Excel table 1 displayed in the Excel component 403.

It may be understood that the ZZ1 page, the ZZ1 page, and the ZZ3 page shown in FIG. 6A are all pages inserted in a workspace of an XX3 project in the collaborative office application. The user may insert a new page in or delete an existing page from the workspace of the XX3 project. For example, a specified page (for example, the ZZ3 page) in the collaborative office application may also be used as a page component for component management.

As shown in FIG. 6B, in response to the input operation 1 on the project name 401, the terminal device 100 may further display page content (for example, the project schedule displayed via the Excel component 403) of the ZZ1 page in the workspace display area. The user may view more content of the ZZ1 page through an upward/downward slide operation.

In some embodiments, when it is detected that the Excel component 403 receives an input operation 2 (for example, a double-tap operation) of the user, the Excel component may enter an editing state. In the editing state, the user may edit display content of the Excel table 1 displayed in the Excel component 403. In an implementation, different users may simultaneously edit the display content of the Excel component 403. For a cell in the Excel table 1 displayed in the Excel component 403, the terminal device 100 may display, in the cell, a user identifier (for example, a user nickname "Henry" shown in FIG. 6B) of a user who is editing the cell, or display, in the cell, a user identifier (for example, a user nickname "Lily" shown in FIG. 6B) of a user who recently edits the cell. In this way, the user of the terminal device 100 can view in real time which content of the Excel component 403 is being edited or edited by another user.

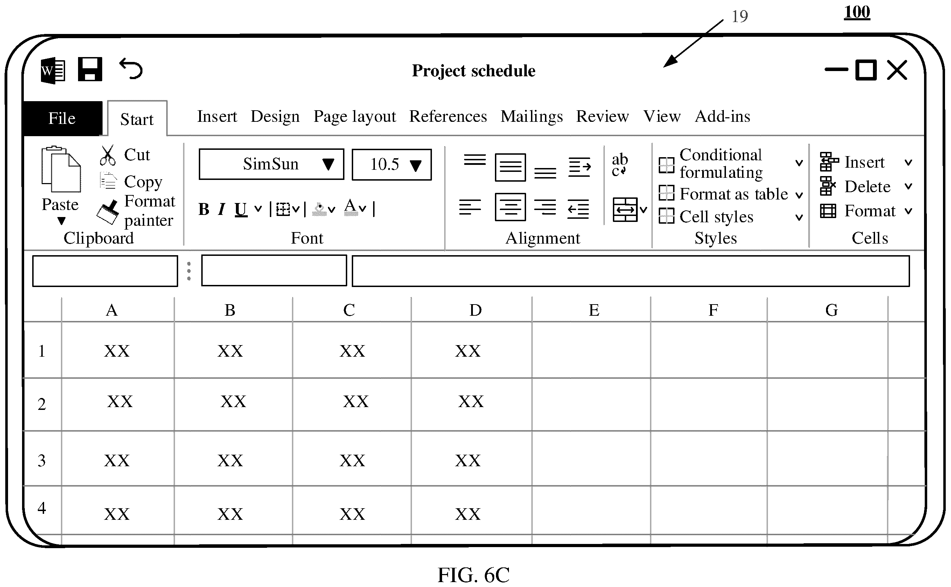

In some embodiments, as shown in FIG. 6B and FIG. 6C, when it is detected that the Excel component 403 receives an input operation 3 (for example, a touch and hold operation) of the user, the terminal device 100 invokes the Excel application, and displays the Excel table 1 through a user interface 19 of the Excel application.

In an implementation, an original file of the Excel table 1 displayed in the Excel component 403 is an Excel table stored locally or online. The Excel component 403 is associated with a storage path (for example, a local storage path or an online-stored URL (uniform resource locator, uniform resource locator) link) of the table. When the input operation 3 on the Excel component 403 is detected, the collaborative office application invokes the Excel application, and sends the storage path to the Excel application. The Excel application obtains table data of the original file through the storage path, and displays the Excel table 1 in the Excel application based on the table data. Optionally, after the user edits the Excel table 1 displayed in the Excel component 403, the terminal device 100 may update the table data of the original file of the Excel table 1 based on updated data of the Excel table 1, to ensure data synchronization between the Excel table 1 and the original file. The update manner may be periodic update, or may be update performed when table data of the Excel table 1 changes. Optionally, the Excel component 403 may obtain the table data of the original file indicated by the storage path, to update the display content of the Excel table 1 in the Excel component 403, so as to ensure data synchronization between the Excel table 1 and the original file. Similarly, the update manner may be periodic update, or may be update performed when the table data of the original file changes.

It may be understood that the user may insert a same component (for example, the Excel component 403) in different pages, and different users may edit, on the different pages, the Excel table 1 displayed in the Excel component 403. To ensure synchronization of the display content of the Excel components 403 on the different pages, the table data of the Excel table 1 and the table data of the original file need to be updated in time.

In another implementation, when the input operation 3 on the Excel component 403 is detected, the collaborative office application invokes the Excel application, and directly sends the table data of the Excel table 1 to the Excel application. The Excel application displays the Excel table 1 in the Excel application based on the table data.

In embodiments of this application, the input operation 2 used to trigger the Excel component to enter the editing state and the input operation 3 used to trigger invoking of the application 2 to display component content are not specifically limited.

It may be understood that, usually, the Excel component in the collaborative office application provides only some functions, for example, a simple editing operation (for example, inputting, deleting, copying, or pasting), of the Excel application, and does not provide functions such as adjusting a font format, inserting a formula, and adjusting a table style. When editing the Excel table 1 displayed in the Excel component 403, if the user needs to experience more functions, the user may invoke the Excel application, and the Excel table 1 may be displayed and edited by using the Excel application.

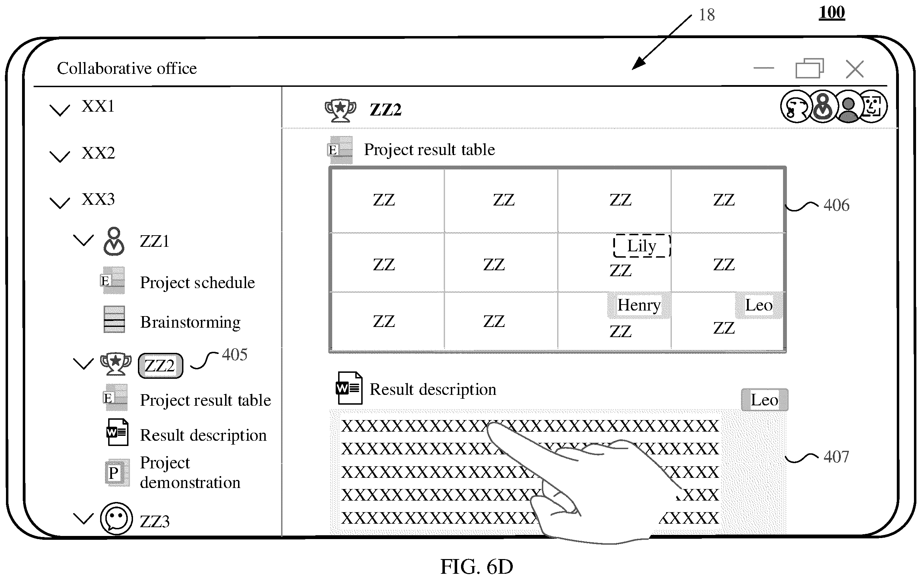

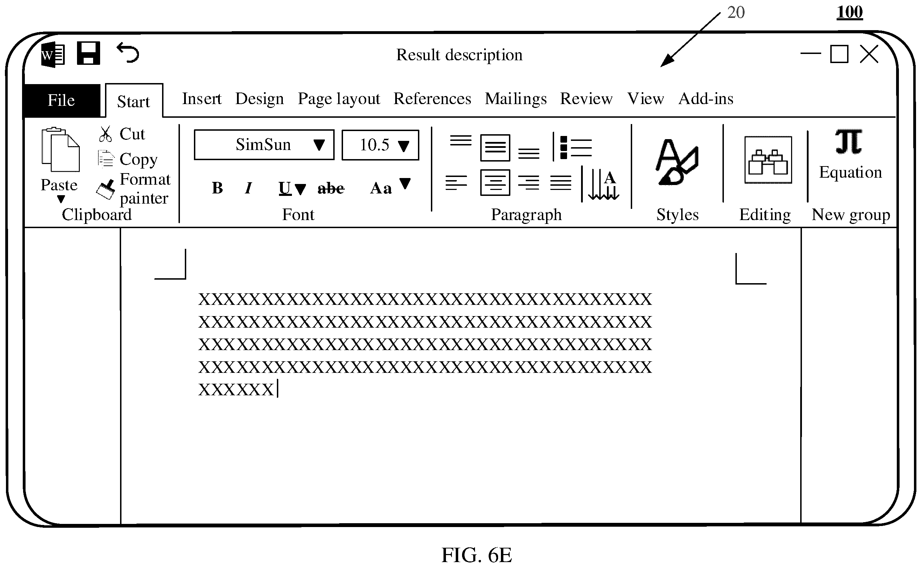

A Word component is used as an example. FIG. 6D and FIG. 6E are diagrams of user interfaces of invoking, by the user in the collaborative office application, a Word document provided by the Word application.

As shown in FIG. 6B and FIG. 6D, a page identifier 405 of the ZZ2 page may receive an input operation of the user. In response to the input operation, the terminal device 100 displays page content, for example, an Excel component 406 and a Word component 407, of the ZZ2 page in the workspace display area.

In some embodiments, when it is detected that the Word component 407 receives an input operation 3 (for example, a double-tap operation) of the user, the Word component may enter an editing state. In the editing state, the user may edit display content of the Word document displayed in the Word component 407.

In some embodiments, as shown in FIG. 6D and FIG. 6E, when it is detected that the Word component 407 receives an input operation 4 (for example, a touch and hold operation) of the user, the terminal device 100 invokes the Word application, and displays the Word document through a user interface 20 of the Word application. Specifically, for an implementation of invoking the Word application and updating the display content of the Word component 407, refer to related descriptions of the Excel component 403. Details are not described herein again.

Similarly, the Word component in the collaborative office application provides only some functions of the Word application. To experience more functions, the Word application may be invoked, and the Word document in the Word component is displayed and edited by using the Word application.

In conclusion, when the user uses, in the application 1, the component provided by the application 2, the component usually provides only some functions of the application 2. The user may invoke the application 2 via the component, and related content of the component is displayed in the application 2, to experience more functions of the application 2.

When the terminal device 100 displays a first page that is of a first application and that includes a first component, a display interface is switched to a second page of the first application. Then, after using the first application, the user usually switches the display interface of the terminal device 100 to a desktop, the recent tasks screen, or an interface of another application. The first application may be switched to the background for running.

After the user uses the first application on the terminal device 100, or when the terminal displays the first page including the first component, the user usually switches the display interface of the terminal device 100 to the desktop, the interface of the another application, or the second page of the same application. The first application may be switched to the background for running. Refer to FIG. 2B and FIG. 2C. An existing mainstream operating system, for example, Windows, Android, or iOS, usually use the recent tasks screen to display these applications running in the background. The user may enter, by tapping an application identifier of the first application on the recent tasks screen, a location at which the application is last displayed (or last operated by the user). The location is not necessarily a location at which the user expects the first application to be displayed. The user may want to view a specific component in the first application. Optionally, the specific component may be a component used for the last time in the application/a component of a specific type, for example, the first component on the first page.

For example, refer to FIG. 3A to FIG. 3D. After the user uses the moments page in the instant messaging application, the terminal device 100 receives at least one input touch operation and may return to the home page of the instant messaging application, or displays a user interface of a second application and switches the instant messaging application to the background for running after receiving at least one touch input. Refer to FIG. 2C. On the recent tasks screen 21 invoked by the user, an interface snapshot in the application identifier 205 of the instant messaging application may be a screenshot of the home page (an exit interface of the instant messaging application). After the user taps the application identifier 205, the terminal device 100 displays the home page of the instant messaging application. If the user intends to view the moments page again, the user may enter the home page of the instant messaging application by tapping the application identifier 205 of the instant messaging application on the recent tasks screen 21 or the icon 202A of the instant messaging application on the home screen 11, and then tap the discover page option 304 and the moments entry 305 in sequence. Consequently, an operation is complex, and user experience is poor.

It may be understood that, when managing the background applications and displaying the background applications through the recent tasks screen, the mainstream operating system performs management in a dimension of the applications, and one application corresponds to one application identifier. The terminal device 100 cannot quickly locate a location of a specific component in the application through the recent tasks screen. After entering the application 1 by tapping an application identifier on the recent tasks screen, the user still needs to perform a plurality of operations such as page turning, sliding, and searching on a plurality of pages and a single page of the application 1, to find a specific component that the user wants to view. Consequently, an operation is inconvenient, and user experience is poor.

Embodiments of this application provide the interface display method. Through implementation of embodiments of this application, for the specific component (for example, the component 1) in the application 1, a component label of the component 1 is provided on a component management interface (for example, the recent tasks screen). Through a preset operation 1 performed on the component label, a location of the component 1 in the application 1 can be quickly located, or the component may be displayed in the application 1. For example, the component 1 is inserted in a long page, and in response to the preset operation 1, a location of the component 1 on the long page may be directly located. For example, the component 1 is a page component, and in response to the preset operation 1, a page corresponding to the component may be directly displayed. Through a preset operation 2 performed on the component label, the application 2 associated with the component 1 may be invoked, and content of the component is displayed in the application 2. In this way, the component can be quickly located, a complex user operation can be avoided, and user experience can be effectively improved.

It should be noted that the component management interface may be a recent tasks screen, or may be another user interface, for example, a leftmost screen or a notification bar drop-down interface. For example, the terminal device 100 displays the application 1, receives at least one touch gesture input by the user, and opens the leftmost screen or the notification bar drop-down interface. It should be understood that, in subsequent embodiments, the recent tasks screen is mainly used as an example for description, but does not indicate a limitation on the component management interface.

In some embodiments, to facilitate component management of each application, component management (for example, component locating) is performed only on a component in a component management trustlist of each application (for example, the application 1). The component management trustlist may be set by the terminal device 100 by default, may be set by each application by default, or may be set by the user. This is not specifically limited herein. In a subsequent embodiment, how the user sets the component management trustlist is specifically described. Details are not described herein.

With reference to accompanying drawings, the following describes the interface display method provided in embodiments of this application.

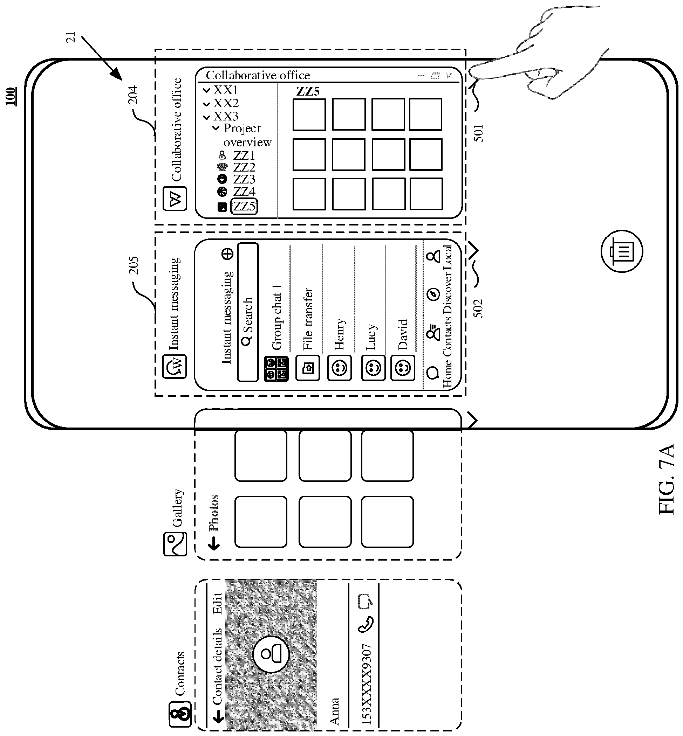

For example, FIG. 7A shows a recent tasks screen 21 that can implement a component locating function according to an embodiment of this application.

As shown in FIG. 7A, the recent tasks screen 21 further includes extend controls, for example, an extend control 501 corresponding to an application identifier 204 of a collaborative office application, and an extend control 502 corresponding to an application identifier 205 of an instant messaging application, corresponding to application identifiers of all applications.

In some embodiments, a contacts application is used as an example. When an application does not have a component on which component locating can be performed, the recent tasks screen 21 may not include an extend control corresponding to an application identifier of the application.

The extend control 501 of the collaborative office application is used as an example for description.

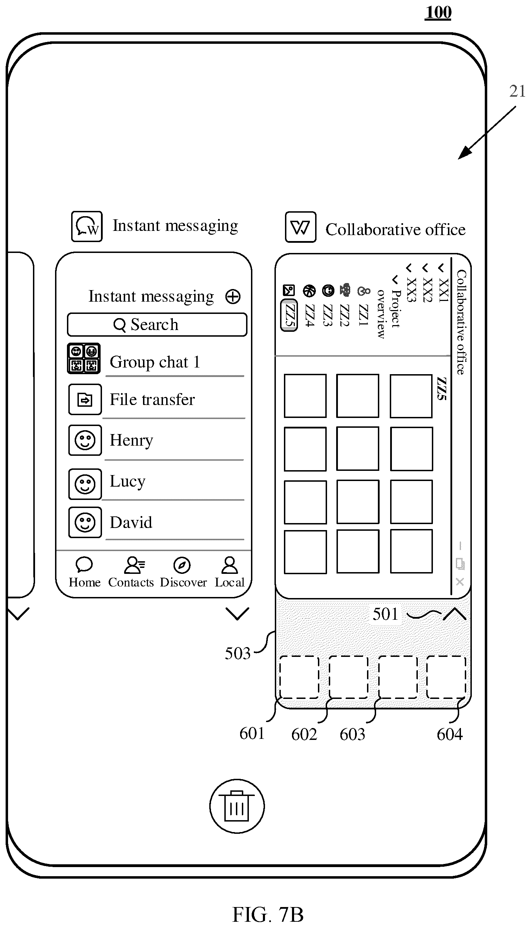

As shown in FIG. 7A and FIG. 7B, the extend control 501 may receive an input operation (for example, a touch operation) of a user, and in response to the input operation, the terminal device 100 displays, in a component label display area 503 of the collaborative office application, component labels, for example, a component label 601 to a component label 604, of components that are in the collaborative office application and on which component locating can be performed. Refer to FIG. 7B. The component labels of the components are displayed in an arrangement form of one row and four columns.

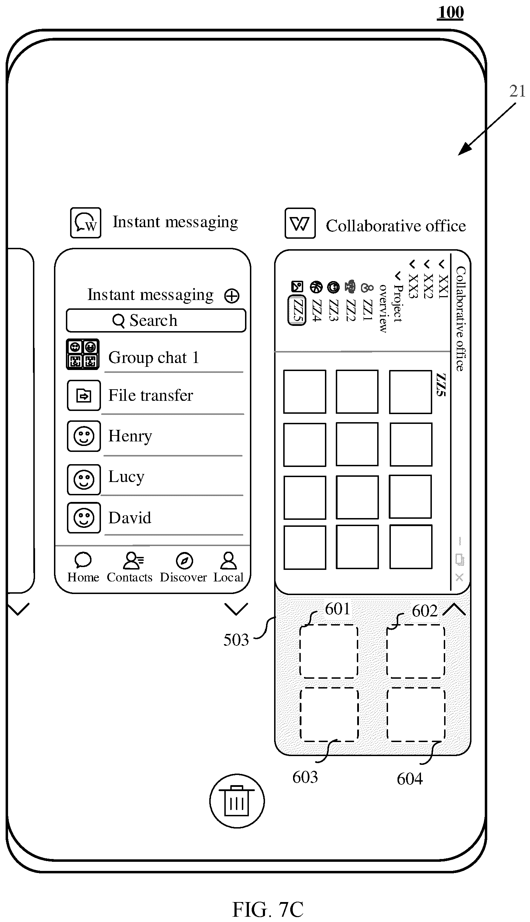

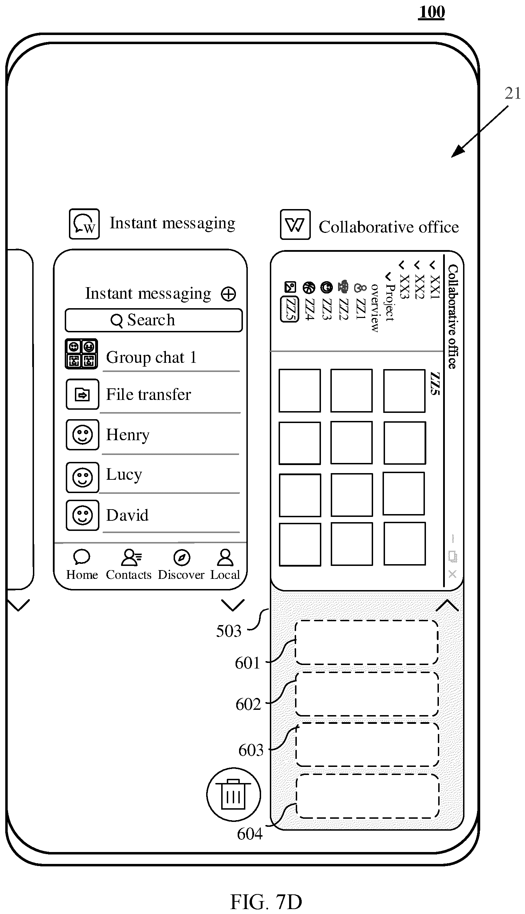

An arrangement manner of the component labels of the components in the component label display area 503 is not specifically limited in embodiments of this application. For example, FIG. 7C and FIG. 7D show another two arrangement manners according to an embodiment of this application. In FIG. 7C, the component labels of the components are displayed in an arrangement form of two rows and two columns. In FIG. 7D, the component labels of the components are displayed in an arrangement form of four rows and one column.

A shape of a component label of each component in the component label display area 503 is not specifically limited in embodiments of this application either. For example, the component labels in FIG. 7B and FIG. 7C are shown as squares, and the component labels in FIG. 7D are shown as rectangles. For example, in a scenario like a PC or a foldable display, the component is usually displayed as a rectangle, and correspondingly, the component label of the component is also displayed as a rectangle.

It may be understood that, with reference to FIG. 7A to FIG. 7D, compared with that in directly displaying component labels of components invoked in all the applications, page neatness can be maintained by triggering, via the extend control corresponding to the application identifier of the application, the terminal device 100 to display a component label of a component invoked in the application.

In some embodiments, the collaborative office application currently includes M components on which component locating can be performed, where M is a positive integer. Component labels of a maximum of a preset quantity of components are displayed in the component label display area 503. When M exceeds the preset quantity, the user may view component labels of more components through a slide operation performed on the component label display area 503.

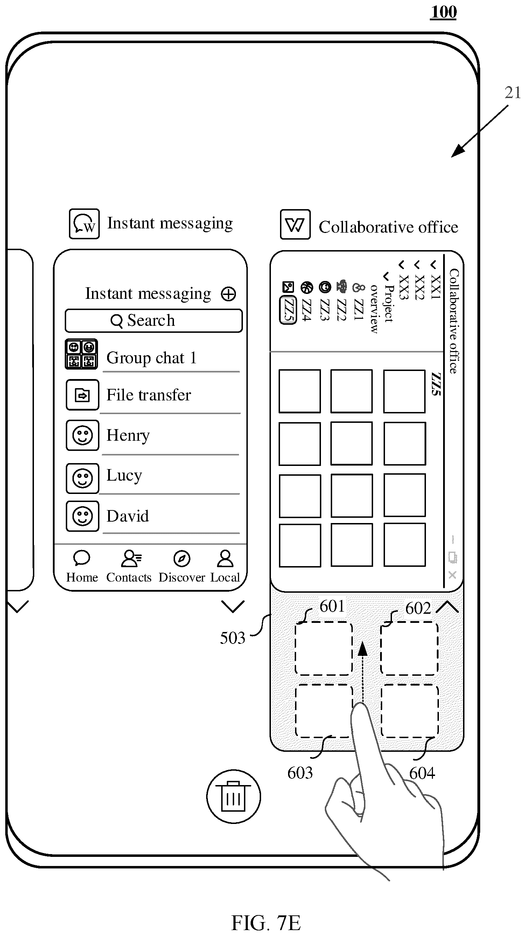

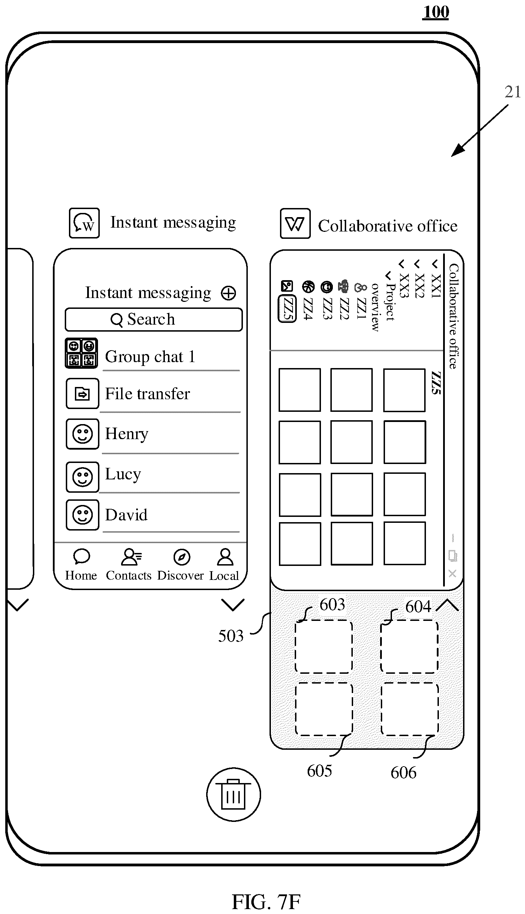

For example, the preset quantity is four, and a quantity of components on which component locating can be performed exceeds four. As shown in FIG. 7E and FIG. 7F, when an upward slide operation performed on the component label display area 503 is detected, the terminal device 100 displays the component labels, for example, a component label 605 and a component label 606, of the more components in the component label display area 503.

In some embodiments, after the terminal device 100 displays the component label of the component in the component label display area 503, in response to an input operation (for example, a touch operation) on the extend control 501, the terminal device 100 may stop displaying the component label of the component in the component label display area 503. For example, after the user taps the extend control 501 shown in FIG. 7B, the terminal device 100 displays the recent tasks screen 21 shown in FIG. 7A.

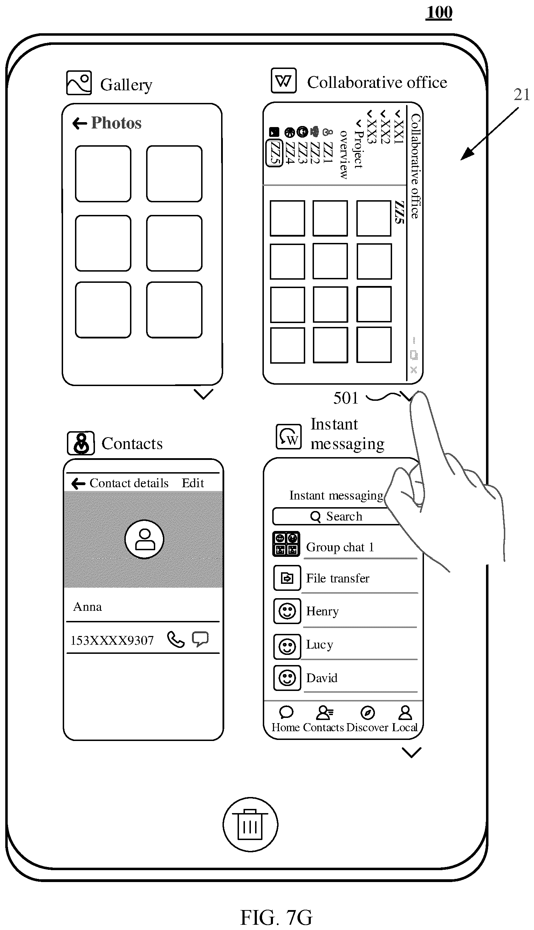

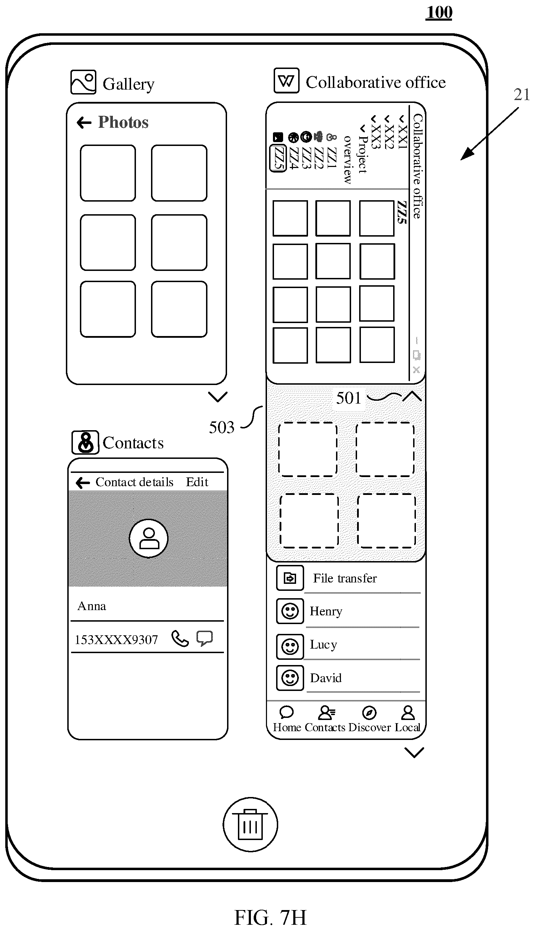

In some embodiments, as shown in FIG. 7G and FIG. 7H, for a two-row and multi-column recent tasks screen 21 shown in the figures, in response to an input operation (for example, a touch operation) on the extend control 501 corresponding to an application identifier (namely, the application identifier of the collaborative office application) in a first row, the component label display area 503 displayed by the terminal device 100 may cover an application identifier (namely, the application identifier of the instant messaging application) in a second row.

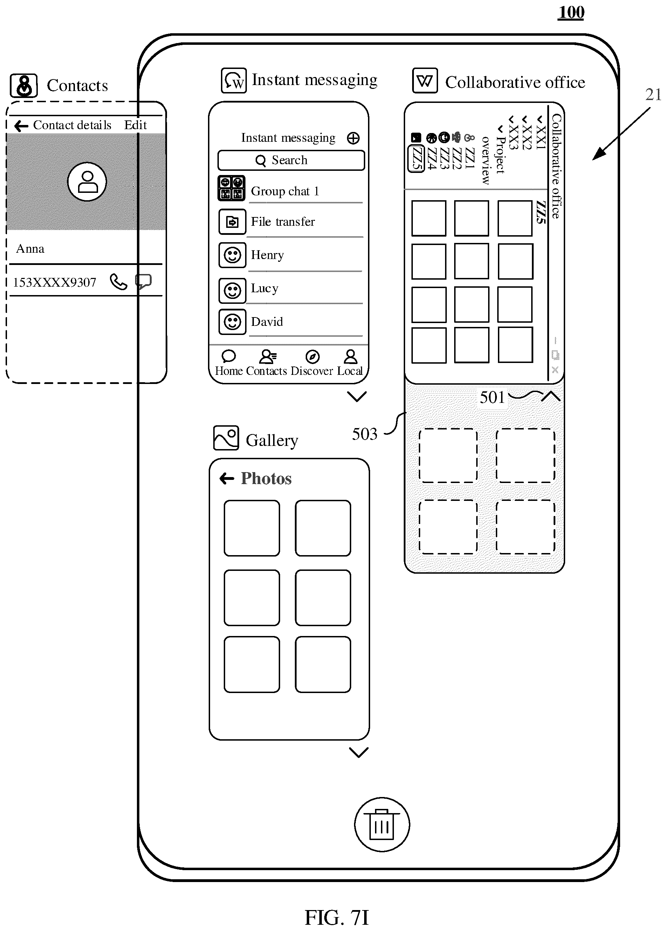

In some embodiments, as shown in FIG. 7G and FIG. 7I, for a two-row and multi-column recent tasks screen 21 shown in the figures, in response to an input operation (for example, a touch operation) on the extend control 501 corresponding to an application identifier (namely, the application identifier of the collaborative office application) in a first row, the component label display area 503 displayed by the terminal device 100 may squeeze an application identifier (namely, the application identifier of the instant messaging application) in a second row to another location (for example, a location at which an application identifier of a next application in a multi-task queue is displayed).

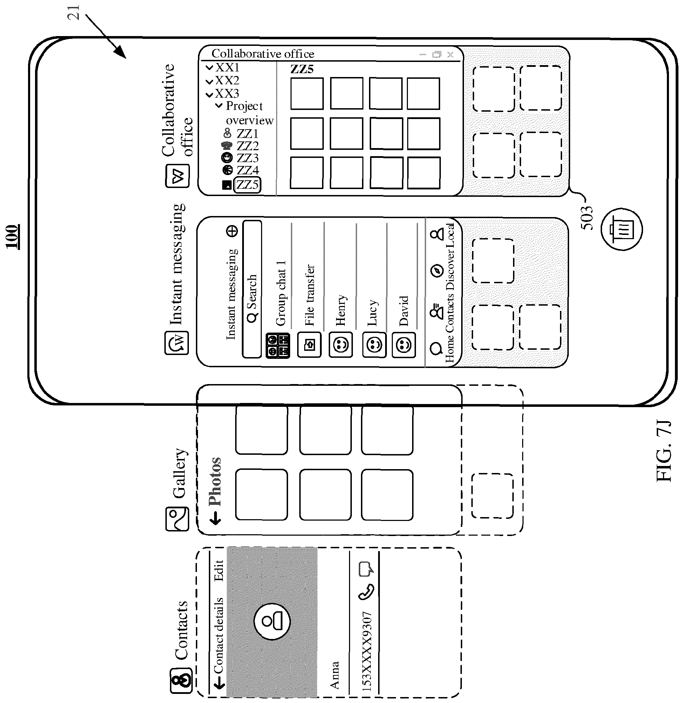

In some embodiments, a component label of a component corresponding to each application identifier may be directly displayed on the recent tasks screen 21 invoked by the terminal device 100. A recent tasks screen 21 shown in FIG. 7J is used as an example. No extend control is required. In a component label display area (for example, a component label display area 503) corresponding to an application identifier of any application on the recent tasks screen 21, a component label of a component on which component locating can be currently performed in the application may be directly displayed. It should be noted that, when an application (for example, the contacts application) currently does not have a component on which component locating can be performed, a component label of a component corresponding to the application is not displayed on the recent tasks screen 21.

The following uses the collaborative office application as an example to describe the M components that is in the application and on which component locating can be currently performed.

In some embodiments, the M components include all components in a component management trustlist 1 of the collaborative office application.

In some embodiments, the M components include a component that is used by the user during latest running of the collaborative office application and that belongs to a component management trustlist 1.

In some embodiments, the M components include a component that is used by the user within preset duration 1 (for example, one day) and that belongs to a component management trustlist 1.

In some embodiments, the M components include M components most frequently used in components that are used by the user within preset duration 2 (for example, one month) and that belong to a component management trustlist 1.

In some embodiments, for a same component (for example, the component 1) that is inserted in a same page for a plurality of times, component locating is performed only on the component 1 that is last used by the user on the page.

The following describes an arrangement order of the M components.

In some embodiments, the arrangement order of the M components is determined based on latest use time points of the M components and/or use frequencies of the M components. It may be understood that there is a high probability that a component that the user intends to view is "a recently used component or a component with high usage". Arrangement is performed based on the latest use time points and/or the use frequencies, to help the user quickly find the component that the user intends to view.

In an implementation, the arrangement order of the M components is a reverse order of the latest use time points of the M components, that is, a component that is most recently used in the M components is ranked first. For example, refer to FIG. 7B to FIG. 7D. The component label 601, a component label 602, a component label 603, and the component label 604 respectively correspond to the component 1, a component 2, a component 3, and a component 4. A sequence of latest use time points of the four components is the component 4, the component 3, the component 2, and the component 1.

In an implementation, the arrangement order of the M components is a positive order of the use frequencies of the M components. To be specific, a component with a highest use frequency is ranked first. For example, refer to FIG. 7B to FIG. 7D. The component label 601, a component label 602, a component label 603, and the component label 604 respectively correspond to the component 1, a component 2, a component 3, and a component 4. The four components are the component 1, the component 2, the component 3, and the component 4 in descending order of use frequencies.

In an implementation, first m components in the M components are m components most recently used in the M components, and are in an arrangement order that is a reverse order of latest use time points of the m components. An arrangement order of last M-m components in the M components is a positive order of use frequencies of the M-m components. For example, m is 4. The arrangement order of the M components is not specifically limited in embodiments of this application.

It should be noted that, for a type-A insert-type component (for example, a vote component 308, a music player component 310, an Excel component 403, or a Word component 407), a latest use time point of the component may be a time point of last responding to a valid operation of the user or a time point of exiting an editing state. For a type-B page component (for example, a moments page 14), a latest use time point of the component may be a time point at which the moments page is switched to another page (for example, returned to a discover page 13, exited to a home screen 11, or switched to a user interface of another application).

The following uses the component 1 as an example to describe display content of a component label of a component.

In an embodiment of this application, the component label of the component 1 may include a component identifier of the component 1, and may further include one or more of the following: a page identifier of a page on which the component 1 is located (if the component 1 is an insert-type component), an application identifier of the application 2 associated with the component 1, and a working area identifier of a working area in which the component 1 is located. The component identifier includes one or more of the following: a component name, a component snapshot, and a component icon corresponding to a component type. The page identifier includes a page icon and/or a page name. The application identifier includes an application icon and/or an application name. The working area identifier includes a working area icon and/or a working area name. The following separately provides descriptions.

The component identifier includes the following.

Component name: For example, a component name of the moments page 14 may be "Moments", a component name of the vote component 308 may be a vote title "Vote for tourism" of the component, a component name of the music player component 310 may be a name "AAA" of a song played by the component, a component name of the Excel component 403 may be a file name "Project schedule" of an Excel table displayed in the component, and a component name of the Word component 407 may be a file name "Result description" of a Word document displayed in the component. In an implementation, the component name of the component may alternatively be a component type corresponding to the component. A component type of the music player component 310 is a music player component, and a component type of the vote component 308 is a vote component. Component names of various types of components are not specifically limited in embodiments of this application.

Component snapshot: When determining that the user stops using a component, the terminal device 100 captures last display content of the component as a component snapshot of the component, and stores the component snapshot. It may be understood that each time the user uses a component, the terminal device 100 may update the component snapshot of the component. In an implementation, after the terminal device 100 responds to a valid operation of the user on the component 1 for the last time, if the component 1 does not receive a valid operation of the user again within preset duration 3, the terminal device 100 determines that the user stops using the component 1. In some embodiments, refer to FIG. 7A to FIG. 7D. The component label may be in a plurality of shapes. To adapt to the shape of the component label, the terminal device 100 may capture an image in a preset shape in the snapshot of the component as the component snapshot of the component. The preset shape is determined based on the shape of the component label.

Component icon: When the component does not have a specific component icon, an application icon of an application that provides the component may be obtained as the component icon. The component icon and the application icon may be the same or different. For example, a component icon of the moments page 14 may be a moments icon 305A shown in FIG. 3D, a component icon of the vote component 308 may be a vote icon 307A shown in FIG. 4D, a component icon of the music player component 310 may be a music icon 307B shown in FIG. 4D, a component icon of the Excel component 403 may be an application icon of an Excel application, and a component icon of the Word component 407 may be an application icon of a Word application. Component icons of the various types of components are not specifically limited in embodiments of this application.

The page identifier includes the following.

Page name: For example, in the instant messaging application, a page name of the moments page 14 may be "Moments", a page name of a chat page 15 of a group chat 1 may be a group chat name (for example, the group chat 1), and a page name of a chat page of a specified contact may be a nickname or a remark of the contact. In the collaborative office application, a ZZ1 page is used as an example. A page name of the ZZ1 page may be "ZZ1".

Page icon: For example, in the instant messaging application, a page icon of the moments page 14 may be the moments icon 305A shown in FIG. 3D, a page icon of the chat page 15 of the group chat 1 may be a group chat avatar 301A shown in FIG. 3B, and a page icon of the chat page of the specified contact may be an avatar of the contact. In the collaborative office application, the ZZ1 page is used as an example. A page icon of the ZZ1 page may be a page icon 402A shown in FIG. 6B. It may be understood that a component icon and a page icon of the page component (for example, the moments page 14) may be the same.

It should be noted that a same component inserted in different pages may be distinguished by using a page identifier (for example, a page name or a page icon) in a component label; and when a plurality of different components are inserted in a same page, page identifiers corresponding to the plurality of different components are the same.

Working area name: For example, in the collaborative office application, for an XX3 project, a working area name of the XX3 project may be a project name 401, namely, "XX3", shown in FIG. 6A. The working area name is not specifically limited in embodiments of this application.

It should be noted that a same component inserted in different working areas may be distinguished by using a working area identifier (for example, a working area name) in a component label; and when a plurality of different components are inserted in a same working area, working area identifiers corresponding to the plurality of different components are the same.

In some embodiments, the component label of the component includes an icon and/or a name. For example, the icon includes at least one of a component icon, a component snapshot, a page icon of a page on which the component is located, an application icon of an application that provides the component, or a working area icon of a working area in which the component is located. The name may include at least one of a component name, a page name of the page on which the component is located, an application name of the application that provides the component, or a working area name of the working area in which the component is located.

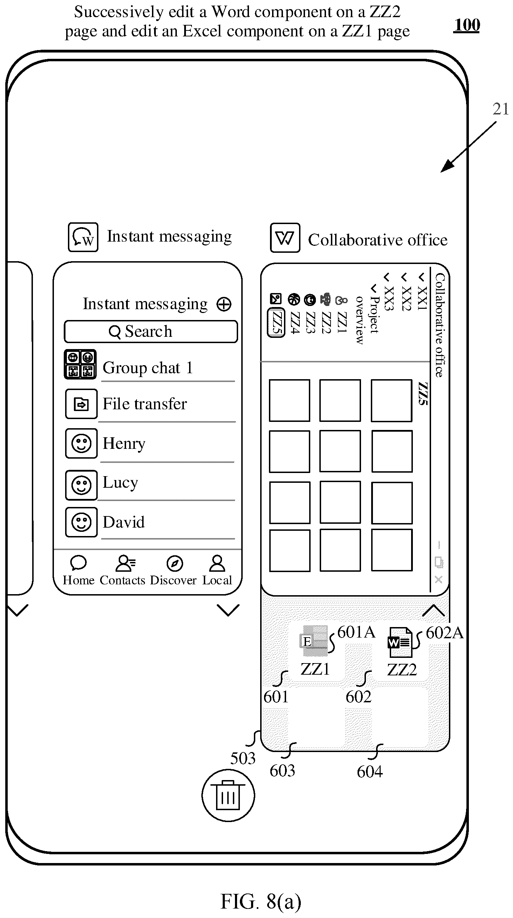

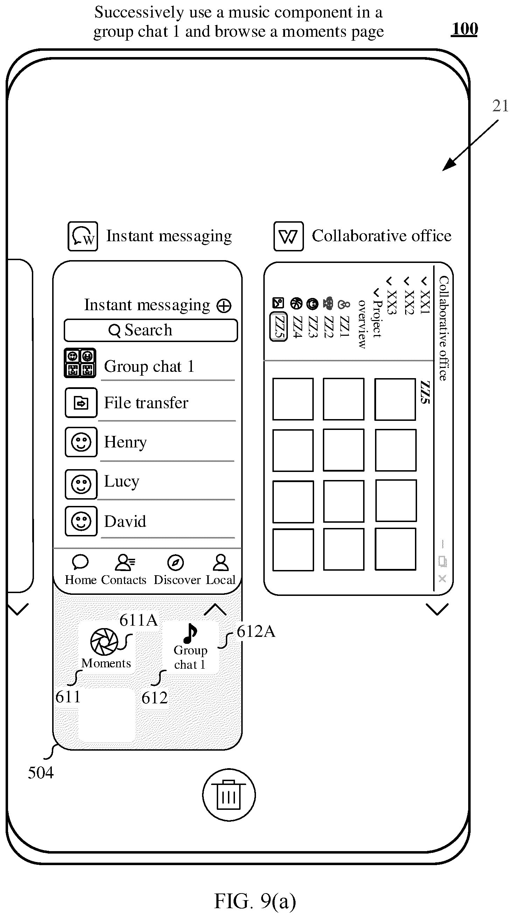

For example, refer to FIG. 8(a) to FIG. 8(e). Before exiting the collaborative office application, the user successively edits the Word component 407 on a ZZ2 page and the Excel component 403 on the ZZ1 page. A recent tasks screen 21 shown in FIG. 8(a) to FIG. 8(e) includes the component label 601 of the Excel component 403 and the component label 602 of the Word component 407. Refer to FIG. 9(a) to FIG. 9(d). Before exiting the instant messaging application, the user successively uses the music player component 310 on the chat page 15 of the group chat 1 and browses the moments page 14. A recent tasks screen 21 shown in FIG. 9(a) to FIG. 9(d) includes a component label 611 of the moments page 14 and a component label 612 of the music player component 310.

In an implementation, the component label of the component includes the component icon and the page name of the page on which the component is located.

Refer to FIG. 8(a). The component label 601 of the Excel component 403 includes a component icon 601A of the Excel component 403 and the page name "ZZ1" of the ZZ1 page on which the Excel component 403 is located. The component label 601 of the Word component 407 includes a component icon 602A of the Word component 407 and a page name "ZZ2" of the ZZ2 page on which the Word component 407 is located. In this example, the component icon of the Excel component is the same as the application icon of the Excel application. This is merely an example, and should not constitute a limitation on embodiments of this application. The component icon of the Excel component may alternatively be different from the application icon of the Excel application. Similarly, this is true for the component icon of the Word component.

Refer to FIG. 9(a). The component label 611 of the moments page 14 includes a component icon 611A and a page name "Moments". The component label 612 of the music player component 310 includes a component icon 612A and a page name "Group chat 1". In this example, the music player component and the moments page component have specific component icons.

It may be understood that, if the component (for example, the moments page 14) is a page component, the page on which the component is located is the component; or if the component (for example, the Excel component 403) is a component inserted in a page 1, the page on which the component is located is the page 1.

In an implementation, the component label of the component includes the component snapshot and the page name of the page on which the component is located.

For example, before exiting the collaborative office application, the user further inserts the Excel component 403 in a ZZ3 page, and edits the Excel component 403 on the ZZ3 page. The recent tasks screen 21 shown in FIG. 8(a) to FIG. 8(e) further includes the component label 603 of the Excel component 403 on the ZZ3 page.

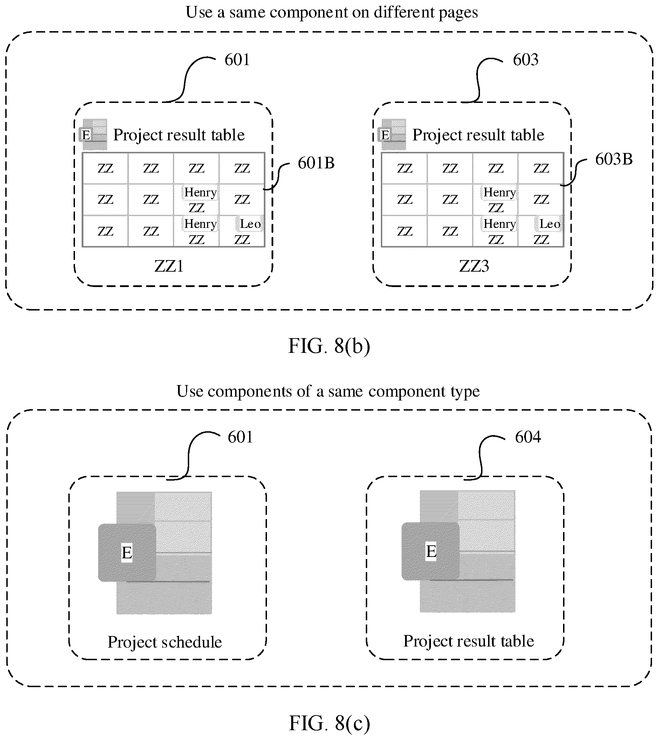

Refer to FIG. 8(b). A component snapshot 601B in the component label 601 of the Excel component 403 on the ZZ1 page is the same as a component snapshot 603B in the component label 603 of the Excel component 403 on the ZZ3 page. The component label 601 includes the page name "ZZ1", and the component label 603 includes a page name "ZZ3". It may be understood that a same Excel component on different pages may be synchronized, and has a same component snapshot. The user may distinguish, by using a page name, the same Excel component used on the different pages, and the page name helps the user quickly locate a specific component on a target page.

In an implementation, the component label of the component includes the component icon and the working area name of the working area in which the component is located.

In an implementation, the component label of the component includes the component icon and the component name.

For example, before exiting the collaborative office application, the user further edits an Excel component 406 on a ZZ2 page. The recent tasks screen 21 shown in FIG. 8(a) to FIG. 8(e) further includes the component label 604 of the Excel component 406.

Refer to FIG. 8(c). A component icon in the component label 601 of the Excel component 403 is the same as a component icon in the component label 604 of the Excel component 406. The component label 601 includes a component name "Project schedule", and the component label 604 includes a component name "Project result table". It may be understood that component icons of components of a same type are the same, and two components of a same type may be distinguished by using a component name.

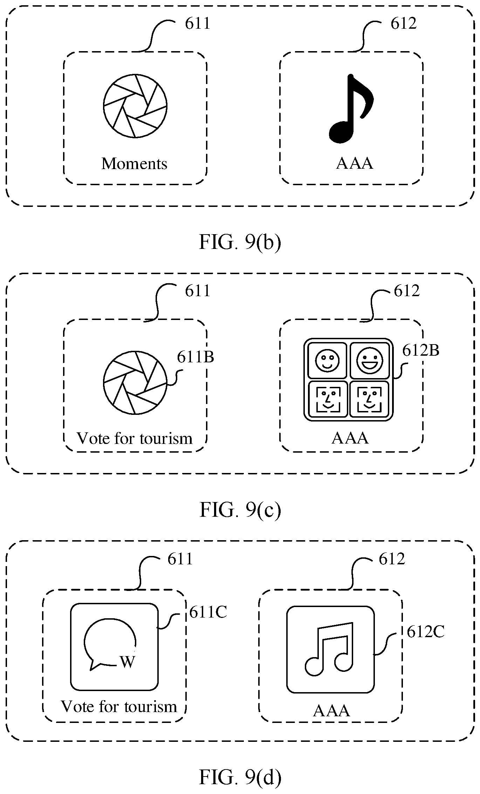

Refer to FIG. 9(b). The component label 611 of the moments page 14 includes a component name "Moments". The component label 612 of the music player component 310 includes a component name "AAA" (namely, a song name).

In an implementation, the component label of the component includes the component snapshot and the component name.

In an implementation, the component label of the component includes the page icon of the page on which the component is located and the component name.

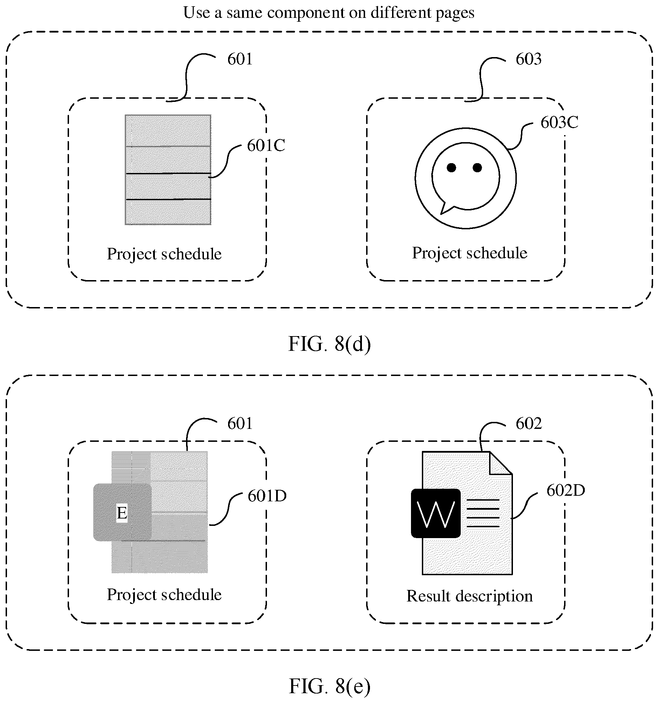

Refer to FIG. 8(d). The component label 601 of the Excel component 403 on the ZZ1 page and the component label 603 of the Excel component 403 on a ZZ3 page include a same component name "Project schedule". The component label 601 includes a page icon 601C of the ZZ1 page, and the component label 603 includes a page icon 603C of the ZZ3 page. It may be understood that a same Excel component on different pages has a same component name. The user may distinguish, by using a page icon, the same Excel component used on the different pages, and the page icon also helps the user quickly locate a specific component on a target page.

Refer to FIG. 9(c). The component label 611 of the moments page 14 includes a page icon 611B of the moments page. The component label 612 of the music player component 310 includes a page icon 612B of the chat page 15.

In an implementation, the component label of the component includes the application icon of the application that provides the component and the component name.

For example, refer to FIG. 8(e). The component label 601 of the Excel component 403 includes an application icon 601D of the Excel application. The component label 602 of the Word component 407 includes an application icon 602D of the Word application.

Refer to FIG. 9(d). The component label 611 of the moments page 14 includes an application icon 611C of the instant messaging application. The component label 612 of the music player component 310 includes an application icon 612C of a music application.

In some embodiments, for the component 1 used in the application 1, through the preset operation 1 performed on the component label of the component 1, the location of the component 1 in the application 1 may be quickly located, or the component may be displayed in the application 1. In some embodiments, through the preset operation 2 performed on the component label, the application 2 associated with the component 1 in the application 1 may be invoked, and a user interface (for example, the second content page in related descriptions of FIG. 5F) associated with the content of the component is displayed in the application 2. Alternatively, a user interface (for example, the first content page in related descriptions of FIG. 5E) of the component 1 may be opened in the application 1 through the preset operation 2 performed on the component label, and display content of the user interface is associated with the content of the component 1. In this way, when the user interface is exited, the application 1 may be directly returned to, and the application 2 does not need to be started, to avoid jumping between the applications.

It may be understood that, when the user opens the user interface of the component 1 in the application 1, the user interface can usually provide only some functions of the application 2. When the user intends to experience more functions of the application 2, the user may invoke the application 2 via the component, and edit related content of the component on the user interface displayed in the application 2.

It should be noted that, if the component 1 is a component provided by this application, that is, the component 1 is not associated with the application 2, the terminal device 100 may not respond to the preset operation 2 on the component label of the component 1.

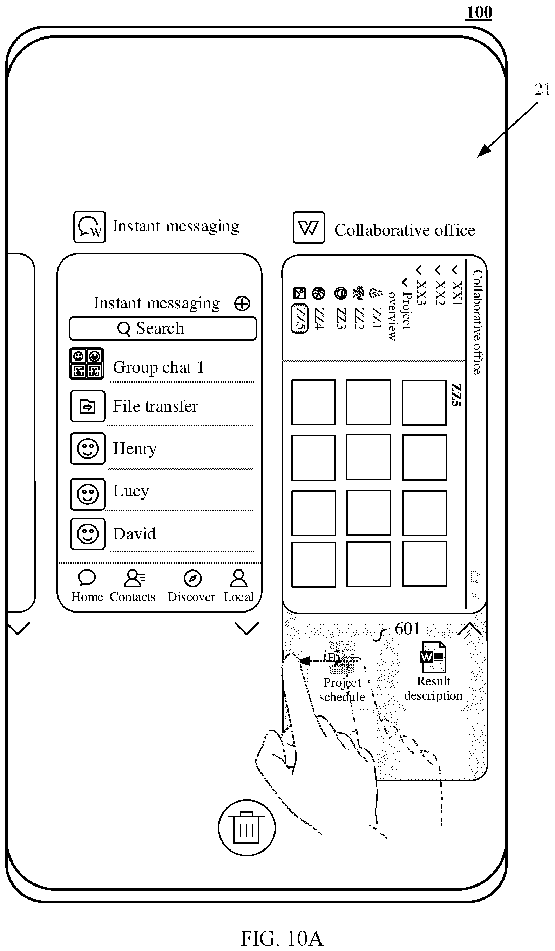

With reference to FIG. 10A to FIG. 10I, the following describes, by using examples, how to open pages through the preset operation 1 and the preset operation 2.

In some embodiments, the preset operation 1 is a leftward slide operation performed on the component label of the component 1, and the preset operation 2 is a rightward slide operation performed on the component label of the component 1. A component label 601 of an Excel component 403 shown in FIG. 10A is used as an example. The Excel component 403 is used to display "Project schedule".

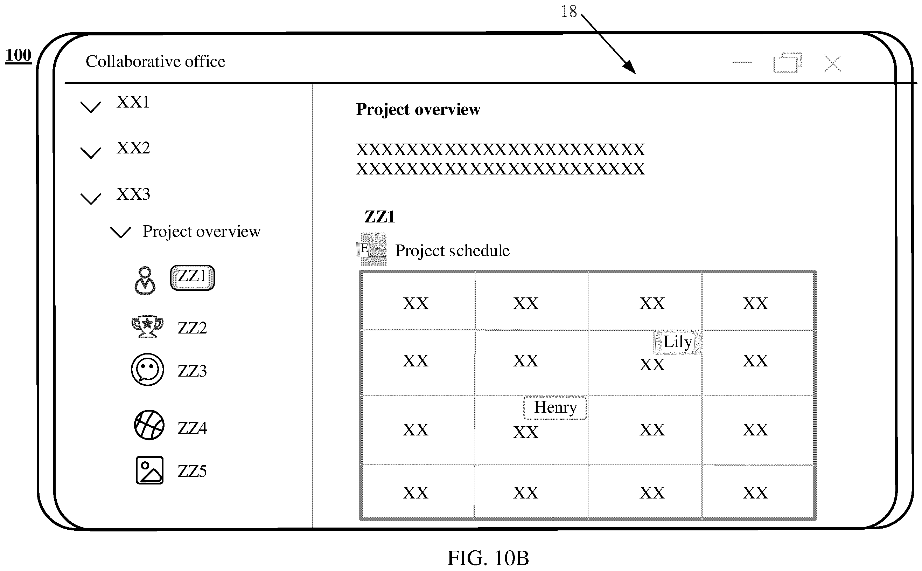

As shown in FIG. 10A and FIG. 10B, the component label 601 may receive a leftward slide operation. In response to the leftward slide operation, the terminal device 100 learns, through locating, that a location of the Excel component 403 is on a ZZ1 page of a collaborative office application, and displays a user interface 18 of the collaborative office application shown in FIG. 10B. The user interface 18 shown in FIG. 10B includes the ZZ1 page, and the ZZ1 page includes the Excel component 403.

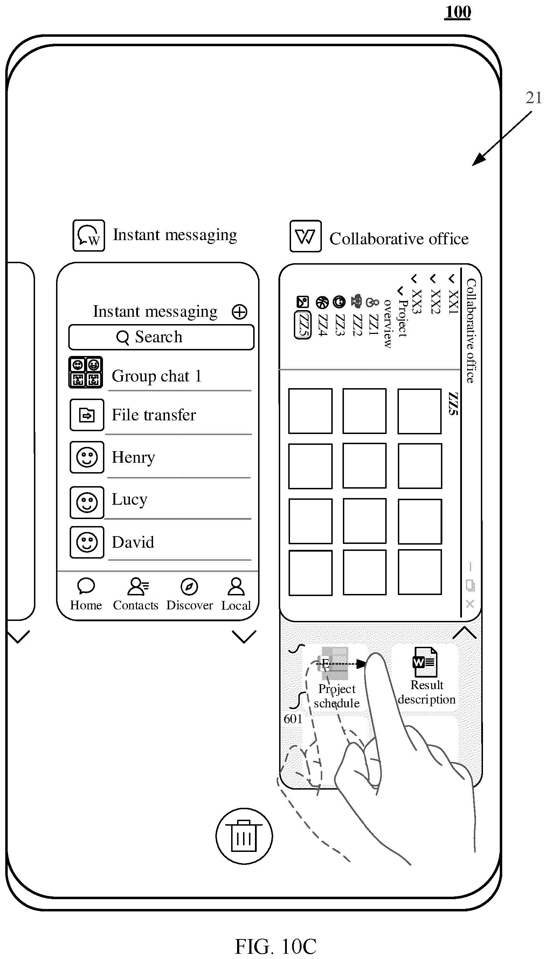

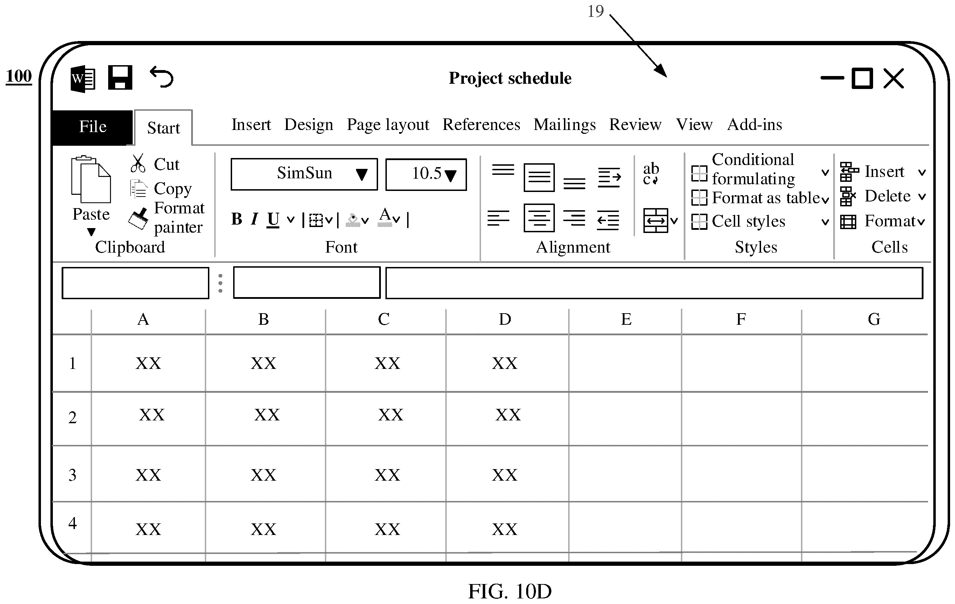

As shown in FIG. 10C and FIG. 10D, the component label 601 may receive a rightward slide operation. In response to the rightward slide operation, the terminal device 100 invokes an Excel application to open an Excel table displayed in the Excel component 403, and displays a user interface 19 of the Excel application shown in FIG. 10D. The user interface 19 is used to display "Project schedule".

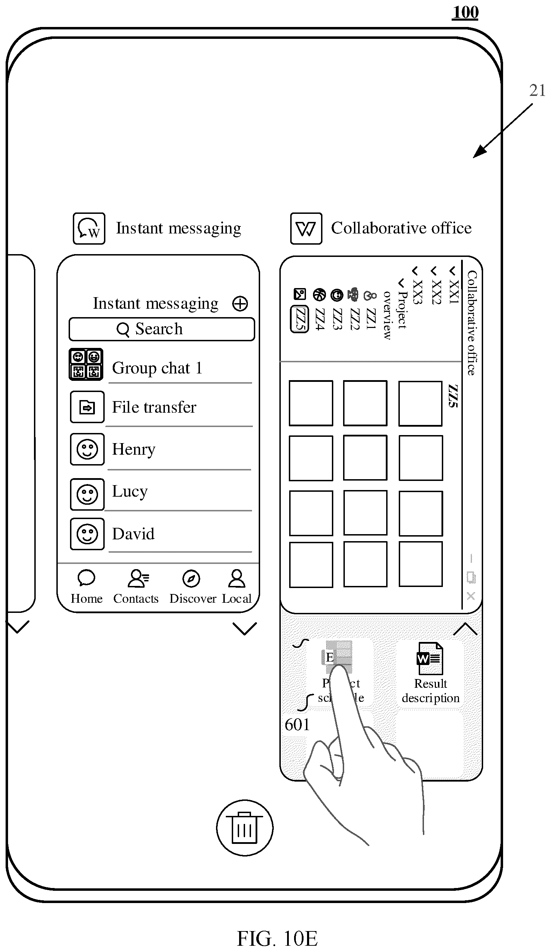

In some embodiments, when a touch operation performed by the user on the component label of the component 1 is detected, an application identifier of the application 1 and an application identifier of the application 2 are displayed. The preset operation 1 includes a slide operation from the component label of the component 1 to the application identifier of the application 1. The preset operation 2 includes a slide operation from the component label of the component 1 to the application identifier of the application 2. A component label 601 of an Excel component 403 shown in FIG. 10E is used as an example.

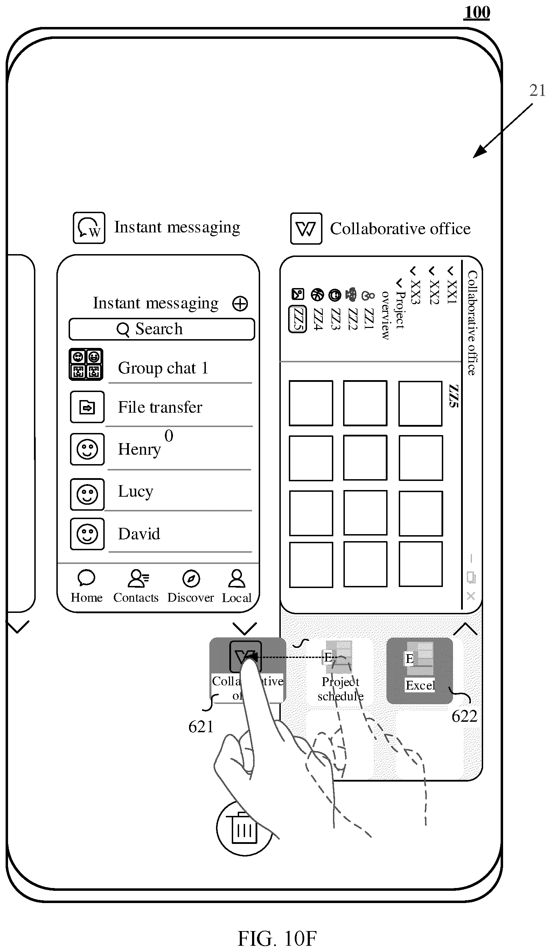

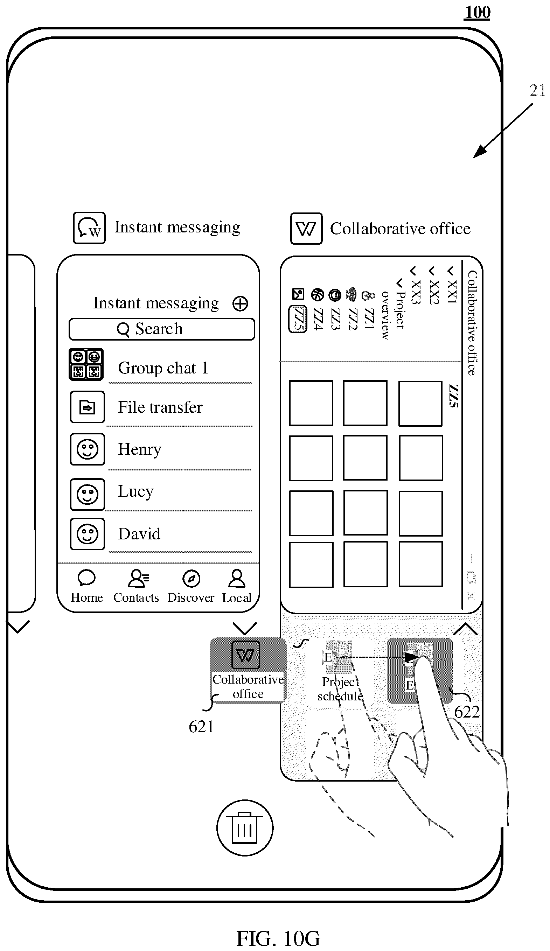

As shown in FIG. 10E and FIG. 10F (or FIG. 10G), the component label 601 may receive a touch operation of the user. In response to the touch operation, the terminal device 100 displays an application identifier 621 of a collaborative office application and an application identifier 622 of an Excel application.

As shown in FIG. 10E and FIG. 10F, the component label 601 may receive a slide operation of the user from the component label 601 to the application identifier 621. In response to the slide operation, the terminal device 100 locates a location of the Excel component 403, and displays the user interface 18 of the collaborative office application shown in FIG. 10B. As shown in FIG. 10E and FIG. 10G, the component label 601 may receive a slide operation of the user from the component label 601 to the application identifier 622. In response to the slide operation, the terminal device 100 invokes the Excel application, and displays the user interface 19 of the Excel application shown in FIG. 10D.

In some embodiments, when a touch and hold operation performed by the user on the component label of the component 1 is detected, the application identifier of the application 1 and the application identifier of the application 2 are displayed. The preset operation 1 includes a slide operation of touching and holding the component label of the component 1 and then dragging the component label to the application identifier of the application 1. The preset operation 2 includes a slide operation of touching and holding the component label of the component 1 and then dragging the component label to the application identifier of the application 1.

It may be understood that dragging the component label means that the component label moves along a sliding track of a slide operation of a finger of the user.

In some embodiments, when detecting the touch and hold operation performed on the component label of the component 1, the terminal device 100 may further display an application identifier of another application (for example, an application 3) that can use the component 1, without being limited to the application identifier of the application 1 and the application identifier of the application 2. The component 1 is shared with the application 3 when a preset operation (for example, a slide operation of dragging the component label to the application identifier of the application 3) performed on the application identifier of the application 3 is detected.

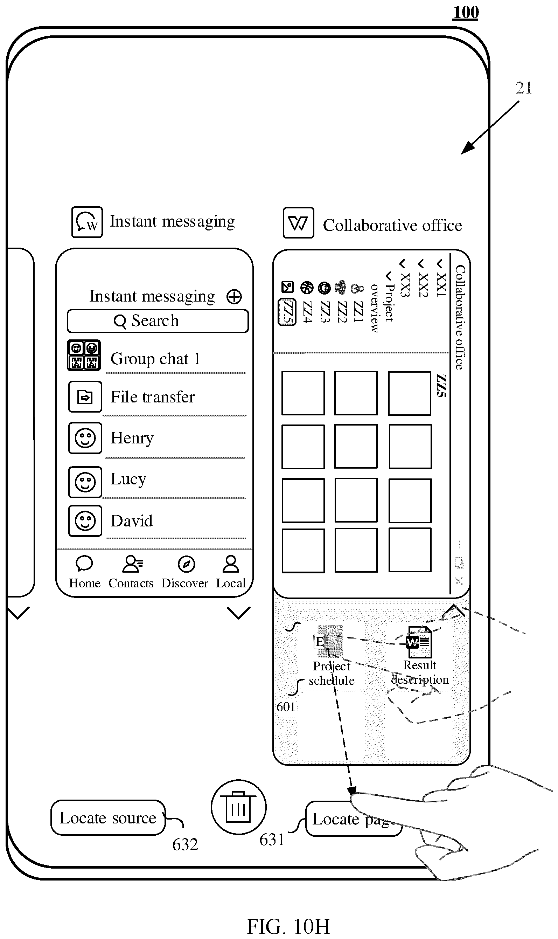

In some embodiments, the recent tasks screen further includes a locate source control and a locate page control. The preset operation 1 includes a slide operation from the component label of the component 1 to the locate page control. The preset operation 2 includes a slide operation from the component label of the component 1 to the locate source control. A component label 601 of an Excel component 403 shown in FIG. 10H is used as an example.

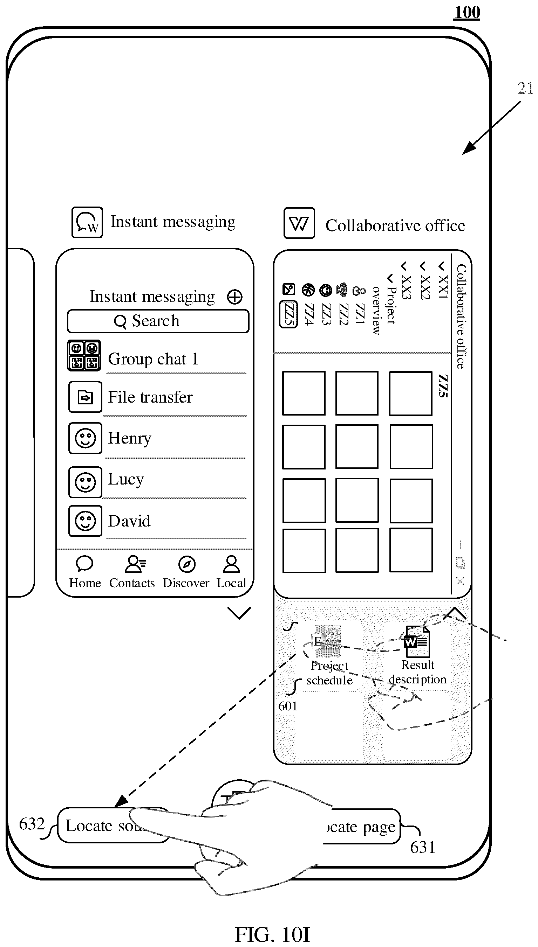

As shown in FIG. 10H and FIG. 10I, the recent tasks screen further includes a locate page control 631 and a locate source control 632.

As shown in FIG. 10H, the component label 601 may receive a slide operation of the user from the component label 601 to the locate page control 631. In response to the slide operation, the terminal device 100 locates a location of the Excel component 403, and displays the user interface 18 of the collaborative office application shown in FIG. 10B. As shown in FIG. 10I, the component label 601 may receive a slide operation of the user from the component label 601 to the locate source control 632. In response to the slide operation, the terminal device 100 invokes the Excel application, and displays the user interface 19 of the Excel application shown in FIG. 10D.

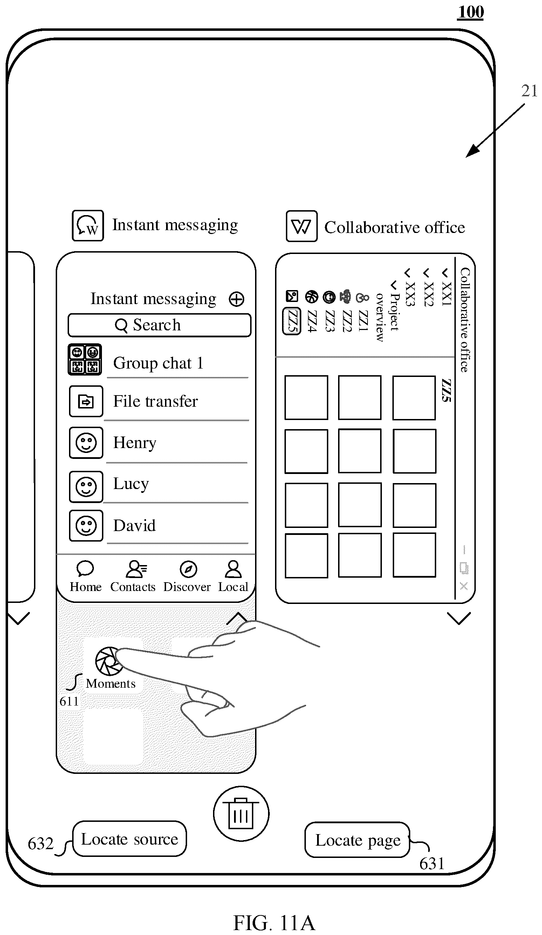

In some embodiments, if the component 1 is the component provided by this application, the terminal device 100 does not respond to the preset operation 2 on the locate source control. In an implementation, when detecting the touch operation performed on the component label of the component 1, the terminal device 100 may display the locate source control in gray, to indicate that the locate source control is unavailable. A component label 611 of a moments page 14 shown in FIG. 11A is used as an example.

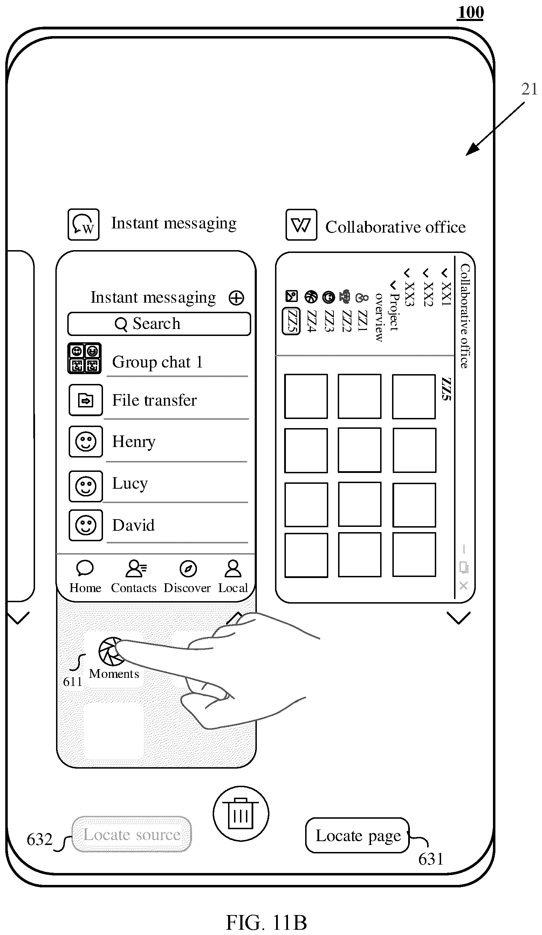

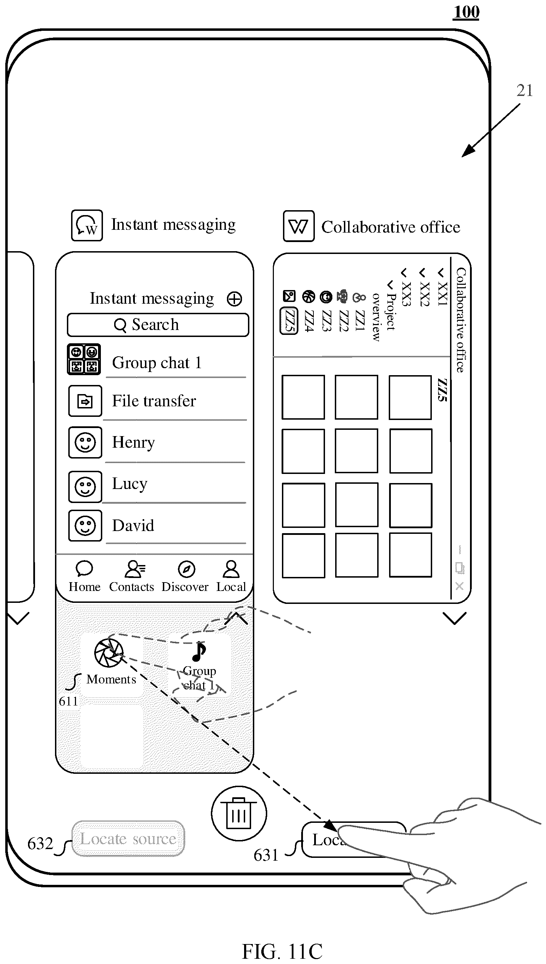

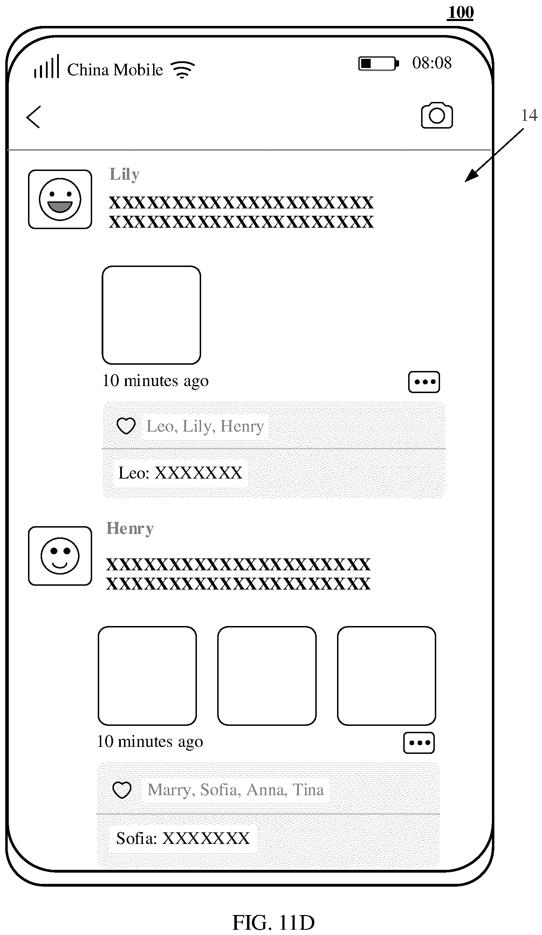

As shown in FIG. 11A and FIG. 11B, when detecting a touch operation performed on the component label 611, the terminal device 100 may display a locate source control 632 in gray, to indicate that the locate source control 632 is unavailable, that is, the moments page 14 is not associated with another application. As shown in FIG. 11C and FIG. 11D, the component label 611 may receive a slide operation performed by the user from the component label 611 to the locate source control 632. In response to the slide operation, the terminal device 100 locates a location of the moments page 14, and displays the moments page 14 in the instant messaging application.

In some embodiments, the preset operation 1 includes a slide operation of touching and holding the component label of the component 1 and then dragging the component label to the locate page control. The preset operation 2 includes a slide operation of touching and holding the component label of the component 1 and then dragging the component label to a locate source control of the application 1.

In some embodiments, the preset operation 1 includes a tap operation performed on the component label of the component 1. The preset operation 2 includes a touch and hold operation performed on the component label of the component 1.

In some embodiments, the preset operation 1 includes a tap operation performed on the component label of the component 1. The preset operation 2 includes a slide operation of touching and holding the component label of the component 1 and then dragging the component label to a preset area. In an implementation, the application identifier of the application 2 and/or prompt information are/is displayed in the preset area. The prompt information is used to prompt the user to drag the component label of the component 1 to the preset area, to trigger the application 2 to open the component 1. In an implementation, when detecting a touch and hold operation of the user, the terminal device 100 displays the application identifier of the application 2 and/or the prompt information in the preset area.

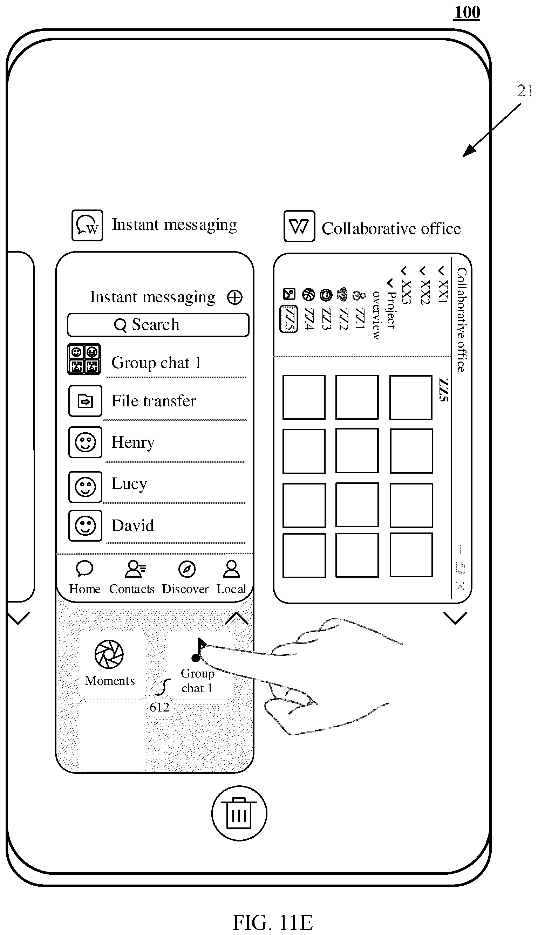

A component label 612 of a music player component 310 shown in FIG. 11E is used as an example.

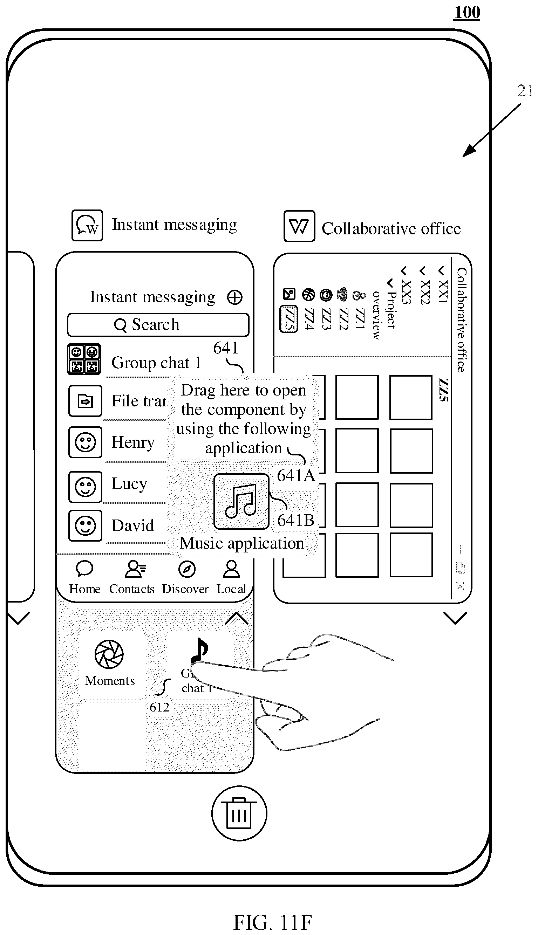

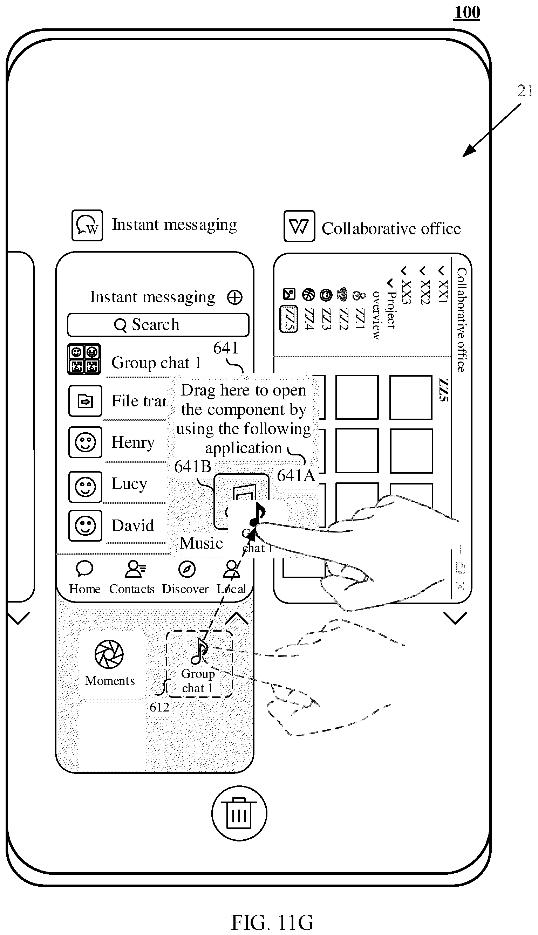

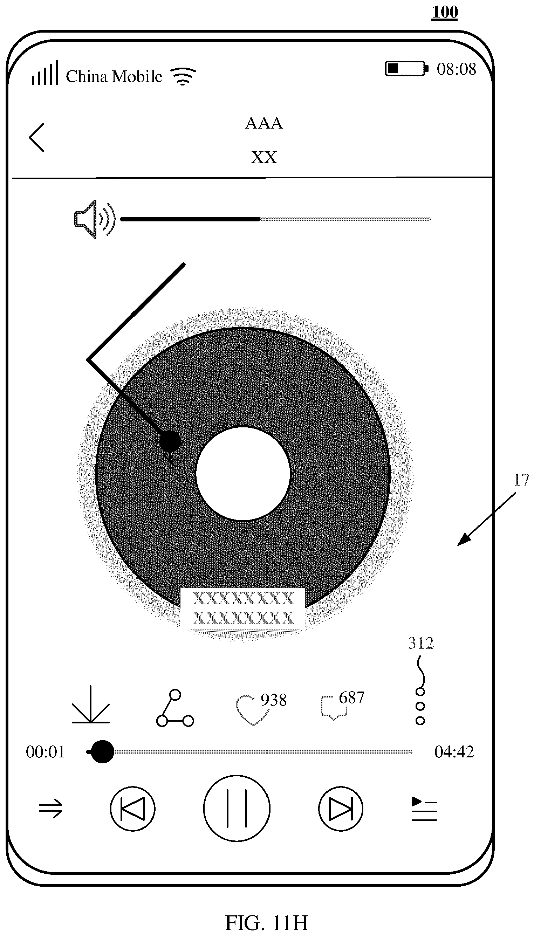

As shown in FIG. 11E and FIG. 11F, a touch and hold operation performed on the component label 612 is detected. In response to the touch and hold operation, the terminal device 100 displays prompt information 641A and an identifier 641B of a music application in a preset area 641 (for example, a central area of the display). As shown in FIG. 11G and FIG. 11H, a slide operation of dragging the component label 601 to the preset area 641 is detected. In response to the slide operation, the terminal device 100 invokes the music application, and displays an original play interface 17 of a song played by the music player component 310.

The preset operation 1 and the preset operation 2 may alternatively be other operations, without being limited to the preset operation 1 and the preset operation 2 described in FIG. l0A to FIG. 11F. This is not specifically limited herein.

The following describes, by using an example, how the terminal device 100 locates a location of a component.

In some embodiments, a user uses a component 1 of an application 1. A page on which the component 1 is located is a page 1. When determining that the user exits the component 1, the terminal device 100 adds an application window corresponding to the page 1 to a task queue 1 for component locating. Task information of the page 1 in the task queue 1 includes a page identifier and page data of the page 1, a component identifier of the component 1, and a display location of the component 1 on the page 1. When detecting a preset operation 1 performed on a component label of the component 1, the terminal device 100 obtains the task information of the page 1 in the task queue 1 based on the page identifier of the page 1 on which the component 1 is located. The page 1 is run and the page 1 including the component 1 is displayed based on the page data in the task information of the page 1 and the component identifier and the display location of the component 1.

For example, when the component 1 (for example, an Excel component) of the application 1 (for example, a collaborative office application) is a type-A insert-type component, the user uses the component 1 on the page 1 (for example, a ZZ1 page). The page on which the component 1 is located is the ZZ1 page. For example, the component 1 (for example, a moments page) of the application 1 (for example, an instant messaging application) is a type-B page component. The component 1 is the page on which the component 1 is located.

In an embodiment of this application, one task queue for component locating may be established for each application, or one general task queue for component locating may be established for all applications. This is not specifically limited herein.

It should be noted that, being limited by a size of the display of the terminal device 100, for some pages, the terminal device 100 can display only some content of the page, and the user needs to perform an upward slide operation, a downward slide operation, a leftward slide operation, or a rightward slide operation to view all content of the page. In embodiments of this application, such a page that cannot be completely displayed is referred to as a long page for short, and a page that can be completely displayed is referred to as a non-long page. For example, a ZZ1 page 18 shown in FIG. 10B, a moments page 14 shown in FIG. 11D, and chat pages 15 shown in FIG. 4G and FIG. 5D are all long pages.

In an implementation, if the page 1 is a non-long page, the task information of the page 1 may not include the display location of the component 1 on the page 1. When detecting the preset operation 1 performed on the component label of the component 1, the terminal device 100 obtains the task information of the page 1 in the task queue 1 based on the page identifier of the page 1 on which the component 1 is located. The page 1 is run and the complete page 1 is displayed based on the page data of the page 1. The page 1 includes the component 1.

In an implementation, the page 1 is a long page that can be slid upward or downward, and the component 1 (for example, the Excel component) is a type-A insert-type component. A total height that is of the page 1 and that can be displayed is H, and a height that can be displayed on the display of the terminal device 100 and that is of the page 1 is h, where h is less than H. When the user exits the component 1, a display location, on the display, of the component 1 on the page 1 is x to x+s, where s is a display height of the component 1. The task information of the page 1 in the task queue 1 further records that the display location of the component 1 is x. When detecting the preset operation 1 performed on the component label of the component 1, the terminal device 100 may display, based on the page data of the page 1 and the display height x of the component 1, a partial page that is of the page 1 and that includes the component 1. The component 1 may be located at a specified location, for example, the top, the middle, or the bottom, of the partial page. This is not specifically limited herein. Alternatively, content of the page 1 includes a first part and a second part. Content displayed on the first part does not include the component 1. The user may slide the page 1, so that the display displays the second part that is of the page 1 and that includes the component 1. When the user exits the component 1, the display displays the first part that is of the page 1 and that does not include the component 1. When detecting the preset operation 1 performed on the component label of the component 1, the terminal device 100 may display the first part that is of the page 1 and that includes the component 1.

In an implementation, if the page 1 is a long page that can be slid upward or downward, the component 1 (for example, the moments page) is a type-B page component. A total height that is of the page 1 and that can be displayed is H, and a height that can be displayed on the display of the terminal device 100 and that is of the page 1 is h, where h is less than H. When the user exits the component 1, a partial page whose height is y to y+h is displayed on the page 1. The task information of the page 1 in the task queue 1 further records that a display location of the component 1 is y. When detecting the preset operation 1 performed on the component label of the component 1, the terminal device 100 may display the partial page of the page 1 based on the page data of the page 1 and the display height y of the component 1.

In addition to being used to implement component locating, the component label of the component 1 may be further used to implement another function. The following describes, by using an example, the another function that can be provided by the component 1.

In some embodiments, a component snapshot of the component 1 may be previewed by using the component label of the component 1.

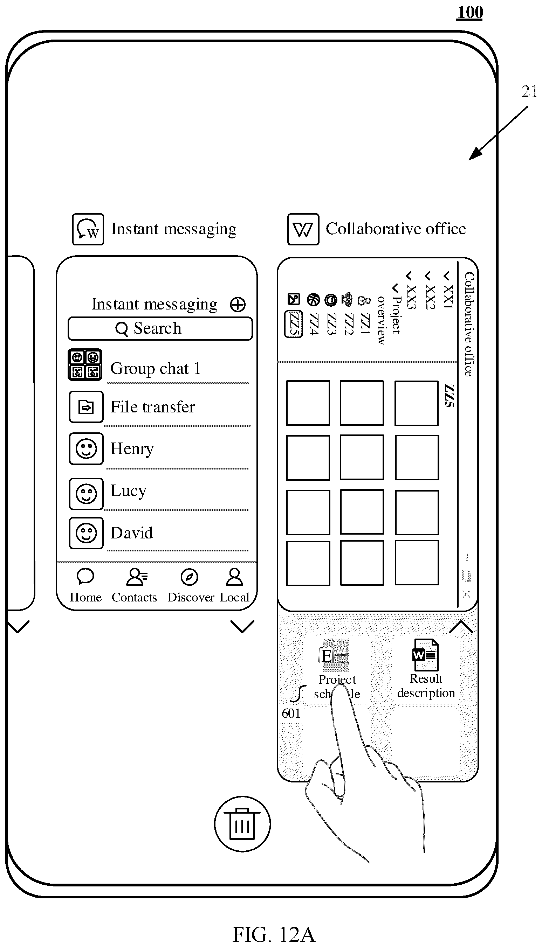

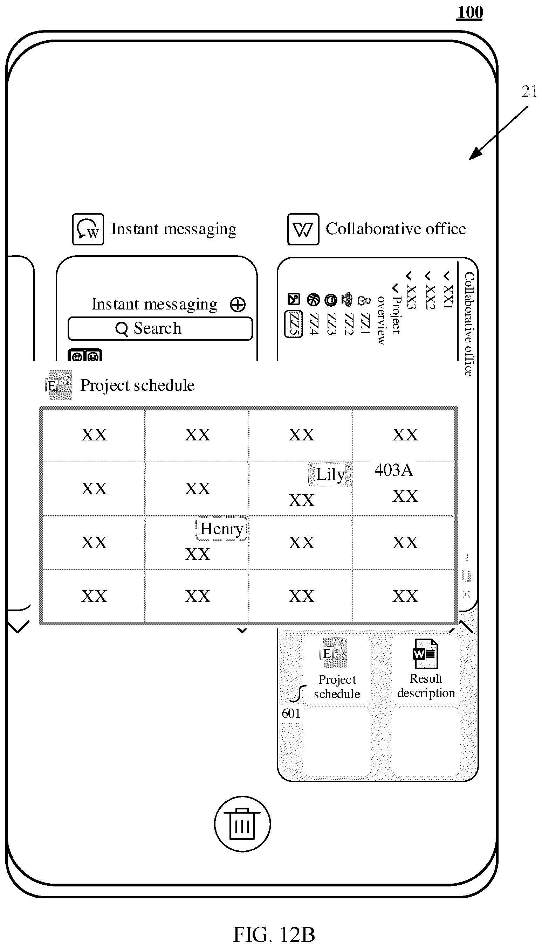

For example, as shown in FIG. 12A and FIG. 12B, a component label 601 of an Excel component 403 on a recent tasks screen 21 may receive an input operation (for example, a double-tap operation) of the user. In response to the input operation, the terminal device 100 may display a scaled-up component snapshot of the Excel component 403 on the recent tasks screen 21.

In some embodiments, the component 1 may be removed from a component management trustlist during current running of the application 1 and/or the component 1 may be thoroughly removed from the component management trustlist by using the component label of the component 1.

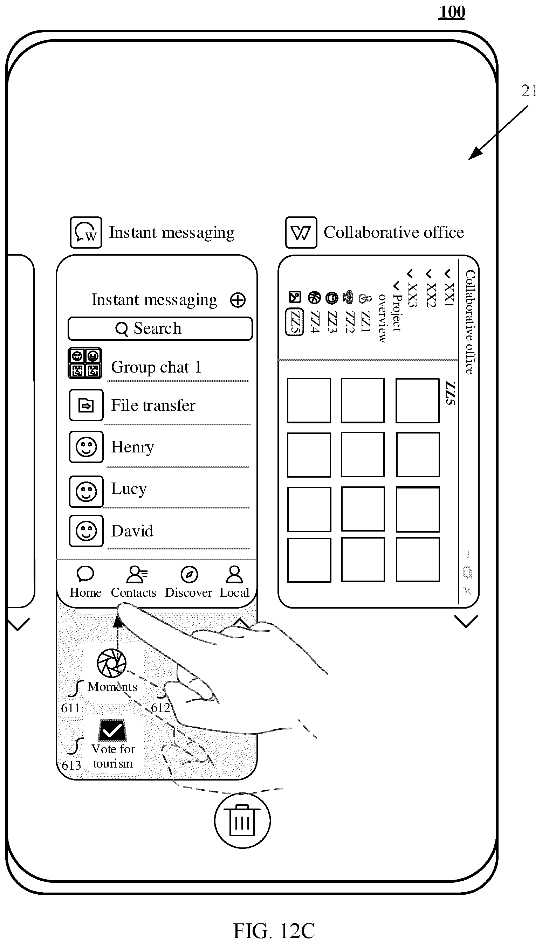

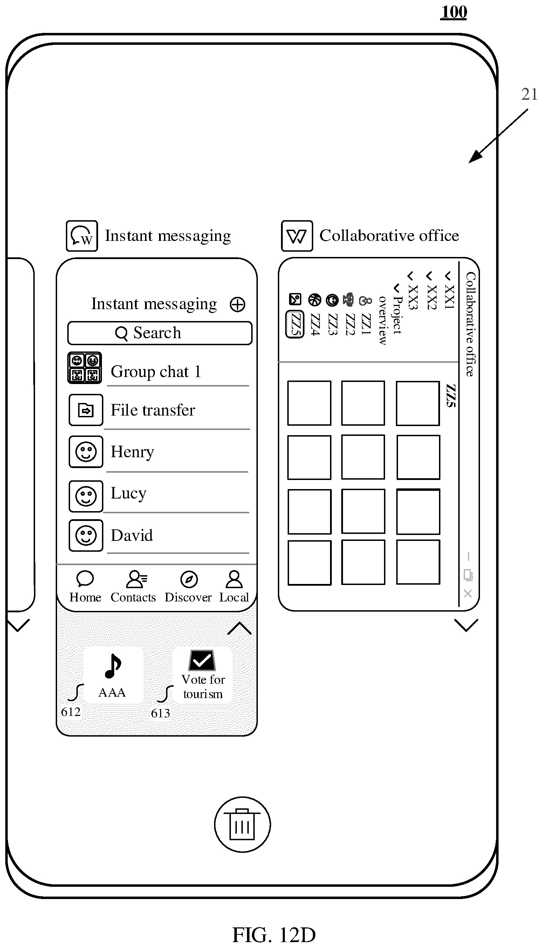

For example, as shown in FIG. 12C and FIG. 12D, a component label 611 of a moments page 14 on the recent tasks screen 21 may receive an input operation (for example, an upward slide operation) of the user. In response to the input operation, the terminal device 100 may remove the moments page from the component management trustlist during current running of an instant messaging application, stop displaying the component label 611, and advance, by one location, a component label of a component arranged after the moments page 14. As shown in FIG. 12D, a display location of a component label 612 is moved to an original display location of the component label 611. A display location of a component label 613 is moved to an original display location of the component label 612.

In some embodiments, the component 1 may be shared, by using the component label of the component 1, with another application (for example, an application 3) that can use the component 1, or a contact in this application.

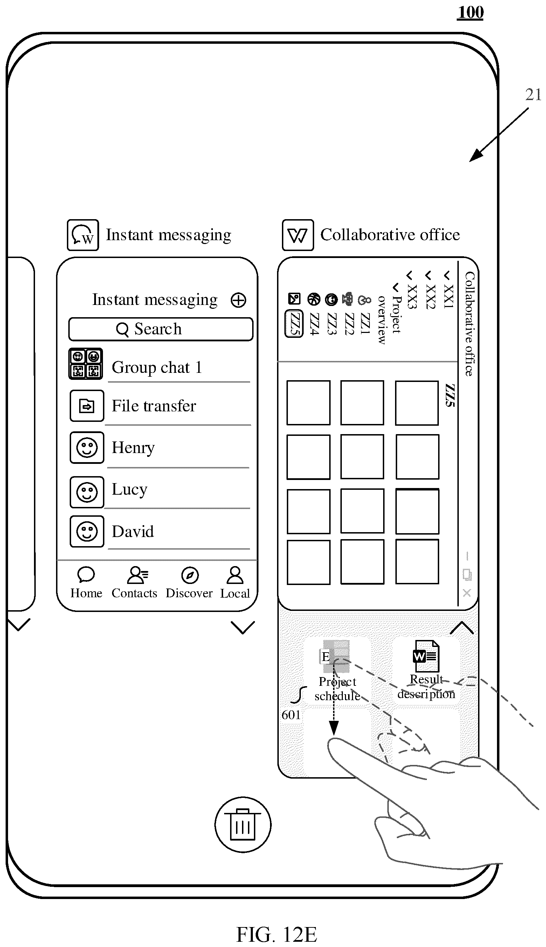

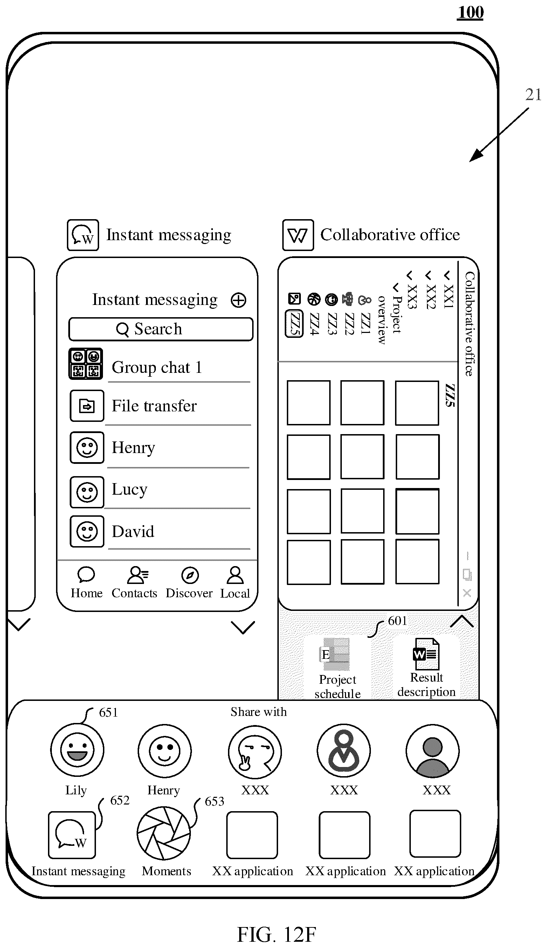

For example, as shown in FIG. 12E and FIG. 12F, the component label 601 of the Excel component 403 on the recent tasks screen 21 may receive a share operation (for example, a downward slide operation) of the user. In response to the share operation, the terminal device 100 may display a user identifier (for example, a user identifier 651 of a contact Lily) of the contact (for example, a colleague who can perform collaborative office) in this application (namely, the collaborative office application), an application identifier (for example, an application identifier 652 of the instant messaging application) of the another application that can use the component 1, and a page identifier (for example, a page identifier 653 of the moments page of the instant messaging application) of a specified page of the another application that can use the component 1.

The user identifier 651 may receive an input operation (for example, a touch operation) of the user. In response to the input operation, the terminal device 100 may send the component 1 to a terminal device of the contact Lily. The terminal device of the contact Lily may display the component 1 in the collaborative office application.

For example, FIG. 12F to FIG. 12I are diagrams of user interfaces of sharing the component 1 by using the application identifier 652 of the instant messaging application.

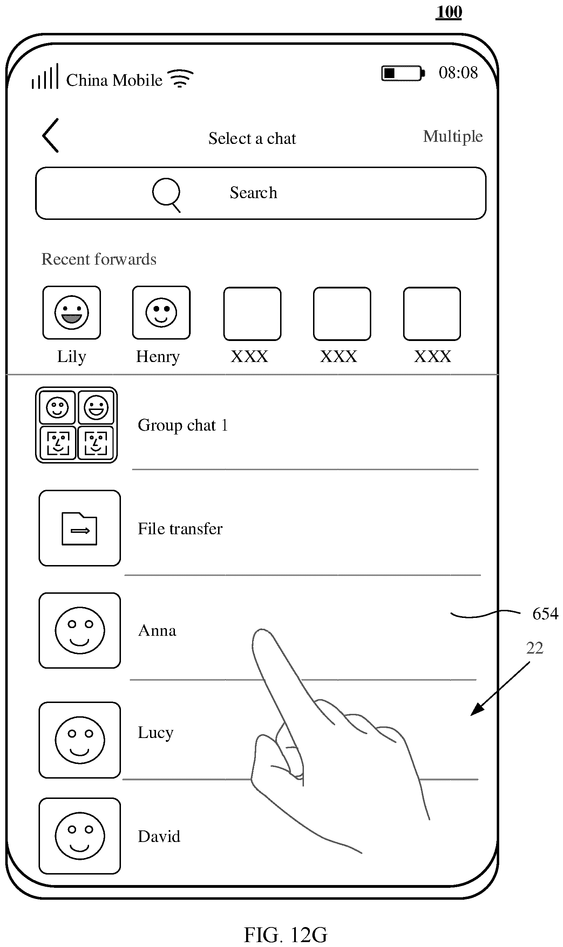

As shown in FIG. 12F and FIG. 12G, the application identifier 652 may receive an input operation (for example, a touch operation) of the user. In response to the input operation, the terminal device 100 may display a contact selection interface 22 of the instant messaging application. The contact selection interface 22 includes user identifiers, for example, a user identifier 654 of a contact "Anna", of a plurality of contacts in the instant messaging application.

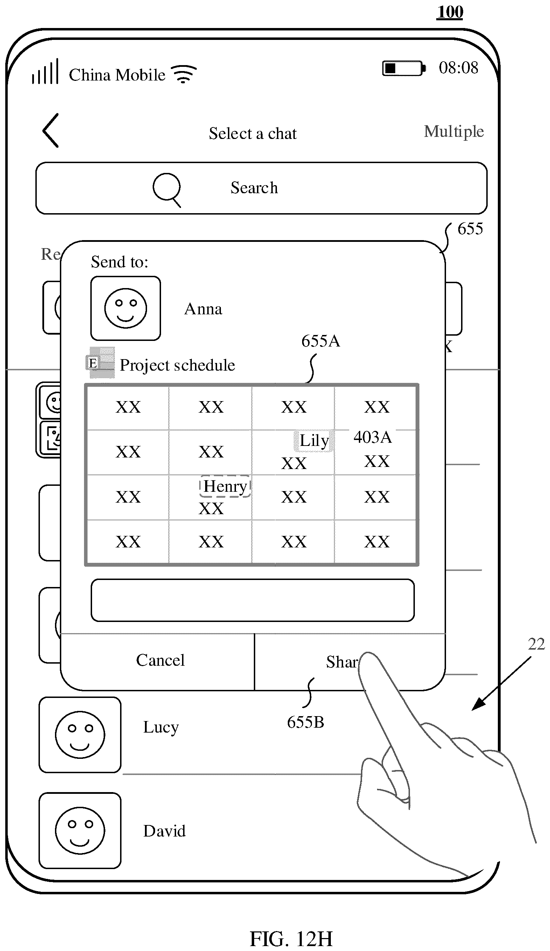

As shown in FIG. 12G and FIG. 12H, in response to an input operation (for example, a touch operation) on the user identifier 654, the terminal device 100 may display a share box 655 of the Excel component 403 of the contact "Anna". The share box 655 includes a component label 655A (for example, a component snapshot shown in FIG. 12G) of the Excel component 403 and a share control 655B.

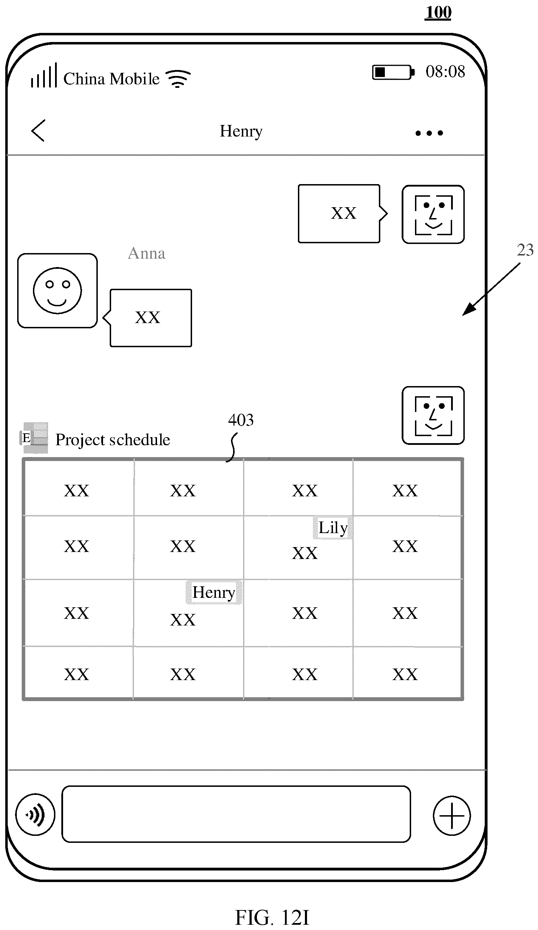

As shown in FIG. 12H and FIG. 12I, in response to an input operation (for example, a touch operation) on the share control 655B, the terminal device 100 shares the component 1 with the contact "Anna" in the instant messaging application, displays a chat page 23 of the user "Anna" in the instant messaging application, and displays, on the chat page 23, the Excel component 403 sent by a user of this device.

For example, FIG. 12F to FIG. 12I are diagrams of user interfaces of sharing the component 1 by using the page identifier 653 of moments.

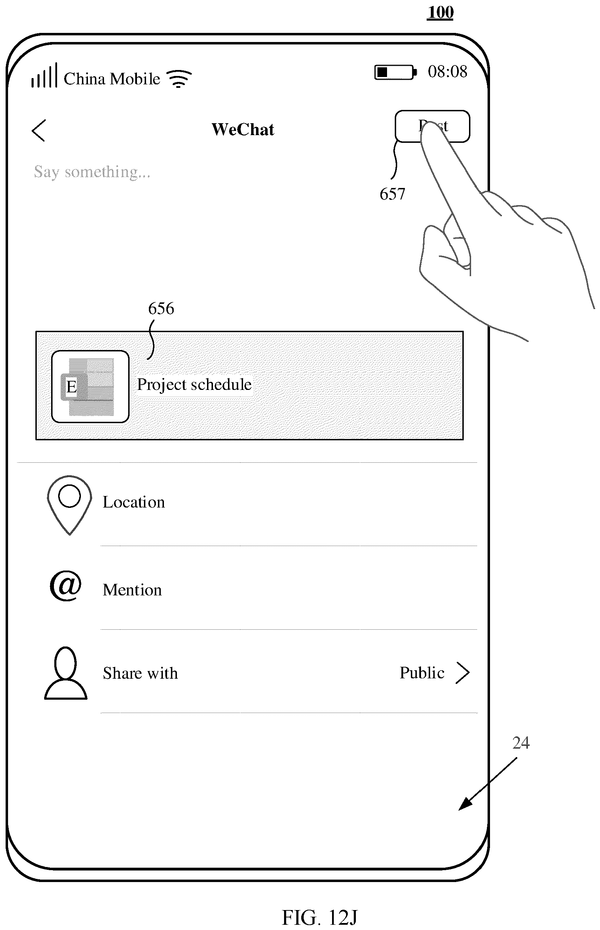

As shown in FIG. 12J, in response to an input operation (for example, a touch operation) on the page identifier 653, the terminal device 100 may display an editing interface 24 of the moments. The editing interface 24 includes an identifier of a moments attachment (namely, a component identifier 656 of the Excel component 403) and a post control 657 of the moments.

As shown in FIG. 12I and FIG. 12J, in response to an input operation (for example, a touch operation) on the post control 657, the terminal device 100 displays a newly post moment on the moments page 14. The moment includes the Excel component 403.

The following describes, by using an example, how a user sets a component management trustlist.

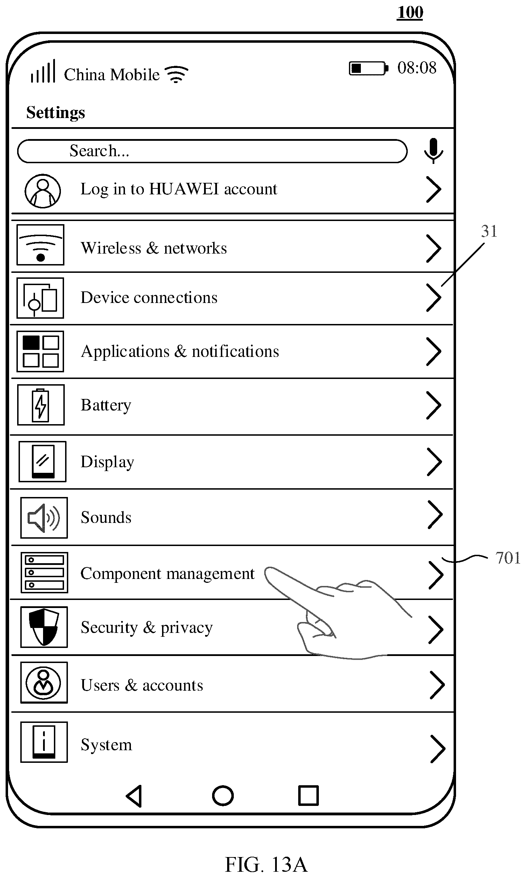

For example, FIG. 13A to FIG. 13D are diagrams of related user interfaces of setting and managing the component management trustlist via a system.

A settings icon 202C shown in FIG. 2A may receive an input operation (for example, a touch operation) of a user. In response to the input operation, the terminal device 100 may display a system setting interface 31 shown in FIG. 13A. The system setting interface 31 includes a component management setting entry 701.

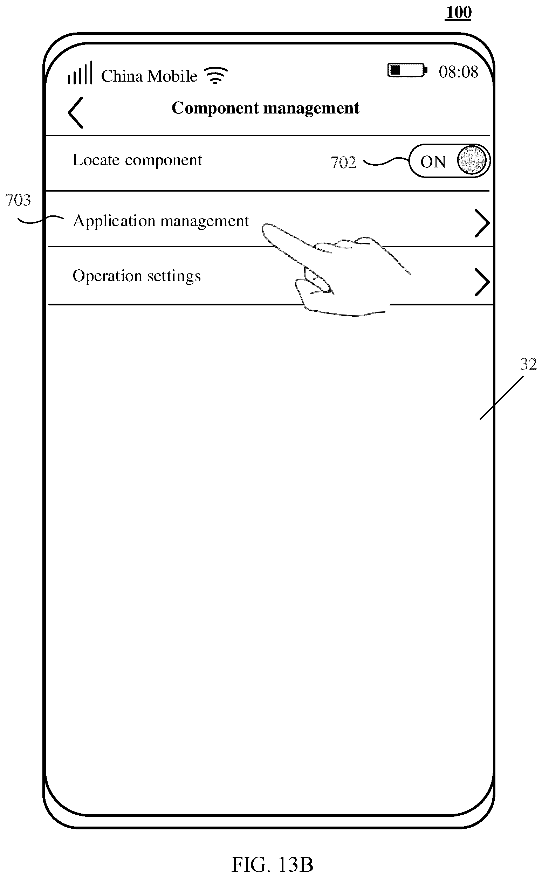

As shown in FIG. 13A and FIG. 13B, in response to an input operation (for example, a touch operation) on the component management setting entry 701, the terminal device 100 may display a component management setting interface 32. The management setting interface 32 includes an on/off control 702 for component management and an application management entry 703. When the on/off control 702 is in an on (ON) state, a service for component management (for example, component locating) is enabled. When the on/off control 702 is in an off (OFF) state, a service for component management is disabled. The user may switch a status of the on/off control 702 through an input operation (for example, a touch operation).

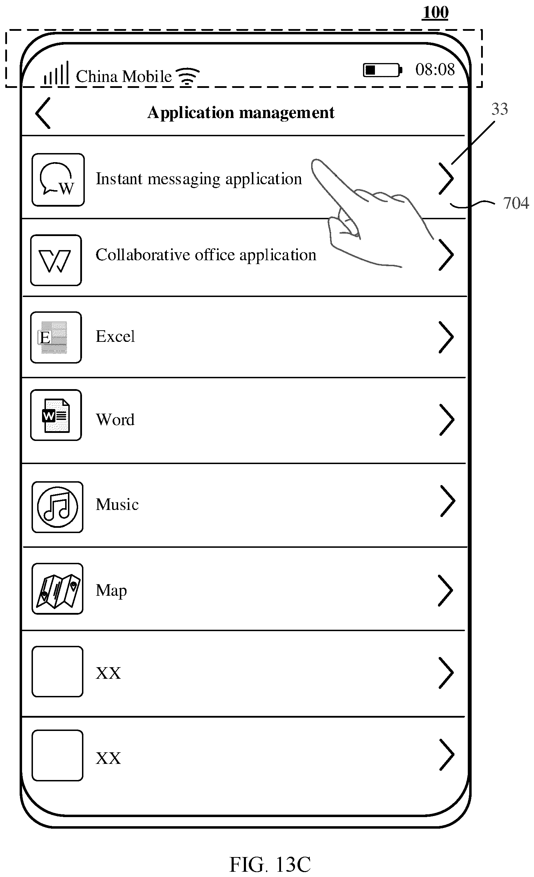

As shown in FIG. 13B and FIG. 13C, in response to an input operation (for example, a touch operation) on the application management entry 703, the terminal device 100 displays a user interface 33. The user interface 33 includes a setting entry, for example, a setting entry 704 of an instant messaging application, of at least one application that can provide a component.

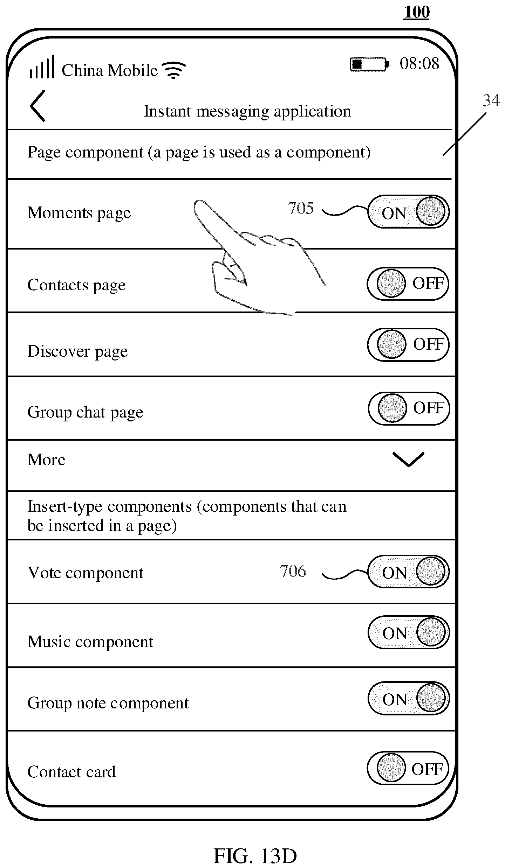

As shown in FIG. 13C and FIG. 13D, in response to an input operation (for example, a touch operation) on the setting entry 704, the terminal device 100 displays a component setting interface 34 of the instant messaging application. The component setting interface 34 includes an on/off control (for example, an on/off control 705 of a moments page) of at least one page component provided by the instant messaging application, and an on/off control (for example, an on/off control 706 of a vote component) of at least one insert-type component. When an on/off control of a component is in an on (ON) state, the component is added to the component management trustlist. When an on/off control of a component is in an off (OFF) state, the component is not added to the component management trustlist. The user may switch a status of the on/off control of the component through an input operation (for example, a touch operation).

FIG. 13A to FIG. 13D show an example setting manner provided in embodiments of this application. In embodiments of this application, a setting portal of the component management trustlist may alternatively be added to each application. This is not specifically limited herein. It may be understood that the user sets the component management trustlist, to provide personalized component locating experience based on a requirement of each user.

In a display manner of a component management interface shown in FIG. 7A to FIG. 12D (that is, displaying, on the component management interface, an application identifier of an application that uses a component), component management is performed in a dimension of the application that uses the component. Without being limited to the foregoing display manner (or display dimension), component management may alternatively be performed in another display manner (or display dimension) in embodiments of this application.

The following describes a plurality of display manners (or display dimensions) in embodiments of this application.

Manner 1: Display the application identifier of the application that uses the component.

For example, in FIG. 7A to FIG. 9(d), the component management interface is a recent tasks screen 21. In the dimension of the application that uses the component, a component that is on the terminal device 100 and on which component locating can be currently performed is managed. A component label of a component used by each application (for example, a collaborative office application) is described in detail. The collaborative office application is used as an example. The recent tasks screen 21 may include an application identifier of the collaborative office application. A component label display area corresponding to the application identifier includes a component label of a component that is used in the collaborative office application and on which component locating can be currently performed. The application identifier includes an application icon, an application name, and an interface snapshot.

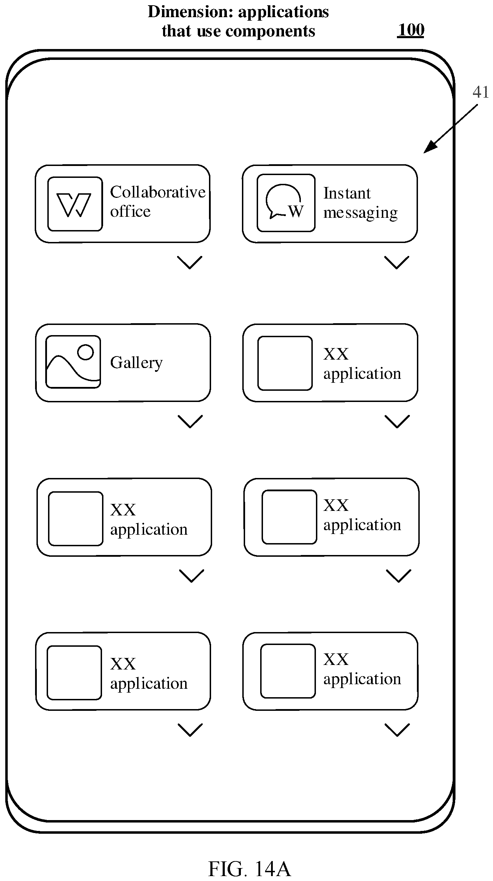

For example, FIG. 14A shows another component management interface 41 in a dimension of applications that use components. Different from that on the recent tasks screen 21, an application identifier of each application on the component management interface 41 may not include an interface snapshot of the application. Similar to that in FIG. 7A and FIG. 7B, the component management interface 41 shown in FIG. 14A includes an extend control corresponding to the application identifier of each application. In an implementation, the component management interface 41 may alternatively not include an extend control. A component label of a component that is used in the application and on which component locating can be currently performed may be invoked through a preset operation 3 (for example, a touch operation) performed on the application identifier of the application.

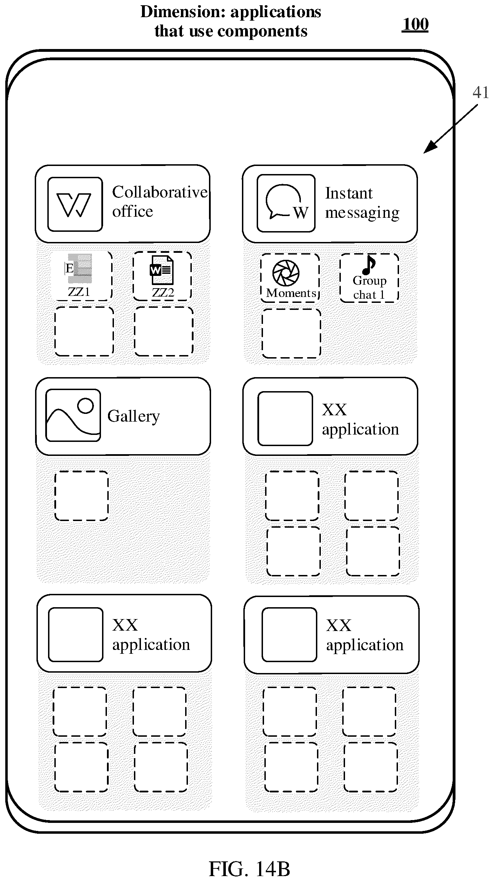

For example, similar to FIG. 7J, FIG. 14B shows another component management interface 41. The component management interface 41 may directly display, in a component label display area corresponding to an application identifier of each application, a component label of a component used by the application, without an extend control.

Compared with that in FIG. 7A, the component management interfaces 41 shown in FIG. 14A and FIG. 14B do not include an application identifier of a contacts application, and each of applications displayed in FIG. 14A and FIG. 14B currently includes at least one component on which component locating can be performed.

In Manner 1, for viewing the component label, an order of components, display content of the component label, a function of the component label, and the like, refer to related descriptions of FIG. 7A to FIG. 12D. Details are not described herein again.

Manner 2: Display the application identifier of the application that uses the component and a page identifier of a page on which the component is located.

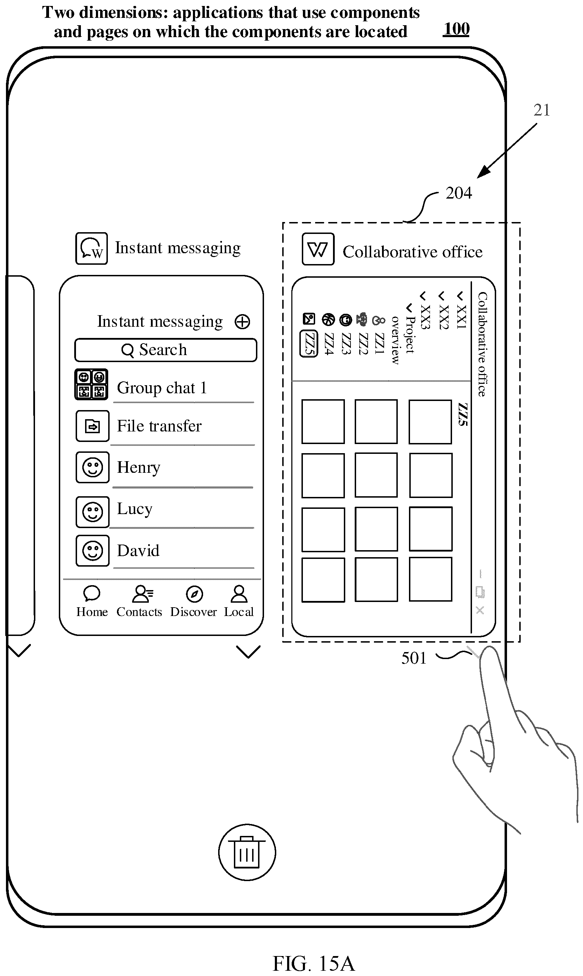

In Manner 2, based on Manner 1, M components that are used by the application 1 (for example, a collaborative office application) and on which component locating can be currently performed are re-divided in a dimension of a page on which the M components are located. The M components are on W pages of the application 1, where W is a positive integer. For example, the component management interface is a recent tasks screen 21 shown in FIG. 15A.

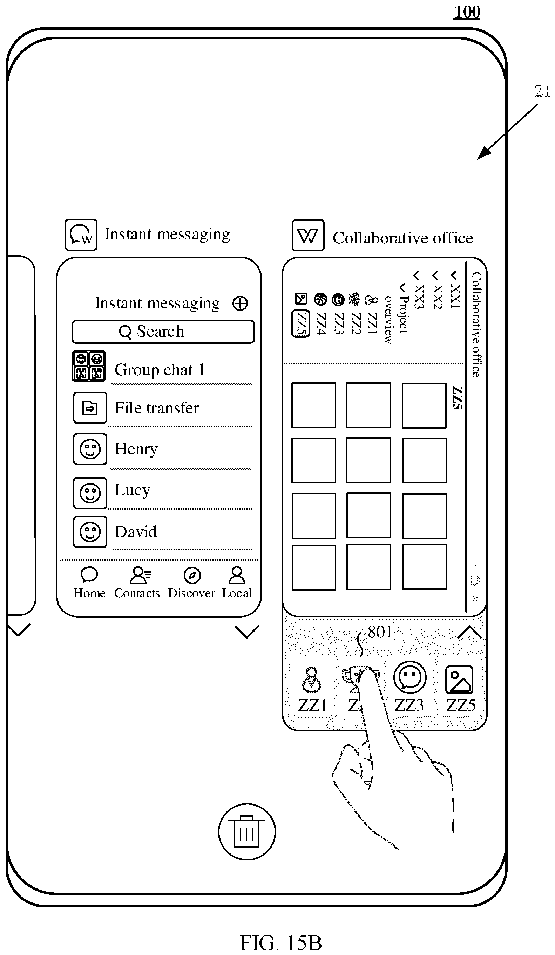

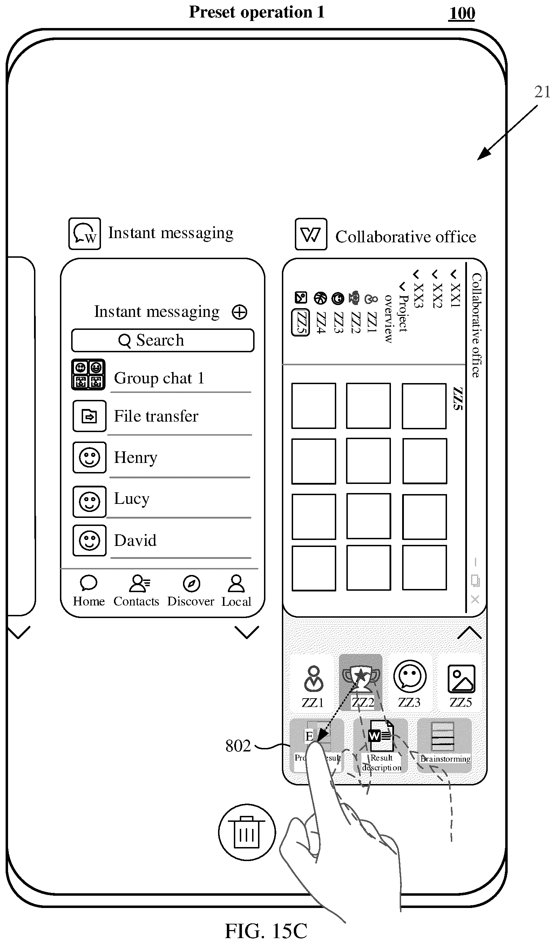

As shown in FIG. 15A and FIG. 15B, in response to an input operation (for example, a touch operation) on an extend control 502 of a collaborative office application, the terminal device 100 displays page identifiers (for example, page icons and/or page names) of the W pages in a component label display area of the collaborative office application, for example, a page identifier of a ZZ1 page, a page identifier 801 of a ZZ2 page, and a page identifier of a ZZ3 page. As shown in FIG. 15B and FIG. 15C, the page identifier 801 may receive an input operation (for example, a touch operation) of a user. In response to the input operation, the terminal device 100 displays, in the component label display area of the collaborative office application, a component label, for example, a component label 802 of an Excel component 406, of a component used on the ZZ2 page. The component label 802 includes a component identifier (for example, a component icon, a component snapshot, and/or a component name) of the Excel component 406.

In some embodiments, an arrangement order of the W pages may be determined based on one or more of last use time points of the components used on the W pages, use frequencies of the components used on the W pages, and exit time points of the W pages. In an implementation, a latest use time point of a component on each page is determined. The arrangement order of the W pages is a reverse order of the latest use time points of the components on the W pages. To be specific, a page on which a component is most recently used on the W pages is ranked first. In an implementation, a highest use frequency of a component used on each page is determined. The arrangement order of the W pages is a positive order of highest use frequencies corresponding to the W pages. To be specific, a page on which a component has a highest use frequency is ranked first. In an implementation, the arrangement order of the W pages is a reverse order of the exit time points of the W pages. To be specific, a page that is most recently exited in the W pages is ranked first.

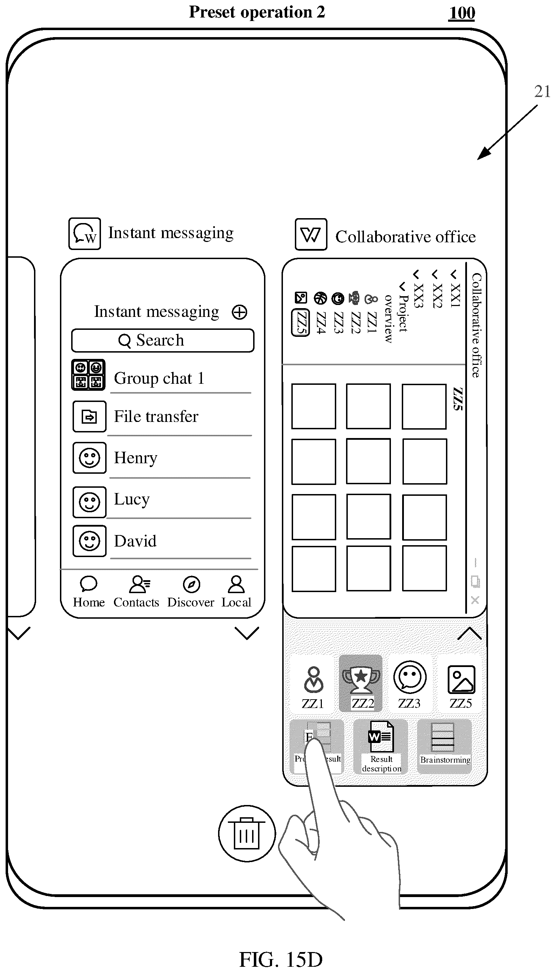

In some embodiments, the component label 802 of the Excel component 406 is used as an example. As shown in FIG. 15C, the preset operation 1 for component locating may be a slide operation from the page identifier 801 of the Excel component 406 to the component label 802. As shown in FIG. 15D, the preset operation 2 for component locating may be a single-tap operation performed on the component label 802.

In some embodiments, the component management interface may not include an extend control. The page identifiers of the W pages may be invoked through a preset operation 3 performed on the application identifier of the collaborative office application.

In some embodiments, in Manner 2, if a page has only one component on which component locating can be performed, a component label of the component may be used to replace a page identifier of the page. The user does not need to obtain, by tapping the page identifier, the component label of the unique component corresponding to the page. This reduces a user operation.

In some embodiments, similar to that in FIG. 7J, the component management interface may not include an extend control. The page identifiers of the W pages may be directly displayed on the component management interface.

In some embodiments, a maximum of a preset quantity (for example, 4) of page identifiers are displayed in the component label display area. When N exceeds the preset quantity, the user may view more page identifiers through a leftward slide operation or a rightward slide operation. Similarly, this is true for component labels. Specifically, refer to related descriptions of FIG. 7E and FIG. 7F. Details are not described herein again.

For a function of the component label in Manner 2, refer to the function of the component label in Manner 1. Details are not described herein again.

Manner 3: Display the application identifier of the application that uses the component and an application identifier of an application that provides the component.

In Manner 3, based on Manner 1, M components that are used by an application 1 (for example, a collaborative office application) and on which component locating can be performed are re-divided in a dimension of the application that provides the component. The M components are provided by F applications, where F is a positive integer. For example, the component management interface is a recent tasks screen 21 shown in FIG. 15A.

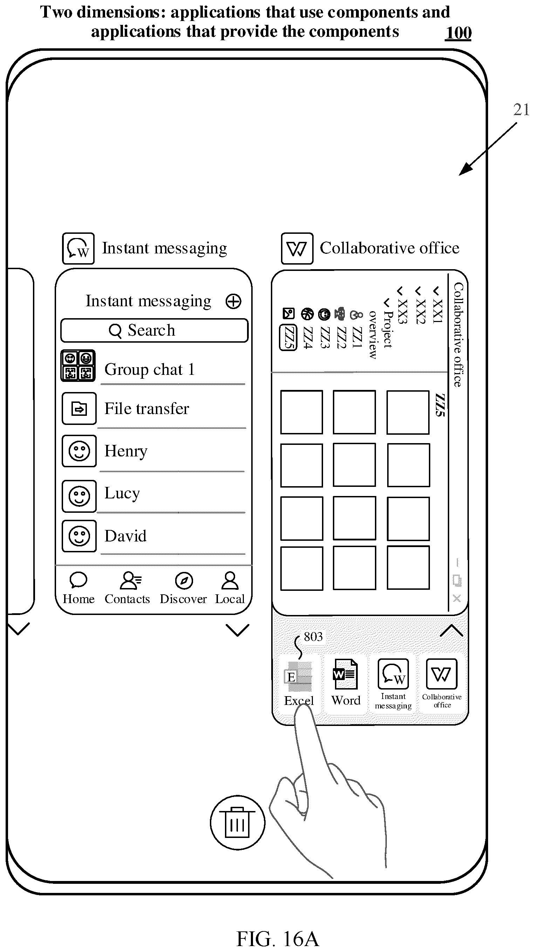

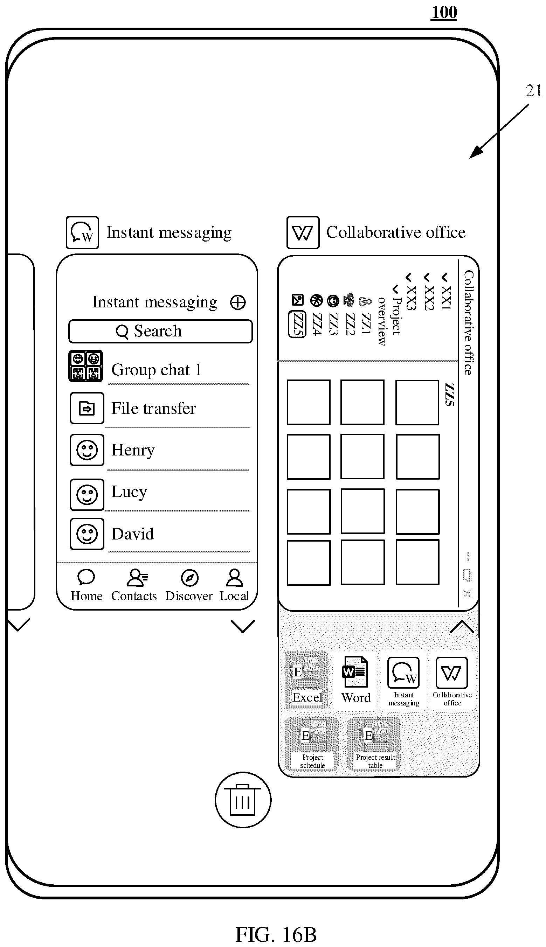

As shown in FIG. 15A and FIG. 16A, in response to an input operation (for example, a touch operation) on an extend control 502 of the collaborative office application, the terminal device 100 displays application identifiers (for example, application icons and/or application names) of the F applications in a component label display area of the collaborative office application, for example, an application identifier 803 of an Excel application, an application identifier of a Word application, and an application identifier of an instant messaging application. As shown in FIG. 16A and FIG. 16B, the application identifier 803 may receive an input operation (for example, a touch operation) of the user. In response to the input operation, the terminal device 100 displays, in the component label display area, a component label, for example, a component label 804 of the Excel component 403, of a component that is provided by the Excel application and on which component locating can be performed.

In some embodiments, an arrangement order of the F applications may be determined based on one or more of latest use time points of the components provided by the F applications, use frequencies of the components provided by the F applications, and exit time points of the F applications. In an implementation, a latest use time point of a component provided by each application is determined. The arrangement order of the F applications is a reverse order of the latest use time points of the components provided by the F applications. To be specific, an application that provides a component that is most recently used is ranked first. In an implementation, it is determined that a highest use frequency corresponding to each application is a highest use frequency of a component provided by the application. The arrangement order of the F applications is a positive order of highest use frequencies corresponding to the F applications. To be specific, an application that provides a component with a highest use frequency is ranked first. In an implementation, the arrangement order of the F applications is a reverse order of the exit time points of the F applications. To be specific, an application that is most recently exited in the F applications is ranked first.

In some embodiments, the component management interface may not include an extend control. The application identifiers of the F applications may be invoked from the component label display area of the collaborative office application through a preset operation 3 performed on the application identifier of the collaborative office application.

In some embodiments, in Manner 3, if an application provides only one component on which component locating can be performed, a component label of the component may be used to replace an application identifier of the application. The user does not need to obtain, by tapping the application identifier, the component label of the unique component corresponding to the page. This reduces a user operation.

In some embodiments, similar to that in FIG. 7J, the component management interface may not include an extend control. The page identifiers of the F applications may be directly displayed on the component management interface.

In some embodiments, a maximum of a preset quantity (for example, 4) of application identifiers are displayed in the component label display area. When F exceeds the preset quantity, the user may view more application identifiers through a leftward slide operation or a rightward slide operation. Similarly, this is true for component labels. Specifically, refer to related descriptions of FIG. 7E and FIG. 7F. Details are not described herein again.

For a function of the component label in Manner 3, also refer to the function of the component label in Manner 1. Details are not described herein again.

Manner 4: Display the application identifier of the application that provides the component.

In Manner 4, component management is performed, in a dimension of applications that provide components, on the components that are on the terminal device 100 and on which component locating can be currently performed. The components that are on the terminal device 100 and on which component locating can be currently performed are provided by K applications.

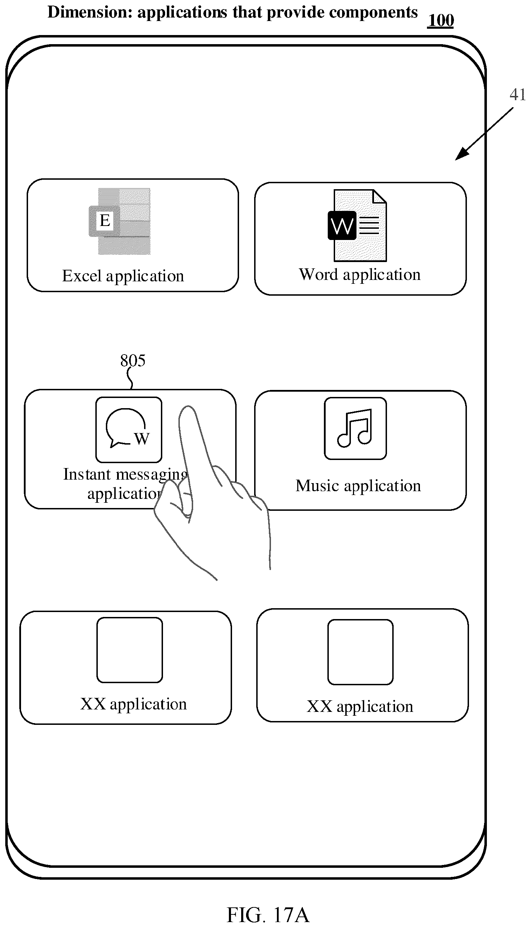

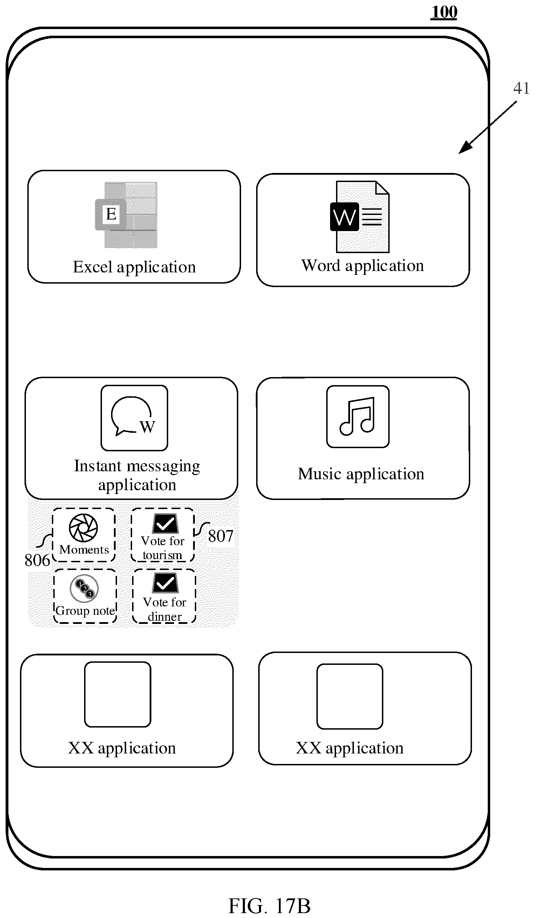

For example, FIG. 17A shows a component management interface 41 in the dimension of the applications that provide the components. The component management interface 41 includes application identifiers of the K applications, for example, an application identifier 805 of an instant messaging application. As shown in FIG. 17A and FIG. 17B, the application identifier 805 may receive an input operation (for example, a touch operation) of a user. In response to the input operation, component labels, for example, a component label 806 of a moments page 14 and a component label 807 of a music player component, of components provided by the instant messaging application are displayed in a component label display area corresponding to the application identifier 805. It should be noted that, in FIG. 17A, when only application identifiers of some of the K applications can be displayed, and the user may view more application identifiers through a slide operation (for example, a downward slide operation).

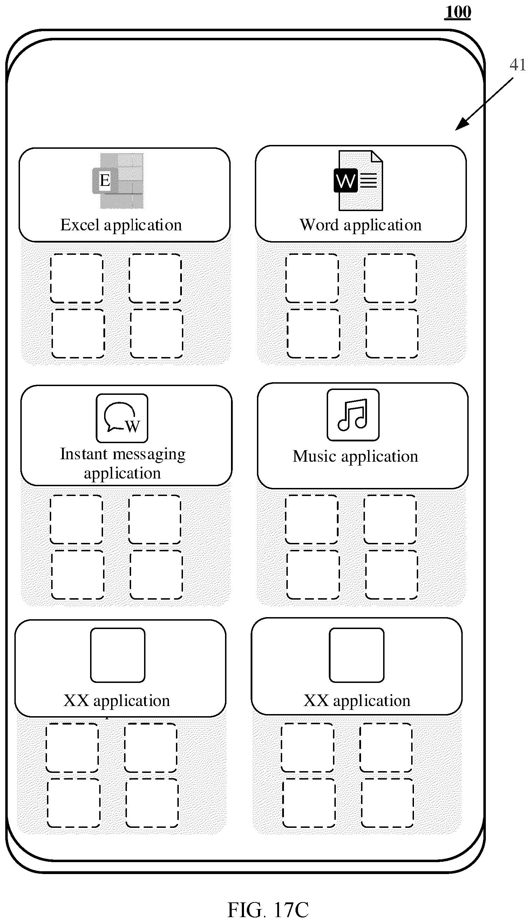

For example, similar to FIG. 7J, FIG. 17C shows another component management interface 41. A component label of a component that is provided by each application and on which component locating can be performed may be directly displayed on the component management interface 41.

In some embodiments, an arrangement order of the K applications may be determined based on one or more of latest use time points of the components provided by the K applications, use frequencies of the components provided by the K applications, and exit time points of the K applications.

In some embodiments, a maximum of a preset quantity (for example, 4) of component labels are displayed in the component label display area. When a quantity of components exceeds the preset quantity, the user may view component labels of more components through a slide operation (for example, a leftward slide operation). Specifically, refer to related descriptions of FIG. 7E and FIG. 7F. Details are not described herein again.

For display content, a function, and the like of the component label in Manner 4, refer to related descriptions of Manner 1. Details are not described herein again.

In some embodiments, when fewer than two applications provide components (that is, K is less than 2), component management is not performed in Manner 4.

In some embodiments, the dimension of the applications that provide the components and the dimension of the applications that use the components are applied together. Specifically, refer to Manner 3. Details are not described herein again.

Manner 5: Display a user identifier of a user who uses the component.

In an embodiment of this application, some components (for example, an Excel component in a collaborative office application) may be jointly used by a plurality of users. In Manner 5, component management is performed, in a dimension of the users who use the component that is on the terminal device 100 and on which component locating can be currently performed, on the component. The component that is on the terminal device 100 and on which component locating can be currently performed is used by D users.

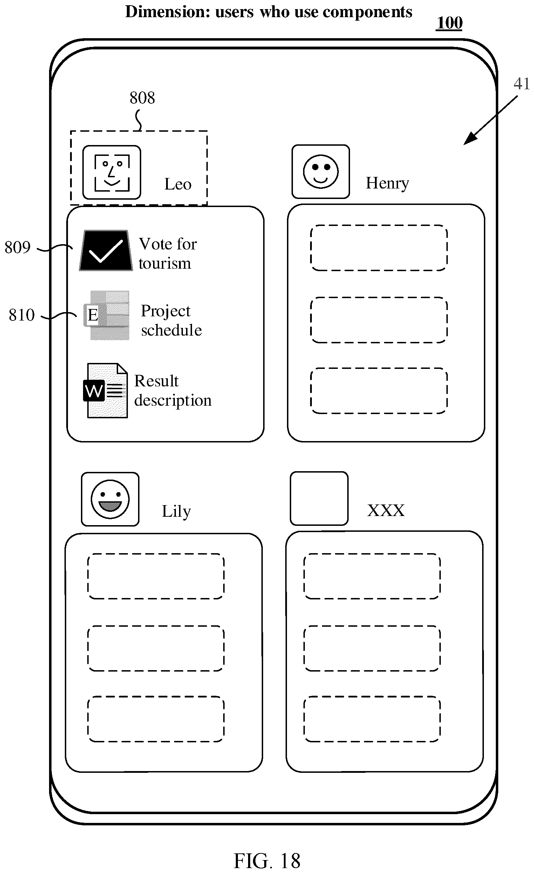

For example, FIG. 18 shows a component management interface 41 in a dimension of an application that provides the component. The component management interface 41 includes user identifiers (for example, user avatars and/or user names) of the D users, for example, a user identifier 808 of a user "Leo". A component label of a component used by each user is displayed in a component label display area corresponding to a user identifier of the user. For example, a component label display area of the user "Leo" includes a component label 809 of a vote component 308 and a component label 810 of an Excel component 403. It should be noted that, in FIG. 18, when only user identifiers of some of the D users can be displayed, and the user may view more user identifiers through a slide operation (for example, a downward slide operation).

In some embodiments, an arrangement order of the D users may be determined based on time points at which the D users recently use the component and/or use frequencies at which the D users use the component. In an implementation, a time point at which each user recently uses the component is determined. The arrangement order of the D users is a reverse order of the time points at which the D users recently use the component. To be specific, a user who most recently uses the component is ranked first. In an implementation, an arrangement order of the D users is a positive order of the use frequencies at which the D users use the component. To be specific, a user with a highest use frequency is ranked first.

In some embodiments, a maximum of a preset quantity (for example, 3) of component labels are displayed in the component label display area. When a quantity of components exceeds the preset quantity, the user may view component labels of more components through a slide operation (for example, a leftward slide operation). Specifically, refer to related descriptions of FIG. 7E and FIG. 7F. Details are not described herein again.

For display content, a function, and the like of the component label in Manner 5, refer to related descriptions of Manner 1. Details are not described herein again.

In some embodiments, when fewer than two users use the component (that is, D is less than 2), component management is not performed in Manner 5.

Manner 6: Display a device identifier of a device that uses the component.

In some embodiments, H devices (for example, a mobile phone, a tablet computer, and a computer) of a user are collaboratively connected. The user may perform, on the terminal device 100 in a dimension of the devices, component management on the component used on the H devices. The terminal device 100 may be one of the H devices, where H is a positive integer. In an embodiment of this application, the H devices may establish a collaborative connection in a manner of logging in with a same account, connecting to a same local area network, or the like. This is not specifically limited herein.

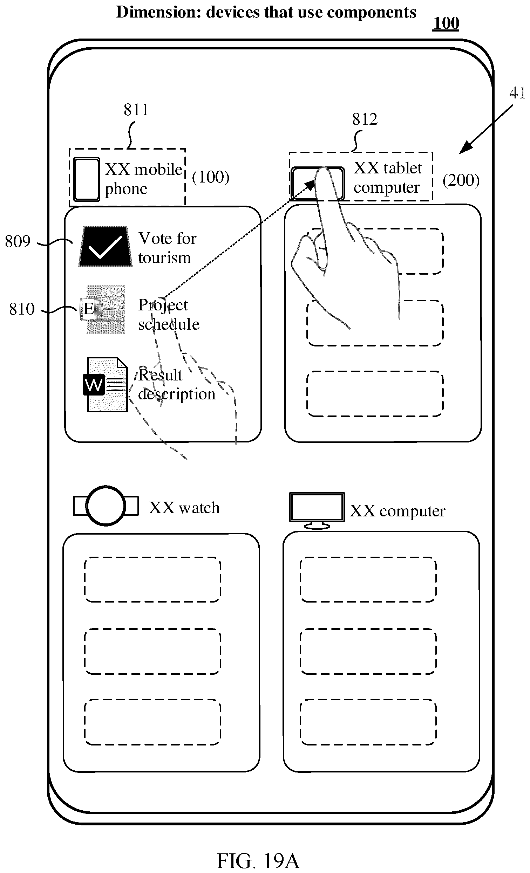

For example, FIG. 19A shows a component management interface 41 in the dimension of the devices that use the component. The component management interface 41 includes device identifiers (for example, device icons and/or device names) of the H devices, for example, a device identifier 811 of an XX mobile phone. A component label of a component used by each device is displayed in a component label display area corresponding to a device identifier of the device. For example, a component label display area of the XX mobile phone includes a component label 809 of a vote component 308 and a component label 810 of an Excel component 403. It should be noted that, in FIG. 19A, when only device identifiers of some of the H devices can be displayed, the user may view more device identifiers through a slide operation (for example, a downward slide operation).

In some embodiments, an arrangement order of the H devices may be determined based on time points at which the H devices recently use the components and/or use frequencies at which the H devices use components.

In some embodiments, a maximum of a preset quantity (for example, 3) of component labels are displayed in the component label display area. When a quantity of components exceeds the preset quantity, the user may view component labels of more components through a slide operation (for example, a leftward slide operation). Specifically, refer to related descriptions of FIG. 7E and FIG. 7F. Details are not described herein again.

For display content, a function, and the like of the component label in Manner 6, refer to related descriptions of Manner 1. Details are not described herein again.

In some embodiments, when fewer than two collaboratively connected devices use components (that is, H is less than 2), component management is not performed in Manner 6.

In some embodiments, after the plurality of devices establish the collaborative connection, the user may use a component 1 via this device, or may use a component 1 via another collaboratively connected device. In an implementation, the user may choose, on this device, to transfer the component 1 to a specified device in the plurality of devices for opening.

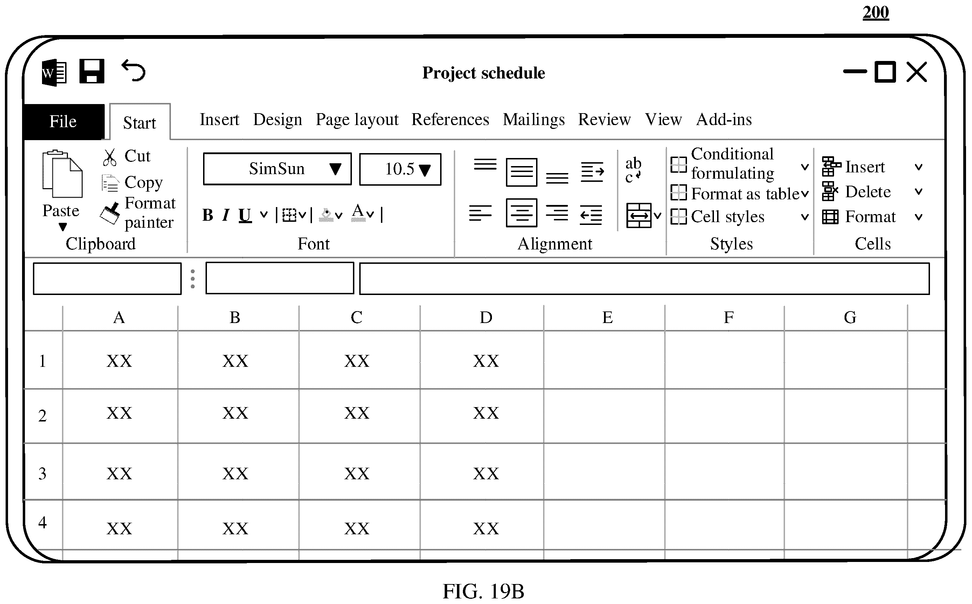

In some embodiments, a component label of the component 1 used by a device 1 is dragged to a device identifier of a device 2, to implement a component transfer function. For example, as shown in FIG. 19A and FIG. 19B, the terminal device 100 is the XX mobile phone, and the Excel component 403 is used to display an Excel table "Project schedule". A slide operation from the component label 810 of the Excel component 403 to a device identifier 812 of an XX tablet computer is detected. In response to the slide operation, the terminal device 100 sends related data of the Excel component 403 to the XX tablet computer, and the XX tablet commuter displays the Excel table based on the related data.

Specifically, in an implementation, in response to the slide operation, the terminal device 100 invokes an Excel application to display the Excel table, and sends projection data of the Excel application to the XX tablet computer through a projection channel. The XX tablet computer displays the Excel table based on the projection data. In another implementation, in response to the slide operation, the terminal device 100 sends, to the XX tablet computer, table data of the Excel table displayed in the Excel component 403. The XX tablet computer invokes an Excel application to display the Excel table based on the table data.

In an implementation, if an application 2 (for example, an Excel application) that provides the component 1 (for example, an Excel component 403) is installed on a device 2 (for example, the XX tablet computer), display content (for example, table data) of the component 1 is sent to the device 2, and the device 2 invokes the application 2 to display the display content. If an application 2 is not installed on a device 2, projection data of the application 2 is sent to the device 2, and the device 2 displays display content based on the projection data.

Manner 7: Display an event identifier of an event corresponding to the component.

In some embodiments, a component 1 is classified as a component of a specified event based on a keyword of the component 1 or an event label of the component 1. The event label may be manually labeled or automatically labeled. In Manner 7, component management is performed, in a dimension of the event corresponding to the component, on the component that is on the terminal device 100 and on which component locating can be currently performed.

Manner 8: Display an identifier of a widget in which the component is located.

In some embodiments, a plurality of widgets may be established. Based on a preset theme corresponding to one widget, a plurality of components may be added to the widget. In Manner 8, component management is performed, in a dimension of the widget corresponding to the component, on the component that is on the terminal device 100 and on which component locating can be currently performed.

The foregoing eight display manners (or display dimensions) are merely examples. In some embodiments, the terminal device 100 fixedly performs component management in one or more of the display manners, or performs component management by selecting one or more of the display manners based on a plurality of factors. This is not limited in this application.

In some embodiments, the plurality of preset display manners may be switched.

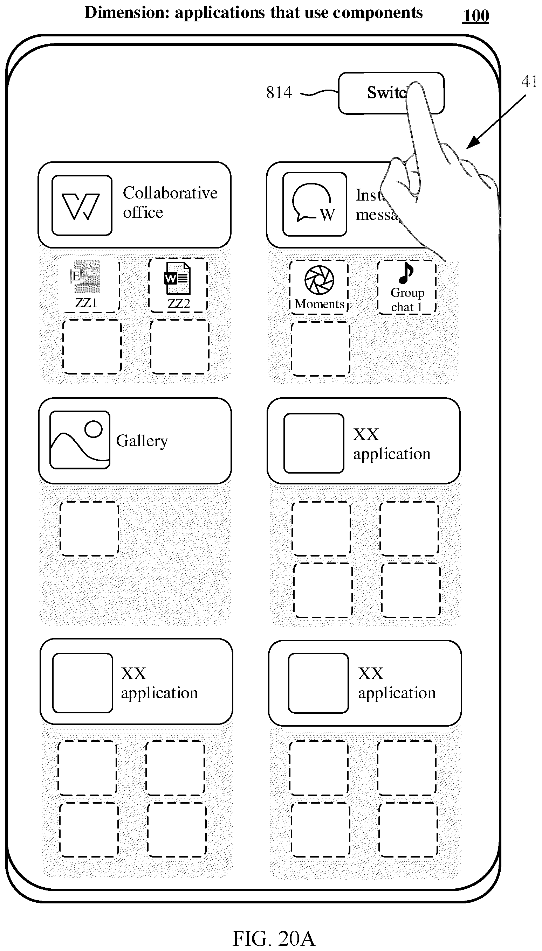

In an implementation, the display manner is switched via a switch control. For example, as shown in FIG. 20A, a current display manner of a component management interface 41 is Manner 1. To be specific, the application identifier of the application that uses the component is displayed in the dimension of the application that uses the component. The component management interface 41 further includes a switch control 814.

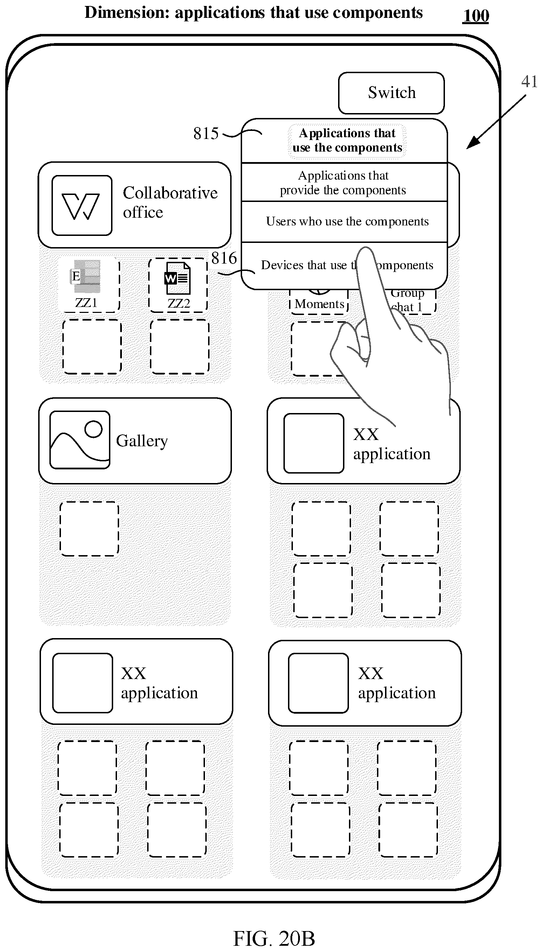

As shown in FIG. 20A and FIG. 20B, the switch control 814 may receive an input operation (for example, a touch operation) of the user. A switch box is displayed in response to the input operation. The switch box includes options of the plurality of display manners, for example, an option 815 of Manner 1 (namely, being in the dimension of the application that uses the component) and an option 816 of Manner 6 (namely, being in the dimension of the devices that provide the components).

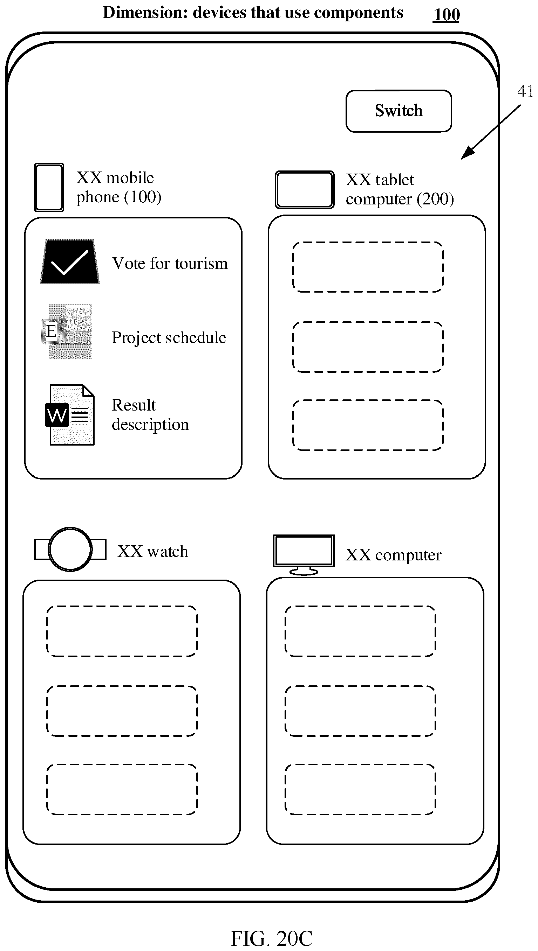

As shown in FIG. 20B and FIG. 20C, in response to an input operation on the option 816, the display manner is switched to the option 816. To be specific, component management is performed in the dimension of the devices that use the component.

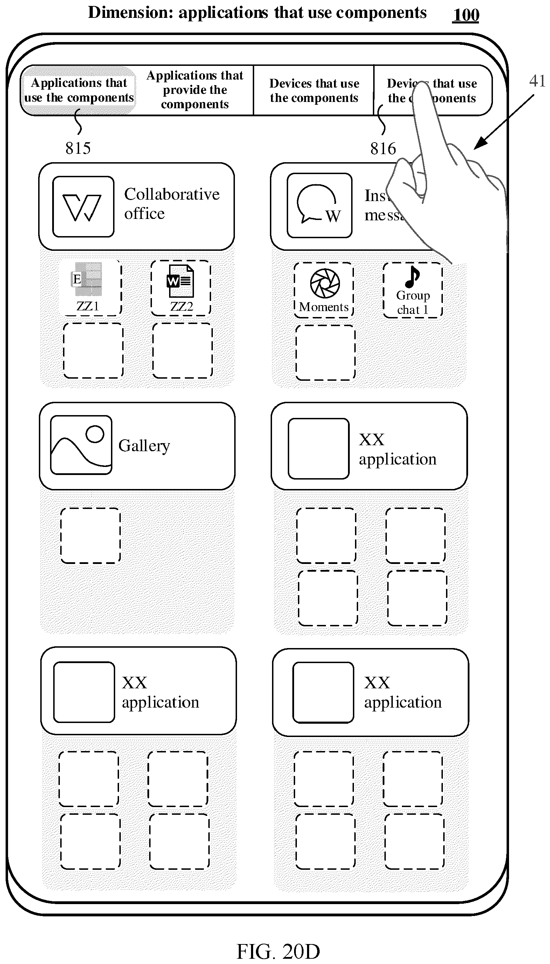

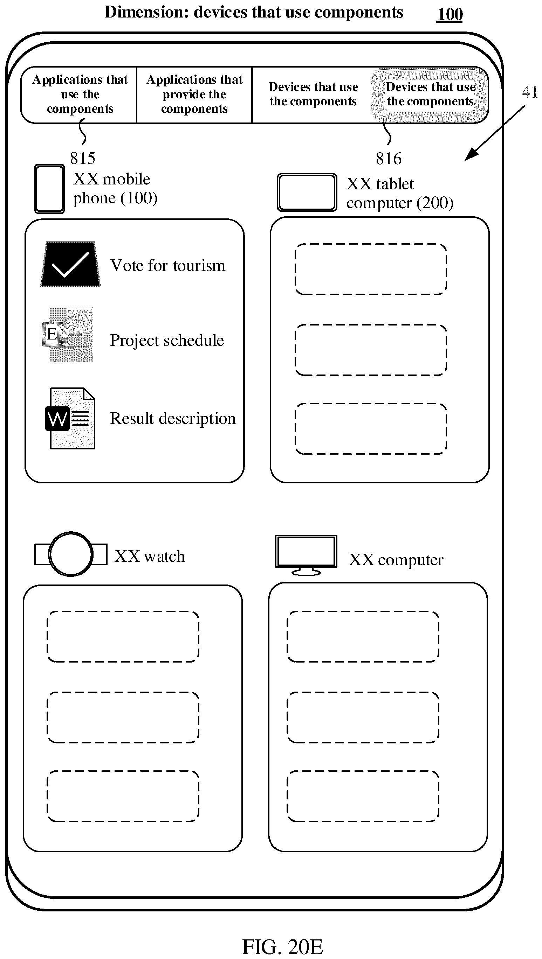

In an implementation, the display manner is directly switched by using an option of each display manner. As shown in FIG. 20D, the component management interface may directly include options, for example, an option 815 and an option 816, of the plurality of display manners. The option 815 is in a selected state, and the option 816 is in an unselected state. As shown in FIG. 20D and FIG. 20E, in response to an input operation on the option 816, a status of the option 815 is switched to the unselected state, and a status of the option 816 is switched to the selected state. To be specific, component management is performed in the dimension of the devices that use the component.

It may be understood that the component is displayed to the user in the plurality of display manners (or display dimensions), to meet different component display and component search requirements of the user, so as to improve convenience of use of the component.

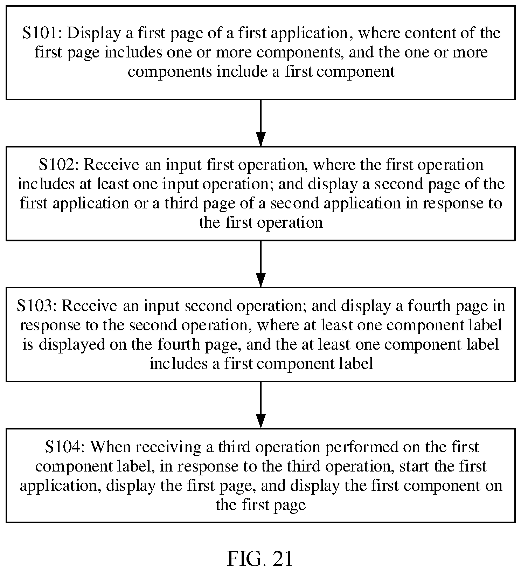

An embodiment of this application provides an interface display method, applied to a terminal device 100 including a touch display. FIG. 21 is a schematic flowchart of the interface display method.

S101: Display a first page of a first application, where content of the first page includes one or more components, and the one or more components include a first component.

In an embodiment of this application, the first component may be the foregoing component 1.

Optionally, the first component may be a component inserted in a specific page. Optionally, the first component may alternatively be a page, namely, the first page, corresponding to an application window of the first application. Optionally, the first component may be provided by the first application (for example, the foregoing application 1), or may be provided by another application (for example, the foregoing application 2).

For example, refer to related descriptions of FIG. 3A to FIG. 3D. The first page of the first application may be the moments page 14 of the instant messaging application, and the first component may be the moments page. For example, refer to related descriptions of FIG. 4A to FIG. 4G. The first page of the first application may be the chat page 15 of the instant messaging application, and the first component may be the vote component 308 inserted in the chat page 15. For example, refer to related descriptions of FIG. 5A to FIG. 5F. The first page of the first application may be the chat page 15 of the instant messaging application, and the first component may be the music player component 310 inserted in the chat page 15.

For example, refer to related descriptions of FIG. 6A to FIG. 6C. The first page of the first application may be the ZZ1 page of the collaborative office application, and the first component may be the Excel component 403 inserted in the ZZ1 page. For example, refer to related descriptions of FIG. 6C and FIG. 6D. The first page of the first application may be the ZZ2 page of the collaborative office application, and the first component may be the Word component 407 inserted in the ZZ1 page.

S102: Receive an input first operation, where the first operation includes at least one input operation; and display a second page of the first application or a third page of a second application in response to the first operation.

The first operation is used to switch the first page of the first application to another page, namely, the second page of the first application or the third page of the second application.

For example, refer to related descriptions of FIG. 4A to FIG. 4G. The first page of the first application may be the chat page 15 of the instant messaging application. When the first operation is used to return to a previous page, in response to the first operation, the chat page 15 may be switched to the home page 12 of the instant messaging application. When the first operation is used to return to the home screen, in response to the first operation, the chat page 15 may be switched to the home screen 11 displaying the desktop application.

S 103: Receive an input second operation; and display a fourth page in response to the second operation, where at least one component label is displayed on the fourth page, and the at least one component label includes a first component label.

In an embodiment of this application, the fourth page may be the foregoing component management interface. The component management interface may be a recent tasks screen, a leftmost screen, or a notification bar interface, or may be another page. This is not specifically limited herein.

For example, refer to related descriptions of FIG. 2A to FIG. 2C and FIG. 7A to FIG. 7J. The fourth page may be the recent tasks screen, and the second operation may be the touch operation performed on the multi-task button 201C. Refer to related descriptions of FIG. 7B to FIG. 7J. One or more component labels may be displayed on the recent tasks screen.

S 104: When receiving a third operation performed on the first component label, in response to the third operation, start the first application, display the first page, and display the first component on the first page.

In an embodiment of this application, the third operation may be the foregoing preset operation 1. Refer to related descriptions of FIG. 10A to FIG. 11H. After the application 1 invokes the component 1, the display location of the component in the application 1 may be quickly located through the preset operation 1 performed on the component label of the component 1 on the component management interface.

In an implementation, the displaying a first page of a first application, where content of the first page includes one or more components, and the one or more components include a first component includes: displaying a first part of the first page of the first application, where the first page further includes a second part; and when detecting an input sliding gesture, displaying the second part of the first page, where the second part includes the first component.

For example, the first page is a long page. The terminal device 100 can display only some content of the long page, and a user needs to perform an upward slide operation, a downward slide operation, leftward slide operation, or a rightward slide operation to view all the content of the page. For example, a ZZ1 page 18 shown in FIG. 10B, a moments page 14 shown in FIG. 11D, and chat pages 15 shown in FIG. 4G and FIG. 5D are all long pages. When the first application is switched to a background for running, a partial page that is displayed on the display and that is of the first page may be the first part that does not include the first component. After the first application is switched to the background for running, the first component on the first page can still be quickly located and displayed through the preset operation 1 performed on the first component label of the first component.

In an implementation, the method further includes: the first component is an insert-type component; and when receiving a fourth operation performed on the first component label, in response to the fourth operation, starting the first application, and displaying a first content page of the first component, where the third operation is different from the fourth operation.

In an implementation, the method further includes: the first component is an insert-type component; and when receiving a fourth operation performed on the first component label, in response to the fourth operation, starting a third application, and displaying a second content page of the first component, where the third operation is different from the fourth operation.

In an embodiment of this application, the fourth operation may be the foregoing preset operation 2, and the third application may be the foregoing application 2. Through the preset operation 2 performed on the component label of the component 1, a user interface, for example, the first content page, associated with display content of the component may be displayed in the application 1. Alternatively, through the preset operation 2 performed on the component label of the component 1, the application 2 that provides the component 1 may be invoked, and a user interface, for example, the second content page, associated with display content of the component may be displayed in the application 2.

For example, refer to related descriptions of FIG. 5A to FIG. 5F and FIG. 11E to FIG. 11H. The first page of the first application may be the chat page 15 of the instant messaging application. The first component may be the music player component 310 inserted in the chat page 15. The first component label may be the component label 612 of the music player component 310. Through the preset operation 1 performed on the component label 612, the terminal device 100 may display the music player component 310 on the chat page 15 of the instant messaging application. The first content page may be the foregoing simple play interface 16. Through the preset operation 2 performed on the component label 612, the terminal device 100 may display, in the instant messaging application, the simple play interface 16 of a song played by the music player component 310. The second content page may be the foregoing original play interface 17. Through the preset operation 2 performed on the component label 612, the terminal device 100 may invoke a music application, and display, in the music application, the original play interface 17 of a song played by the music player component 310.

For example, refer to related descriptions of FIG. 10A to FIG. 10I. The first page of the first application may be the ZZ1 page of the collaborative office application. The first component may be the Excel component 403 inserted in the ZZ1 page. The first component label may be the component label 601 of the Excel component 403. Through the preset operation 1 performed on the component label 601, the terminal device 100 may display the Excel component 403 on the ZZ1 page of the collaborative office application. The second content page may be the user interface 19 of the foregoing Excel application. Through the preset operation 2 performed on the component label 601, the terminal device 100 invokes the Excel application, and displays the user interface 19 in the Excel application. The user interface 19 is used to display "Project schedule" of the Excel component 403.

For example, refer to related descriptions of FIG. 11A to FIG. 11D. The first page of the first application may be the moments page 14 of the instant messaging application. The first component may be the moments page. The first component label may be the component label 611 of the moments page 14. Through the preset operation 1 performed on the component label 611, the terminal device 100 may display the moments page 14 in the instant messaging application.

In an implementation, the first component displayed on the first page provides a first function related to display content of the first component. The first content page or the second content page provides the first function and a second function that are related to the display content of the first component. The first component cannot provide the second function. It may be understood that the first component can provide only some functions (for example, the first function) related to the display content of the first component. If the user needs to experience more functions (for example, the second function) related to the display content of the first component, the user may invoke the first content page or the second content page through the fourth operation. The first content page or the second content page may be understood as a details page of the display content of the first component, and can provide richer functions.

In an implementation, before the displaying a fourth page in response to the second operation, the method further includes: displaying a fifth page, where the fifth page includes an application identifier corresponding to the first application, and the fifth page further includes at least one extend control; receiving a fifth operation performed on the extend control; and displaying the fourth page in response to the fifth operation, where the application identifier may be an application identifier of an application that invokes a component.

For example, refer to related descriptions of FIG. 7A to FIG. 7I. The fifth page may be the recent tasks screen 21 shown in FIG. 7A. The recent tasks screen 21 includes the extend controls, for example, the extend control 501 corresponding to the application identifier 204 of the collaborative office application, corresponding to the application identifiers of the applications that invoke components. The fourth page may be the recent tasks screen 21 shown in FIG. 7B to FIG. 7D. The fifth operation may be the touch operation performed on the extend control 501. In response to the foregoing input operation, the terminal device 100 displays, in the component label display area 503 of the collaborative office application, the component labels, for example, the component label 601 to the component label 604, of the components that are the collaborative office application and on which component locating can be performed.

In an implementation, the first component includes a component invoked by the first application, a component invoked by the first application during latest running of the first application, a component invoked by the first application within first preset duration, or a preset quantity of components with highest usage in components invoked by the first application within the second preset duration.

In an implementation, the at least one component label includes at least two component labels. An arrangement order of the two component labels is determined based on latest use time points and/or use frequencies of components indicated by the component labels.

In an implementation, the third operation is a tap operation performed on the first component label. The fourth operation is a slide operation of touching and holding the first component label and then dragging the first component label to a third control. In an implementation, an application identifier of the third application and/or third prompt information are/is displayed on the third control. The third prompt information is used to prompt to drag the first component label to the third control to trigger the third application to display related content of the first component. In an implementation, the third control is displayed after a touch and hold operation performed on the first component label is detected.

For example, refer to related descriptions of FIG. 11E and FIG. 11F. For example, the first component label is the component label 612. The third control may be the preset area 641, and the third application may be the music application. The fourth operation may include a slide operation of touching and holding the component label 601 and dragging the component label 601 to the preset area 641. Optionally, the preset area 641 may be displayed after the component label 601 is touched and held. Optionally, the application identifier of the music application and/or the third prompt information (for example, a text "Drag here to open the component by using the following application") are/is displayed in the preset area 641.

In an implementation, the fourth page includes a fourth control and a fifth control. The third operation includes a slide operation from the first component label to the fourth control. The fourth operation includes a slide operation from the first component label to the fifth control.

In an implementation, the third operation includes a slide operation of touching and holding the first component label and then dragging the first component label to the fourth control. The fourth operation includes a slide operation of touching and holding the first component label and then dragging the first component label to the fifth control.

In an implementation, the fourth control and the fifth control are displayed after a touch and hold operation performed on the first component label is detected.

In an implementation, the application identifier of the first application and/or first prompt information are/is displayed on the fourth control. An application identifier of the third application and/or second prompt information are/is displayed on the fifth control. The first prompt information is used to prompt to perform component locating in an application that invokes the first component. The second prompt information is used to prompt to open the component by using an application that provides the first component. It may be understood that the third application that provides the first component opens the first component, and may display the second content page.

For example, refer to related descriptions of FIG. 10E and FIG. 10F. For example, the first component label is the component label 601. The fourth control may be the application identifier 621 of the collaborative office application. The fifth control may be the application identifier 622 of the Excel application. Optionally, the third operation includes the slide operation from the component label 601 to the application identifier 621. The fourth operation may include the slide operation from the component label 601 to the application identifier 621. Optionally, the third operation includes a slide operation of touching and holding the component label 601 and then dragging the component label 601 to the application identifier 621. The fourth operation may include a slide operation of touching and holding the component label 601 and then dragging the component label 601 to the application identifier 621. Optionally, the application identifier 621 of the collaborative office application and the application identifier 622 of the Excel application may be displayed after the component label 601 is touched and held.

For example, refer to related descriptions of FIG. 10H and FIG. 10I. For example, the first component label is the component label 601. The fourth control may be the locate page control 631. The first prompt information (for example, a text "Locate page") is displayed on the fourth control. The fifth control may be the locate source control 632. The second prompt information (for example, a text "Locate source") may be displayed on the fifth control. Optionally, the third operation includes the slide operation from the component label 601 to the locate page control 631. The fourth operation may include the slide operation from the component label 601 to the locate source control 632. Optionally, the third operation includes a slide operation of touching and holding the component label 601 and then dragging the component label 601 to the locate page control 631. The fourth operation may include a slide operation of touching and holding the component label 601 and then dragging the component label 601 to the locate source control 632. Optionally, the locate page control 631 and the locate source control 632 may be displayed after the component label 601 is touched and held.

In an implementation, the third operation or the fourth operation is one of the following operations: a tap operation performed on the first component label, a touch and hold operation performed on the first component label, a rightward slide operation performed on the first component label, a leftward slide operation performed on the first component label, an upward slide operation performed on the first component label, and a downward slide operation performed on the first component label, where the third operation is different from the fourth operation.

For example, refer to related descriptions of FIG. 10A and FIG. 10B. The third operation may be the leftward slide operation performed on the component label. The fourth operation may be the rightward slide operation performed on the component label.

In an implementation, the method further includes: when receiving a sixth operation performed on the first component label, in response to the sixth operation, displaying one or more of the following on the fourth page: a user identifier of at least one contact in the first application, an application identifier of a fourth application, and a page identifier of a specified page of the fourth application, where the user identifier of the at least one contact includes a user identifier of a first contact, and the user identifier of the first contact is used to share the first component with the first contact in the first application; the application identifier of the fourth application is used to share the first component with a contact in the fourth application; and the page identifier of the specified page of the fourth application is used to share the first component with the specified page of the fourth application.

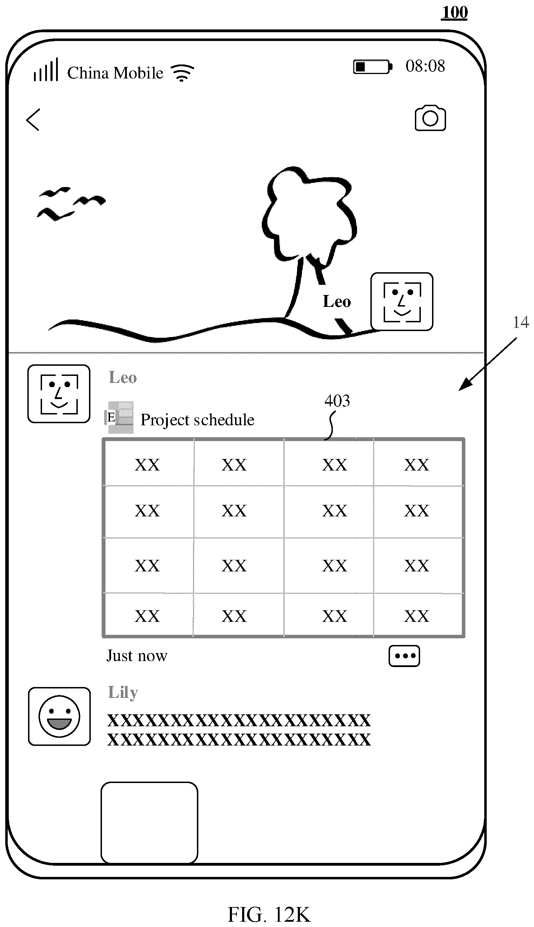

For example, refer to related descriptions of FIG. 12E to FIG. 12K. For example, the first component label is the component label 601 of the Excel component 403. The sixth operation may be the downward slide operation performed on the component label 601. The first application is the collaborative office application. The user identifier of the first contact may be the user identifier 651. The application identifier of the fourth application may be the application identifier 652 of the instant messaging application. The page identifier of the specified page of the fourth application may be the page identifier 653 of the moments page 14 of the instant messaging application. Refer to related descriptions of FIG. 12E and FIG. 12F. The Excel component 403 may be shared with the contact of this application by using the user identifier 651. Refer to related descriptions of FIG. 12G to FIG. 12I. The Excel component 403 may be shared with the contact of the instant messaging application by using the application identifier 652. Refer to related descriptions of FIG. 12J and FIG. 12K. The Excel component 403 may be shared with the moments page 14 by using the page identifier 653.

In an implementation, the method further includes: when receiving a seventh operation performed on the first component label, where the seventh operation is used to preview the first component on the first page, in response to the seventh operation, displaying a component snapshot of the first component on the fourth page in an original size or a scaled-up size of the first component.

For example, refer to related descriptions of FIG. 12A and FIG. 12B. For example, the first component label is the component label 601 of the Excel component 403. The seventh operation may be the double-tap operation performed on the component label 601. By double tapping the component label 601, the user may preview display content of the Excel component 403.

In an implementation, the method further includes: when receiving an eighth operation performed on the first component label, in response to the eighth operation, stopping displaying the first component label, and advancing a component label after the first component label by one location for display.

For example, refer to related descriptions of FIG. 12C and FIG. 12D. For example, the first component label is the component label 611 of the moments page 14. The seventh operation may be the upward slide operation performed on the component label 611. In response to the upward slide operation, the terminal device 100 may stop displaying the component label 611, advance, by the location, the component label of the component arranged after the moments page 14, and may further remove the moments page from the component management trustlist.

In an implementation, a component indicated by the component label displayed on the fourth page is a component in the component management trustlist. The component management trustlist is set by one or more of a terminal device, the first application, and the user.

For example, FIG. 13A to FIG. 13D are the diagrams of the related user interfaces of setting and managing the component management trustlist via the system. Details are not described herein again.

In an implementation, the first component label includes a component identifier of the first component. The first component label further includes zero, one, or more of the following: a page identifier of a page on which the first component is located, an application identifier of an application that provides the first component, and a working area identifier of a working area in which the first component is located. The component identifier includes one or more of the following: a component icon, a component name, and a component snapshot. The page identifier includes a page icon and/or a page name. The application identifier in the component label includes an application icon and/or an application name. The working area identifier includes a working area icon and/or a working area name.

In an implementation, the first component label includes: a component icon or a component snapshot of the first component, and a page name of the first page; a component icon or a component snapshot of the first component, and a working area name of a working area in which the first page is located; a component icon or a component snapshot of the first component, and a component name of the first component; a page icon of the first page and a component name of the first component; or an application icon of an application that provides the first component and a component name of the first component.

For example, for the component label, refer to related descriptions of FIG. 8(a) to FIG. 9(d). Details are not described herein again.

In an implementation, the at least one component label further includes a second component label. The second component label is associated with the first component invoked on a tenth page of the first application. The first component label is different from the second component label. The first component label includes a page identifier of the first page. The second component label includes a page identifier of the tenth page.

For example, refer to related descriptions of FIG. 8(b) and FIG. 8(d). A same component, namely, the Excel component 403, is invoked on the ZZ1 page and the ZZ3 page. The component label 601 of the Excel component 403 on the page ZZ1 is different from the component label 603 of the Excel component 403 on the page ZZ3. The component label 601 of the Excel component 403 on the ZZ1 page includes a page identifier (for example, the page name "ZZ1") of the ZZ1 page. The component label 603 of the Excel component 403 on the ZZ3 page includes a page identifier (for example, the page name "ZZ3") of the ZZ3 page.

In embodiments of this application, component labels on the fourth page can be displayed in a plurality of manners, for example, displayed by category based on a classification manner (or display dimension) like the application that invokes the component, an application that provides the component, the device that invokes the component, a user that uses the component, a page on which the component is located, or the widget to which the component is added. Through such display by category, the component labels are displayed more clearly. This helps the user quickly locate a component label that the user wants to operate, and enriches the display manners of the component labels.

In an implementation, the fourth page includes at least one application identifier. The at least one application identifier includes a first application identifier. At least one component label associated with a component invoked by an application indicated by the first application identifier is displayed in a component label display area corresponding to the first application identifier on the fourth page.

For example, refer to related descriptions of FIG. 7A to FIG. 7J and FIG. 14A and FIG. 14B. The application indicated by the first application identifier may be the collaborative office application. The terminal device may display, in the component label display area 503 corresponding to the application identifier of the collaborative office application on the component management interface 41 (namely, the fourth page), a component label associated with a component invoked by the application.

In an implementation, the fourth page includes at least two application identifiers corresponding to applications that invoke components. On the fourth page, component labels associated with the components invoked by the applications indicated by the at least two application identifiers may be respectively displayed simultaneously in component label display areas corresponding to the application identifiers. For example, refer to related descriptions of FIG. 14B. The terminal device may simultaneously display, on the component management interface 41, component labels associated with components invoked by applications.

In an implementation, the fourth page includes at least one application identifier. The at least one application identifier includes a second application identifier. At least one component label associated with a component provided by an application indicated by the second application identifier is displayed in a component label display area corresponding to the second application identifier on the fourth page.

For example, refer to related descriptions of FIG. 17A to FIG. 17C. The application indicated by the second application identifier may be the collaborative office application. The terminal device may display, in the component label display area corresponding to the application identifier of the collaborative office application on the component management interface 41, the component label associated with the component provided by the application.

In an implementation, the fourth page includes at least one device identifier. The at least one device identifier includes a first device identifier. At least one component label associated with a component invoked by a device indicated by the first device identifier is displayed in a component label display area corresponding to the first device identifier on the fourth page.

For example, refer to related descriptions of FIG. 19A. The device indicated by the first device identifier may be the terminal device 100. The terminal device 100 may display, in the component label display area corresponding to the device identifier of the terminal device 100 on the component management interface 41, a component label associated with a component invoked by the device.

In an implementation, the fourth page includes at least one user identifier. The at least one user identifier includes a first user identifier. At least one component label associated with a component used by a user indicated by the first user identifier is displayed in a component label display area corresponding to the first user identifier on the fourth page.

For example, refer to related descriptions of FIG. 18. The user indicated by the first user identifier may be the user "Leo". The terminal device 100 may display, in the component label display area corresponding to the user identifier of the user "Leo" on the component management interface 41, a component label associated with a component used by the user.

In an implementation, the fourth page includes at least one page identifier. The at least one page identifier includes a first page identifier. At least one component label associated with a component invoked on a page indicated by the first page identifier is displayed in a component label display area corresponding to the first page identifier on the fourth page.

In an implementation, the fourth page includes at least one widget identifier. The at least one widget identifier includes a first widget identifier. At least one component label associated with a component added to a widget indicated by the first widget identifier is displayed in a component label display area corresponding to the first widget identifier on the fourth page.

In embodiments of this application, on the fourth page, the terminal device can display the component label of the component to the user in a plurality of display manners. The user can further switch the display manner of the component label based on a requirement of the user.

In an implementation, the fourth page further includes a first control and a second control. The method further includes: displaying a sixth page when receiving a touch input performed on the first control, where the sixth page includes at least one user identifier and the first component label; and when receiving the third operation performed on the first component label on the sixth page, in response to the third operation, displaying the first page, and displaying the first component on the first page, where the user identifier may be a user identifier of a user who uses a component; or displaying a seventh page when receiving a touch input performed on the second control, where the seventh page includes at least one device identifier and the first component label; and when receiving the third operation performed on the first component label on the seventh page, in response to the third operation, displaying the first page, and displaying the first component on the first page, where the device identifier may be a user identifier of a device that invokes a component.

In an implementation, the fourth page includes an application identifier of an application that invokes a component. The fourth page further includes a sixth control and/or a seventh control. The method further includes: displaying an eighth page when receiving a touch input performed on the sixth control, where the eighth page includes an application identifier of at least one application that provides the component and the first component label; and when receiving the third operation performed on the first component label on the eighth page, in response to the third operation, displaying the first page, and displaying the first component on the first page; or displaying a ninth page when receiving a touch input performed on the seventh control, where the ninth page includes a widget identifier of at least one widget to which the component is added and the first component label; and when receiving the third operation performed on the first component label on the ninth page, in response to the third operation, displaying the first page, and displaying the first component on the first page.

For example, refer to related descriptions of FIG. 20A to FIG. 20E. The current display manner of the component management interface 41 is display by category based on the application that invokes the component. The second control may be the option 816 on the component management interface 41. In response to the input operation on the option 816, the terminal device 100 switches the status of the option 816 to the selected state, that is, perform display by category based on the device that uses the component.

The implementations of this application may be randomly combined, to achieve different technical effect.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is executed, the procedures in the method embodiments may be included. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, and the like made according to the disclosure of the present invention shall fall within the protection scope of the present invention.

## Claims

1. An interface display method, applied to an electronic device comprising a touch display, wherein the method comprises:
displaying a first page of a first application, wherein content of the first page comprises one or more components, and the one or more components comprise a first component;
receiving an input first operation, wherein the first operation comprises at least one input operation;
displaying a second page of the first application or a third page of a second application in response to the first operation;
receiving an input second operation;
displaying a fourth page in response to the second operation, wherein at least one component label is displayed on the fourth page, and the at least one component label comprises a first component label; and
when receiving a third operation performed on the first component label,
in response to the third operation, starting the first application, displaying the first page, and displaying the first component on the first page.

2. The method according to claim 1, wherein the displaying a first page of a first application, wherein content of the first page comprises one or more components, and the one or more components comprise a first component comprises:
displaying a first part of the first page of the first application, wherein the first page further comprises a second part; and
when detecting an input sliding gesture, displaying the second part of the first page, wherein the second part comprises the first component.

3. The method according to claim 1 or 2, wherein the method further comprises:
the first component is an insert-type component; and
when receiving a fourth operation performed on the first component label,
in response to the fourth operation, starting the first application, and displaying a first content page of the first component, wherein the third operation is different from the fourth operation.

4. The method according to claim 1 or 2, wherein the method further comprises:
the first component is an insert-type component; and
when receiving a fourth operation performed on the first component label,
in response to the fourth operation, starting a third application, and displaying a second content page of the first component, wherein the third operation is different from the fourth operation.

5. The method according to claim 1, wherein before the displaying a fourth page in response to the second operation, the method further comprises:
displaying a fifth page, wherein the fifth page comprises an application identifier corresponding to the first application, wherein
the fifth page further comprises at least one extend control;
receiving a fifth operation performed on the extend control; and
displaying the fourth page in response to the fifth operation.

6. The method according to claim 1, wherein the fourth page further comprises a first control and a second control, and the method further comprises:
displaying a sixth page when receiving a touch input performed on the first control, wherein the sixth page comprises at least one user identifier and the first component label; and
when receiving the third operation performed on the first component label on the sixth page,
in response to the third operation, displaying the first page, and displaying the first component on the first page; or
displaying a seventh page when receiving a touch input performed on the second control, wherein the seventh page comprises at least one device identifier and the first component label; and
when receiving the third operation performed on the first component label on the seventh page,
in response to the third operation, displaying the first page, and displaying the first component on the first page.

7. The method according to any one of claims 1 to 6, wherein the fourth page is a recent tasks screen, and display content of the fourth page comprises an interface snapshot of the first application.

8. The method according to claim 7, wherein the first component comprises:
a component invoked by the first application;
a component invoked by the first application during latest running of the first application;
a component invoked by the first application within first preset duration; or
a preset quantity of components with highest usage in components invoked by the first application within second preset duration.

9. The method according to claim 1, wherein the at least one component label comprises at least two component labels, and an arrangement order of the two component labels is determined based on latest use time points and/or use frequencies of components indicated by the component labels.

10. The method according to any one of claims 3 to 6, wherein the third operation is a tap operation performed on the first component label; and
the fourth operation is a slide operation of touching and holding the first component label and then dragging the first component label to a third control.

11. The method according to claim 10, wherein the third control is displayed after a touch and hold operation performed on the first component label is detected.

12. The method according to any one of claims 3 to 6, wherein the fourth page further comprises a fourth control and a fifth control;
the third operation comprises a slide operation from the first component label to the fourth control; and
the fourth operation comprises a slide operation from the first component label to the fifth control.

13. The method according to claim 12, wherein
the third operation comprises a slide operation of touching and holding the first component label and then dragging the first component label to the fourth control; and
the fourth operation comprises a slide operation of touching and holding the first component label and then dragging the first component label to the fifth control.

14. The method according to claim 12, wherein the fourth control and the fifth control are displayed after a touch and hold operation performed on the first component label is detected.

15. The method according to any one of claims 12 to 14, wherein the application identifier of the first application and/or first prompt information are/is displayed on the fourth control, and an application identifier of the third application and/or second prompt information are/is displayed on the fifth control; and the first prompt information is used to prompt to perform component locating in an application that invokes the first component, and the second prompt information is used to prompt to open the component by using an application that provides the first component.

16. The method according to any one of claims 3 to 6, wherein the third operation or the fourth operation is one of the following operations:
a tap operation performed on the first component label;
a touch and hold operation performed on the first component label;
a rightward slide operation performed on the first component label;
a leftward slide operation performed on the first component label;
an upward slide operation performed on the first component label; and
a downward slide operation performed on the first component label, wherein
the third operation is different from the fourth operation.

17. The method according to any one of claims 1 to 7, wherein the method further comprises:
when receiving a sixth operation performed on the first component label,
in response to the sixth operation, displaying one or more of the following on the fourth page: a user identifier of at least one contact in the first application, an application identifier of a fourth application, and a page identifier of a specified page of the fourth application, wherein
the user identifier of the at least one contact comprises a user identifier of a first contact, and the user identifier of the first contact is used to share the first component with the first contact in the first application;
the application identifier of the fourth application is used to share the first component with a contact in the fourth application; and
the page identifier of the specified page of the fourth application is used to share the first component with the specified page of the fourth application.

18. The method according to any one of claims 1 to 7, wherein the method further comprises:
when receiving a seventh operation performed on the first component label, wherein the seventh operation is used to preview the first component on the first page,
in response to the seventh operation, displaying a component snapshot of the first component on the fourth page in an original size or a scaled-up size of the first component.

19. The method according to any one of claims 1 to 7, wherein the method further comprises:
when receiving an eighth operation performed on the first component label,
in response to the eighth operation, stopping displaying the first component label, and advancing a component label after the first component label by one location for display.

20. The method according to any one of claims 1 to 7, wherein a component indicated by the component label displayed on the fourth page is a component in a component management trustlist, and the component management trustlist is set by one or more of a terminal device, the first application, and a user.

21. A terminal device, comprising a memory and a processor, wherein the memory and the processor are electrically coupled, the memory is configured to store program instructions, and the processor is configured to invoke all or a part of the program instructions stored in the memory, to enable the terminal device to perform the method according to any one of claims 1 to 20.

22. A computer storage medium, comprising computer instructions, wherein when the computer instructions are run on a terminal device, the terminal device is enabled to perform the method according to any one of claims 1 to 20.
